(19) Europäisches Patentamt
European Patent Office
Office européen des brevets

(11) Publication number: 0 349 648 A1

(12) EUROPEAN PATENT APPLICATION
published in accordance with Art. 158(3) EPC

(21) Application number: 88908745.8

(22) Date of filing: 06.10.88

(86) International application number: PCT/JP88/01019

(87) International publication number: WO 89/03405 (20.04.89 89/09)

(51) Int. Cl.4: C08G 65/28 , C08G 65/38 , C08L 71/00 , B29C 55/00 , B32B 27/00

(30) Priority: 06.10.87 JP 250766/87
06.10.87 JP 250767/87
06.10.87 JP 250768/87
20.07.88 JP 181412/88
20.07.88 JP 181413/88
20.07.88 JP 181414/88
20.07.88 JP 181415/88
20.07.88 JP 181416/88
20.07.88 JP 181417/88

(43) Date of publication of application: 10.01.90 Bulletin 90/02

(84) Designated Contracting States: AT BE CH DE FR GB IT LI LU NL SE

(71) Applicant: MITSUI PETROCHEMICAL INDUSTRIES, LTD.
2-5, Kasumigaseki 3-chome Chiyoda-ku
Tokyo 100(JP)

(72) Inventor: YATSU, Tadao
Mitsui Petrochemical Ind. Ltd. 1-2, Waki 6-chome
Waki-cho Kuga-gun Yamaguchi 740chi 740(JP)
Inventor: HASHIMOTO, Mikio
Mitsui Petrochemical Ind. Ltd. 1-2, Waki 6-chome
Waki-cho Kuga-gun Yamaguchi 740(JP)
Inventor: MIURA, Kimiyoshi
Mitsui Petrochemical Ind. Ltd. 1-2, Waki 6-chome
Waki-cho Kuga-gun Yamaguchi 740(JP)
Inventor: ISHIMARU, Etsuji
Mitsui Petrochemical Ind. Ltd. 1-2, Waki 6-chome
Waki-cho Kuga-gun Yamaguchi 740(JP)
Inventor: WAKUMOTO, Hiroshi
Mitsui Petrochemical Ind. Ltd. 1-2, Waki 6-chome
Waki-cho Kuga-gun Yamaguchi 740(JP)
Inventor: KUSAMA, Masanori
Mitsui Petrochemical Ind. Ltd. 1-2, Waki 6-chome
Waki-cho Kuga-gun Yamaguchi 740(JP)
Inventor: HINOOKA, Nobuya
Mitsui Petrochemical Ind. Ltd. 1-2, Waki 6-chome
Waki-cho Kuga-gun Yamaguchi 740(JP)
Inventor: KANESHIGE, Norio
Mitsui Petrochemical Ind. Ltd. 1-2, Waki 6-chome
Waki-cho Kuga-gun Yamaguchi 740(JP)

(74) Representative: Myerscough, Philip Boyd et al
J.A.Kemp & Co. 14, South Square Gray's Inn
London, WC1R 5EU(GB)

# (54) POLYHYDROXY POLYETHERS, PROCESS FOR THEIR PRODUCTION AND THEIR USES.

(57) The polyhydroxypolyether of the present invention is a polyhydroxypolyether having either hydrocarbon group consisting essentially of a p-phenylene group or a divalent aromatic hydrocarbon group consisting

EP 0 349 648 A1

essentially of a group other than a p-phenylene gruop, which is characterized in that it has an intrinsic viscosity of 0.1 dl/g to less than 0.3 dl/g and contains a nonionic halogen in an amount of not more than 0.2 % by weight, or end chapping characterized in that its molecule is terminated with a specific aromatic group. The present invention further provides processes for preparing the polyhydroxypolyether and uses thereof utilizing the high gas barrier properties and the high transparency.

# POLYHYDROXYLPOLYETHERS, PROCESSES FOR PREPARING THE SAME AND USES THEREOF

## FIELD OF THE INVENTION

This invention relates to polyhydroxypolyethers excellent in melt-moldability, stretchability, mechanical strength, transparency and gas-barrier properties and capable of being used as materials for containers and the like, to processes for preparing the same and to uses thereof.

## BACKGROUND OF THE INVENTION

Heretofore, glass has been widely used as a material for forming containers for liquors such as beer and sake, cooling beverages such as a carbonated drink and the like, seasonings, edible oils, cosmetics detergents, etc. Glass containers have such advantages that they are excellent in transparency, moldability and gas barrier properties, but have such a problem as high cost of production. Usually, empty glass containers after used are recovered and circulated for re-use, attempting to reduce the high cost of production. In that case, however, no sufficient reduction of the cost can be attained, because the empty glass containers are still heavy and transportation thereof costs high. Further, there are such problems that glass containers are easy to break during transportation thereof and difficult to handle.

Under such circumstances, plastic containers have gradually come to be used in substitution for glass containers having such problems as mentioned above.

Basically, plastic materials used for the manufacture of such plastic containers as referred to above should be on a high level of characteristics required for manufacturing the same, such as melt moldability and stretchability and, at the same time, the containers obtained therefrom should also be on a high level of characteristics such as mechanical strength and transparency thereof.

Polyethylene terephthalate has such characteristics as mentioned above and is a material basically suitable for use in the manufacture of plastic containers as it is excellent in transparency, mechanical strength and the like, and at the same time, has good moldability.

Incidentally, in the case of containers for seasonings, detergents or cosmetics, properties of the containers such as mechanical strength and transparency often become a matter of great concern, while gas barrier properties are regarded as a matter of little concern. Accordingly, it can be said that the above-mentioned containers manufactured by the use of polyethylene terephthalate have generally good characteristics required therefor.

However, containers for sparkling beverages, for example, carbonated beverages and beer, the contents of which are to be charged with high pressure carbonic acid gas, are required to have very high gas barrier properties in order to prevent the charged gas from leaking. It is hard to say therefore that polyethylene terphthalate is sufficiently fit for use in the manufacture of containers for which such strict gas barrier properties are required, even though said polyethylene terephthalate is relatively high in gas barrier properties among other plastic materials. In this light, it is disadvantageous from the standpoint of cost of production to use polyethylene terephthalate for purposes for which such high gas barrier properties as mentioned above are required, because the containers manufactured thereby have to be increased in their wall thickness so that the containers withstand high pressure gases charged therein.

In view of a strong and growing demand for polyester resin containers, it is necessary to impart high gas properties to polyethylene terephthalate being now used without a sacrifice of its excellent characteristics in order that the polyester resin containers are also used for purposes for which such very high gas barrier properties as mentioned above are required.

Under such circumstances, many attempts have been made to propose various improvements on polyethylene terephthalate. For instance, Japanese Patent L-O-P Publn. No. 64624/1984 discloses molded articles prepared from polyalkylene isophthalate such as polyethylene isophthalate and copolymers thereof and polymers or copolymers thereof. Japanese Patent L-O-P Publn. No. 64049/1984 discloses a multilayer packaging materials composed of a layer of polyalkylene isophthalate mentioned above or copolymers thereof and a layer of such polyalkylene terephthalate as polyethylene terephthalate or copolymers thereof, and molded articles prepared therefrom. Japanese Patent L-O-P. No 3957/1984 discloses multilayer containers having excellent gas barrier properties, which are composed of the innermost layer of polyester having ethylene terephthalate units as main recurring units and an outer layer of polyester having ethylene

isophthalate units as main recurring units, the thin-wall parts of which have been oriented at least in one direction to improve gas barrier properties of the containers. Japanese Patent L-O-P Publn. No. 64866/1981 discloses multilayer containers composed of the outermost and innermost layers, both consisting of polyester having ethylene terephthalate units a main recurring units, and an interlayer consisting of polyamide having as diamine component m-xylylenediamine or a mixture of m-xylylenediamine and p-xylylenediamine, the thin-wall parts of which have been oriented at least in one direction.

Further, Japanese Patent L-O-P Publn. No. 183243/1983 discloses biaxially oriented blow-molded bottles composed of an outer surface layer, an inner surface layer, both consisting of polyethylene terephthalate, and an interlayer consisting of a mixed material containing polyethylene terephthalate and xylylene-containing polyamide.

By such attempts to modify polyalkylene terephthalate as aforesaid, however, the modified polyalkylene terephthalate as modified is not considered to have improved in gas barrier properties to such an extent that the polyalkylene terephthalate as modified is regarded as a material suitable for use in the manufacture of containers for sparkling beverages.

Accordingly, in the cases of containers for which high gas barrier properties are required, such as containers for sparkling beverages, there was no alternative but to depend on such conventional techniques hitherto employed for improving gas barrier properties in the field of resin containers as allowing the resin containers to have a multilayer or thick-wall construction.

Apart from the techniques as aforementioned, it is known that polyethylene terephthalate improves in gas barrier properties by incorporating polyhydroxypolyether into polyethylene terephthalate.

With regard to such polyhydroxypolyether as referred to above, Journal of Applied Polymer Science, Vol.7, 2135-2144 (1963) discloses the results of research on gas barrier properties of homopolyhydroxypolyether represented by the following formula (A)

$$-(O-E-O-CH_2-\underset{OH}{\underset{|}{CH}}-CH_2)_x- \quad (A)$$

wherein E is

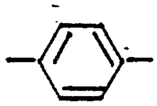 , 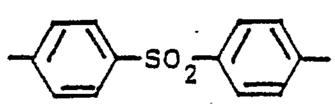 , 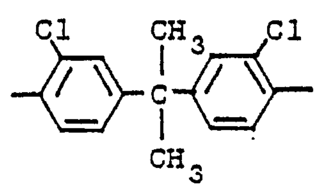

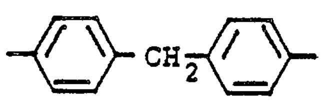 , 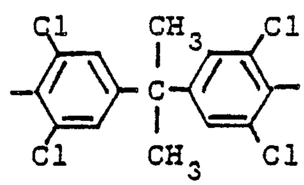 , 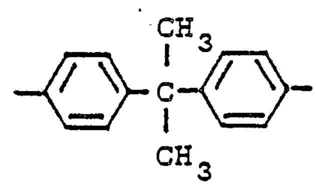

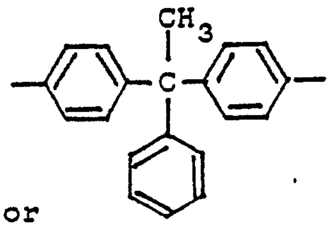 , 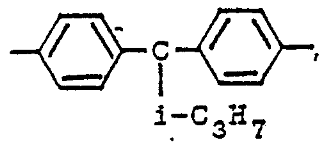 , 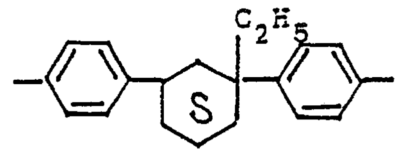

or

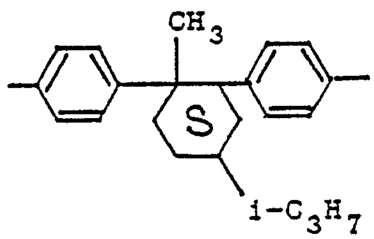

Of such homohydroxydiethers as mentioned above, a polymer having the lowest oxygen permeability is one of the polymers of the above formula (A) in which E is

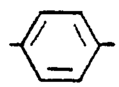 ,

and its oxygen permeability is 0.5 cc-mil/100 $in^2$/24 hr/atm. Further, a polymer low in degree of water vapor transfer is one of the polymers of the above formula (A) in which R is

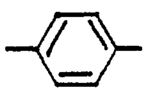 , 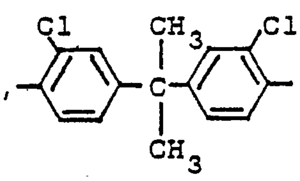 , 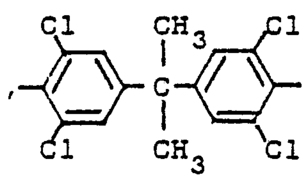 or 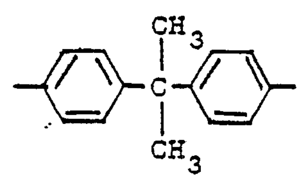

and its water vapor transfer value is 3 g-mil/ $in^2$/24 hr at 100°F and 90% RH.

Journal of Applied Polymer Science, Vol. 7, 2145-2152 (1963) further discloses the results of research on gas barrier properties of copolyhydroxypolyether represented by the following formula (B).

$$-(R_1\text{-}OCH_2\underset{|}{\overset{OH}{C}}H\ CH_2O\text{-}R_2\text{-}OCH_2\underset{|}{\overset{OH}{C}}H\ CH_2O)_n\text{-} \qquad (B)$$

wherein $R_1$ is 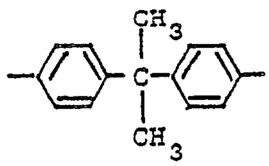 , 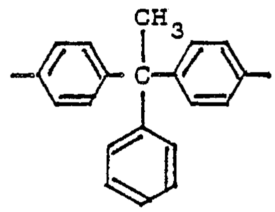 ,

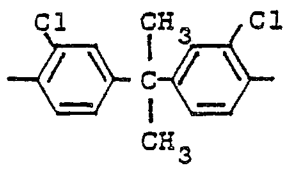 , 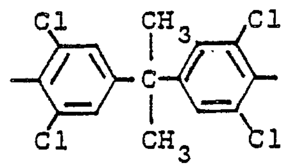 , 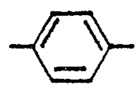 , 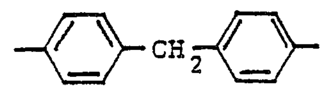

or 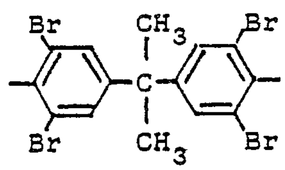 , and $R_2$ is 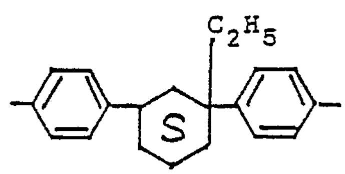 ,

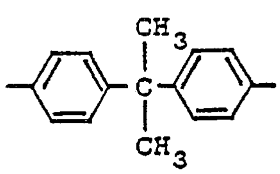 or 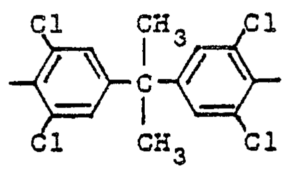 , provided that in the above formulas (A) and (B), $R_1$ is not identical with $R_2$.

Of such polyhydroxypolyethers as mentioned above, polymers having the lowest oxygen permeability are those of the above formula (B) in which R is

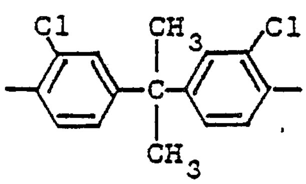 and $R_2$ is 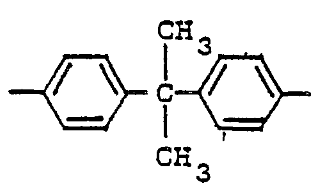, and in which

$R_1$ is 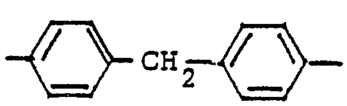 and $R_2$ is 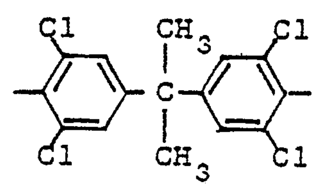 , and

each of the polymers has an oxygen permeability of 5 g-ml/100 in$^2$/24 hr/atm. Further, polymers low in water vapor transfer are those of the above formula (B) in which

$R_1$ is 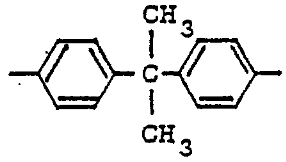 and $R_2$ is 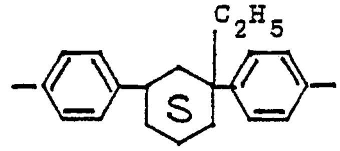 , in which $R_1$ is 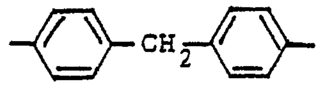 and $R_2$ is 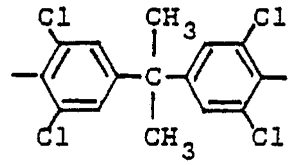 , and in which $R_1$ is 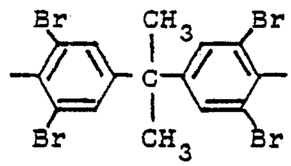 and $R_2$ is 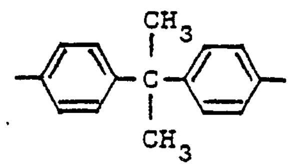

and each of the polymers has a water vapor transfer of 4 g-ml/100 $in^2$/24 hr at 100°F and 90% RH.

Such polyhydryoxypolyethers as disclosed above may be prepared by the reaction of hydroquinone with epichlorohydrin (see U.S. Patent 2,602,075 dated 1948, 11, 26). However, polyhydroxypolyethers disclosed in this U.S. Patent are intermediate materials for preparing epoxy resins, and the polyhydroxypolyethers obtained according to the preparative technique described in said patent have in the molecule an epoxy group.

Japanese Patent Publication No. 4495/1953 discloses a process for preparing resins which comprises reacting previously dihydric phenols with epihalohydrins to obtain diglycidyl ethers of the dihydric phenols or oligomers thereof, and then reacting further said diglycidyl ethers or oligomers thereof with dihydric phenols.

However, dihydric phenols used in the above invention are mainly biphenol A, that is, 2,2-bis(4-hydroxyphenyl)propane, and the invention fails to disclose concretely homopolyhydroxypolyether of hydroquinone. Further, the resulting polymers in this invention are mainly those having a definite epoxy equivalent and accordingly the polymers prepared by the invention have also epoxy groups.

U.S. Patent 2,615,008 (dated 1951, 10,11) discloses a process for preparing high-molecular weight epoxy resins by reacting low-molecular weight epoxy resins with dihydric phenols. In this process, it is indicated that the low-molecular weight epoxy resin is used in such an amount that an epoxy equivalent of the low-molecular weight epoxy resin is higher than a phenol equivalent of the dihydric phenol. Accordingly, the polymers obtained by this process have also epoxy groups.

U.S. Patent 3,336,257 (1967. 8. 15) discloses a process for preparing high-molecular weight polyhydroxypolyethers by reacting diepoxy compounds with diphenol in the presence of catalysts such as tertiary amine, quaternary ammonium compound, N-alkyl acid amide, N,N-dialkyl acid amide, urea compound and thiourea compound.

However, this process is to prepare polyhydroxypolyethers containing recurring units derived from bisphenol A, and the polyhydroxypolyethers obtained by this process have also a structure containing epoxy group.

U.S. Patent 3,379,684 (1968. 4. 23) discloses a process for preparing addition polymerization products by reacting diepoxy compounds with diphenol compounds in such a manner that the ratio of the epoxy group to the phenolic hydroxyl group is in the range of 1.0 to 1.2, and that tertiary amines are effective catalysts used for the reaction.

However, the compounds obtained by this process are addition polymers of bisphenols and diepoxy compounds, and the addition polymers thus obtained also have epoxy groups.

By U.S. Patent 3,560,605 (1971. 2. 2) discloses injection molding compositions comprising polyethylene terephthalate and diglycidyl ether compounds.

In the disclosed compositions, however, di- or polyepoxy compound of dihydric phenol used as the glycidyl ether compound naturally have an epoxy group, and by utilization of the reactivity of this epoxy group, polyethylene terephthalate is modified.

U.S. Patent 4,087,479 (1978. 5. 2) discloses thermosetting compositions comprising a mixture of polyester having carboxyl group and polyepoxide compound containing epoxy group. The amount of epoxy

group present in the polyepoxide compound used in this composition is described as 2-100 epoxy groups per one molecule of said polyepoxide compound, thus this polyepoxide compound have epoxy groups.

U.S. Patent 4,267,301 (1981. 5. 12) and Japanese Patent L-O-P Publn. No. 100828/1981 disclose linear hydroquinonephenoxy polymers prepared from hydroquinone and epihalohydrin by interfacial polymerization.

However, the hydroquinonephenoxy polymers referred to above are prepared by interfacial polymerization of hydroquinone with epihalohydrin in an amount ranging from 0.95 to 1.05 equivalents to the hydroquinone and hence the rsulting hydroquinonephenoxypolymer has an epoxy group.

The prior art polyhydroxypolyethers cited hereinbefore or compounds analogous thereto are polymers which all have epoxy groups in the molecule. When molded articles are prepared from blends of such polymers having epoxy groups as mentioned above and polyalkylene terephthalate, the resulting molded articles are improved in gas barrier properties to a certain degree, but, becuase of polymerization reaction proceeds at the time of molding by the action of the remaining epoxy groups in the blend, the resulting molded articles decrease in moldability or the like and do not improve in gas barrier properties and mechanical strength to such an extent as anticipated.

Upon investigation the present inventor ascertained that polyhydroxypolyethers obtained by the prior art such as reaction of diols with epihalohydrins have terminal epoxy groups derived from epihalohydrins in a definite probability and hence no polyhydroxypolyethers having no epoxy group can be obtained thereby.

On one hand, the present inventor found that apart from the action of the terminal epoxy groups of such polyhydroxypolyethers as mentioned above, transparency and gas barrier properties of said polyhydroxypolyethers are influenced by the amount of nonionic organohalides which remains in the polyhydroxypolyethers. That is, no relationship between the transparency and gas barrier properties of polyhydroxypolyethers and the nonionic organohalide remaining therein has heretofore been taken into consideration at all.

For instance, Japanese Patent L-O-P Publn. No. 100828/1981 discloses that linear hydroquinonephenoxy polymers prepared by interfacial polymerization of hydroquinone and epihalohydrine have gas barrier properties to oxygen and carbon dioxide to a certain extent. However, measurement of the nonionic organohalide in the linear hydroquinonephenoxy polymers disclosed in the above-mentioned publication reveals that the polymers contain at least 3% by weight of organohalide atoms. Further, the hydroquinonephenoxy polymers thus prepared have such characteristics that they lose their transparency under the circumstances of high humidity. For instance, when press sheets prepared from such hydroquinonephenoxy polymers as mentioned above are allowed to stand in a high humidity atmosphere of vapor phase, or immersed in water, the press sheets markedly decrease in transparency.

The present invention is intended to solve such problems associated with the prior art as mentioned above, and it is an object of the invention to provide polyhydroxypolyethers excellent in transparency and gas barrier properties, particularly gas barrier properties to such gases as oxygen and carbonic acid gas and also excellent in mechanical strength.

A further object of the invention is to provide polyhydroxypolyethers excellent in melt moldability and stretchability.

Another object of the invention is to provide a process for preparing polyhydroxypolyethers excellent in melt moldability and stretchability.

A still further object of the invention is to provide polyhydroxypolyethers which do not contain gel-like components even when they have a low molecular weight or high molecular weight, which are excellent in moldability, gas barrier properties and safety to food, and which are capable of forming compositions excellent in gas barrier properties when used in combination with polyalkylene terephthalate particularly polyethylene terephthalate.

A particular object of the invention is to provide gas barrier property-imparting agents which are capable of improving gas properties of polyalkylene terephthalate by incorporating said agents into polyalkylene terephthalate or forming laminates of polyalkylene terephthalate in combination with said agents.

Another object of the invention is to provide by the use of polyhydroxypolyethers having such excellent characteristics as mentioned above polyester resin compositions excellent particularly in transparency and gas barrier properties, molded articles, stretched molded articles, preforms for preparation of blow molded articles and blow molded articles obtained from said polyester resin compositions.

Furthermore, another object of the invention is to provide by the use of polyhydroxypolyethers having such excellent characteristics as mentioned above polyester resin laminated molded articles excellent particularly in transparency and gas barrier properties, multilayer stretched molded articles, preforms for preparation of multilayer blow molded articles and multilayer blow molded articles obtained from said polyester resin laminated molded articles.

DISCLOSURE OF THE INVENTION

A first polyhydroxypolyether of the present invention is a substantially linear polyhydroxypolyether represented by the following formula [I]:

$$-\!\!\left( OCH_2\underset{\displaystyle OH}{\underset{|}{CH}}CH_2O-R^1 \right)_{\!n}\!\!- \qquad [I]$$

wherein $R^1$ represents a divalent aromatic hydrocarbon group consisting essentially of a p-phenylene group, and n is a positive integer;
said polyhydroxypolyether having an intrinsic viscosity of from 0.10 dl/g to less than 0.3 dl/g as measured in o-chlorophenol at 25°C, and containing not more than 0.2% by weight of nonionic organic halogen.

A gas barrier property-imparting agent of the present invention is a substantially linear polyhydroxypolyether represented by the following formula [I]:

$$-\!\!\left( OCH_2\underset{\displaystyle OH}{\underset{|}{CH}}CH_2O-R^1 \right)_{\!n}\!\!- \qquad [I]$$

wherein $R^1$ is a represents divalent aromatic hydrocarbon group consisting essentially of a p-phenylene group, and n is a positive integer;
said polyhydroxypolyether having an intrinsic viscosity of from 0.10 dl/g to less than 0.3 dl/g as measured in o-chlorophenol at 25°C, and containing not more than 0.2% by weight of nonionic organic halogen.

A polyester resin composition of the present invention is a polyester resin composition comprising a polyhydroxypolyether (a) and a polyalkylene terephthalate (b) composed of ethylene terephthalate units as main structural units;
said polyhydroxypolyether (a) being a substantially linear polyhydroxypolyether represented by the formula [I]:

$$-\!\!\left( OCH_2\underset{\displaystyle OH}{\underset{|}{CH}}CH_2O-R^1 \right)_{\!n}\!\!- \qquad [I]$$

wherein $R^1$ represents a divalent aromatic hydrocarbon group consisting essentially of a p-phenylene group, and n is a positive integer;
said polyhydroxypolyether (a) being characterized by having an intrinsic viscosity of 0.10 dl/g to less than 0.3 dl/g as measured in o-chlorophenol at 25°C, and containing not more than 0.2% by weight of nonionic organic halogen.

A stretched molded article of the present invention, a stretched molded article of a polyester resin composition comprising a polyhydroxypolyether (a) and a polyalkylene terephthalate (b) composed of ethylene terephthalate units as main structural units;
said polyhydroxypolyether (a) is a substantially linear polyhydroxypolyether represented by the following formula [I]:

$$-\!\!\left( OCH_2\underset{\displaystyle OH}{\underset{|}{CH}}CH_2O-R^1 \right)_{\!n}\!\!- \qquad [I]$$

wherein $R^1$ represents a divalent aromatic hydrocarbon group consisting essentially of a p-phenylene group, and n is a positive integer;
said polyhydroxypolyether (a) having an intrinsic viscosity of from 0.10 dl/g to less than 0.3 dl/g as measured in o-chlorophenol at 25°C, and containing not more than 0.2% by weight of nonionic organic halogen.

A preform for preparation of stretched blow molded article of the present invention is a preform for preparation of stretched blow molded article formed from a polyester resin composition comprising a polyhydroxypolyether (a) and a polyalkylene terephthalate (b) composed of ethylene terephthalate units as main structural units;
said polyhydroxypolyether (a) being a substantially linear polyhydroxypolyether represented by the following formula [I]:

$$-\!\!\left( OCH_2\underset{\displaystyle OH}{\underset{|}{CH}}CH_2O-R^1 \right)_{\!n}\!\!- \qquad [I]$$

wherein $R^1$ represents a divalent aromatic hydrocarbon group consisting essentially of a p-phenylene group, and n is a positive integer;
said polyhydroxypolyether (a) having an intrinsic viscosity of from 0.10 dl/g to less than 0.3 dl/g as measured in o-chlorophenol at 25°C, and containing not more than 0.2% by weight of nonionic organic halogen.

A stretched blow molded article of the present invention is a stretched blow molded article formed from a polyester resin composition comprising a polyhydroxypolyether (a) and a polyalkylene terephthalate (b)

composed of ethylene terephthalate units as main structural units, said polyhydroxypolyether (a) being a substantially linear polyhydroxypolyether represented by the following formula [I]:

$$-\!\left(OCH_2\underset{OH}{\underset{|}{C}H}\;CH_2O\text{-}R^1\right)_{n}\!- \qquad [I]$$

wherein $R^1$ represents a divalent aromatic hydrocarbon group consisting essentially of a p-phenylene group, and n is a positive integer;
said polyhydroxypolyether (a) having an intrinsic viscosity of from 0.10 dl/g to less than 0.3 dl/g as measured in o-chlorophenol at 25°C, and containing not more than 0.2% by weight of nonionic organic halogen.

A laminated molded article of the present invention is a polyester resin laminated molded article composed of

(A) a composition layer comprising a polyhydroxypolyether (a) and a polyalkylene terephthalate (b) composed of ethylene terephthalate units as main structural units and

(B) a polyalkylene terephthalate layer composed of ethylene terephthalate units as main structural units, said polyhydroxypolyether (a) being a substantially linear polyhydroxypolyether represented by the following formula [I]:

$$-\!\left(OCH_2\underset{OH}{\underset{|}{C}H}\;CH_2O\text{-}R^1\right)_{n}\!- \qquad [I]$$

wherein $R^1$ represents a divalent aromatic hydrocarbon group consisting essentially of a p-phenylene group, and n is a positive integer;
said polyhydroxypolyether (a) having an intrinsic viscosity of from 0.10 dl/g to less than 0.3 dl/g as measured in o-chlorophenol at 25°C, and containing not more than 0.2% by weight of nonionic organic halogen.

A stretched liquid phase molded article of the present invention is a polyester resin stretched laminated molded article composed of

(A) a composition layer comprising a polyhydroxypolyether (a) and a polyalkylene terephthalate (b) composed of ethylene terephthalate units as main structural units, and

(B) a polyalkylene terephthalate layer composed of ethylene terephthalate units as main structural units, said polyhydroxypolyether (a) being a substantially linear polyhydroxypolyether represented by the following formula [I]:

$$-\!\left(OCH_2\underset{OH}{\underset{|}{C}H}\;CH_2O\text{-}R^1\right)_{n}\!- \qquad [I]$$

wherein $R^1$ represents a divalent aromatic hydrocarbon group consisting essentially of a p-phenylene group, and n is a positive integer;
said polyhydroxypolyether (a) having an intrinsic viscosity of from 0.10 dl/g to less than 0.3 dl/g as measured in o-chlorophenol at 25°C, and containing not more than 0.2% by weight of nonionic organic halogen.

A preform for multilayer blow molded article of the present invention is a preform for a polyester multilayer blow molded article composed of

(A) a composition layer comprising a polyhydroxypolyether (a) and a polyalkylene terephthalate (b) composed of ethylene terephthalate units as main structural units, and

(B) a polyalkylene terephthalate layer composed of ethylene terephthalate units as main structural units, said polyhydroxypolyether (a) being a substantially linear polyhydroxypolyether represented by the following formula [I]:

$$-\!\left(OCH_2\underset{OH}{\underset{|}{C}H}\;CH_2O\text{-}R^1\right)_{n}\!- \qquad [I]$$

wherein $R^1$ represents a divalent aromatic hydrocarbon group consisting essentially of a p-phenylene group, and n is a positive integer;
said polyhydroxypolyether (a) having an intrinsic viscosity of from 0.10 dl/g to less than 0.3 dl/g as measured in o-chlorophenol at 25°C, and containing not more than 0.2% by weight of nonionic organic halogen.

A multilayer blow molded article of the present invention is a polyester resin multilayer blow molded article composed

(A) a composition layer comprising a polyhydroxypolyether (a) and a polyalkylene terephthalate (b) composed of ethylene terephthalate units as main structural units, and

(B)polyalkylene terephthalate layer composed of ethylene terephthalate units as main structural units, said polyhydroxypolyether (a) being a substantially linear polyhydroxypolyether represented by the following formula [I]:

$$\text{-}\!\left(OCH_2\ \underset{\displaystyle OH}{CH}\ CH_2O\text{-}R^1\right)_n\text{—} \qquad [I]$$

wherein $R^1$ represents a divalent aromatic hydrocarbon group consisting essentially of a p-phenylene group, and n is a positive integer;

said polyhydroxypolyether (a) being characterized by having an intrinsic viscosity of from 0.10 dl/g to less than 0.3 dl/g as measured in o-chlorophenol at 25°C, and containing not more than 0.2% by weight of nonionic organic halogen.

A second polyhydroxypolyether of the present invention is characterized by containing a substantially linear polyhydroxypolyether represented by the following formula (a): and having an intrinsic viscosity of 0.3-2 dl/g as measured in o-chlorophenol at 25°C.

$$Ar^1\!\left(O\text{-}CH_2\text{-}\ \underset{\displaystyle OH}{CH}\ \text{-}CH_2\text{-}O\text{-}Ar\right)_n\text{—}O\text{-}CH_2\text{-}\ \underset{\displaystyle OH}{CH}\ \text{-}CH_2\text{-}O\text{-}Ar^2 \qquad (a)$$

wherein $Ar^1$ and $Ar^2$ independently represent HO-Ar or a monovalent aromatic hydrocarbon group having 6-15 carbon atoms other than HO-Ar, Ar represents a p-phenylene group, and n represents a positive integer.

The second polyhydroxypolyether mentioned above may be prepared by a process characterized by reacting a substantially linear hydroxyether compound represented by the following formula ($a^1$):

$$Aro^1\!\left(O\text{-}CH_2\text{-}\ \underset{\displaystyle OH}{CH}\ \text{-}CH_2\text{-}O\text{-}Ar\right)_m\text{—}O\text{-}CH_2\text{-}\ \underset{\displaystyle OH}{CH}\ \text{-}CH_2\text{-}O\text{-}Aro^2 \qquad (a^1)$$

wherein $Aro^1$ and $Aro^2$ independently represent HO-Ar or a glycidyl group, Ar represents a p-phenylene group, and m represents a positive integer, with an aromatic monoalcohol having 6-15 carbon atoms in the presence of at least one compound selected from the group consisting of tertiary amine compounds, quaternary ammonium compounds, tertiary phosphine compounds and quaternary phosphonium compounds.

A gas barrier property-imparting agent of the present invention is characterized by containing a substantially linear polyhydroxypolyether represented by the following formula (a): and having an intrinsic viscosity of 0.3-2 dl/g as measured in o-chlorophenol at 25°C.

$$Ar^1\!\left(O\text{-}CH_2\text{-}\ \underset{\displaystyle OH}{CH}\ \text{-}CH_2\text{-}O\text{-}Ar\right)_n\text{—}O\text{-}CH_2\text{-}\ \underset{\displaystyle OH}{CH}\ \text{-}CH_2\text{-}O\text{-}Ar^2 \qquad (a)$$

wherein $Ar^1$ and $Ar^2$ independently represent HO-Ar or a monovalent aromatic hydrocarbon group having 6-15 carbon atoms other than HO-Ar, represents a p-phenylene group, and n represents a positive integer.

A polyester resin composition of the present invention is characterized by containing a polyalkylene terephthalate composed of ethylene terephthalate units as main structural units and a polyhydroxypolyether, said polyhydroxypolyether being a substantially linear polyhydroxypolyether represented by the following formula (a):

$$Ar^1\!\left(O\text{-}CH_2\text{-}\ \underset{\displaystyle OH}{CH}\ \text{-}CH_2\text{-}O\text{-}Ar\right)_n\text{—}O\text{-}CH_2\text{-}\ \underset{\displaystyle OH}{CH}\ \text{-}CH_2\text{-}O\text{-}Ar^2 \qquad (a)$$

wherein $Ar^1$ and $Ar^2$ independently represent HO-Ar or a monovalent aromatic hydrocarbon group of 6-15 carbon atoms other than HO-Ar, Ar represents a p-phenylene group, and n represents a positive integer;

said polyhydroxypolyether having an intrinsic viscosity [$\eta$] of 0.1-2 dl/g as measured in o-chlorophenol at 25°C.

A stretched molded article of the present invention is a stretched molded article of a polyester resin composition containing a polyalkylene terephthalate composed of ethylene terephthalate units as main structural units and a polyhydroxypolyether, said polyhydroxypolyether being a substantially linear polyhydroxypolyether represented by the following formula (a):

$$Ar^1\!\left(O\text{-}CH_2\text{-}\ \underset{\displaystyle OH}{CH}\ \text{-}CH_2\text{-}O\text{-}Ar\right)_n\text{—}O\text{-}CH_2\text{-}\ \underset{\displaystyle OH}{CH}\ \text{-}CH_2\text{-}O\text{-}Ar^2 \qquad (a)$$

wherein $Ar^1$ and $Ar^2$ independently represent HO-Ar or a monovalent aromatic hydrocarbon group of 6-15 carbon atoms other than HO-Ar, Ar represents a p-phenylene group, and n represents a positive integer;

said polyhydroxypolyether having an intrinsic viscosity [$\eta$] of 0.3-2 dl/g as measured in o-chlorophenol at 25°C.

A preform for stretched blow molded article of the present invention is a preform for stretched blow molded article of a polyester resin composition containing a polyalkylene terephthalate composed of ethylene terephthalate units as main structural units and a polyhydroxypolyether, said polyhydroxypolyether being a substantially linear polyhydroxypolyether represented by the following formula (a):

$$Ar^1\!\left(O\text{-}CH_2\text{-}\ \underset{\displaystyle OH}{CH}\ \text{-}CH_2\text{-}O\text{-}Ar\right)_n\text{—}O\text{-}CH_2\text{-}\ \underset{\displaystyle OH}{CH}\ \text{-}CH_2\text{-}O\text{-}Ar^2 \qquad (a)$$

wherein $Ar^1$ and $Ar^2$ independently represent HO-Ar or a monovalent aromatic hydrocarbon group of 6-15 carbon atoms other than HO-Ar, Ar represents a p-phenylene group, and n represents a positive integer;

said polyhydroxypolyether having an intrinsic viscosity [η] of 0.3-2 dl/g as measured in o-chlorophenol at 25°C.

A stretched blow molded article of the present invention is a preform for a stretched hollow article of a polyester resin composition containing a polyalkylene terephthalate composed of terephthalate units as main structural units and a polyhydroxypolyether, said polyhydroxypolyether being a substantially linear polyhydroxypolyether represented by the following formula (a):

$$Ar^1\!\left(O-CH_2-\underset{OH}{CH}-CH_2-O-Ar\right)_n O-CH_2-\underset{OH}{CH}-CH_2-O-Ar^2 \quad (a)$$

wherein $Ar^1$ and $Ar^2$ independently represent HO-Ar or a monovalent aromatic hydrocarbon group of 6-15 carbon atoms other than HO-Ar, Ar represents a p-phenylene group, and n represents a positive integer; said polyhydroxypolyether having an intrinsic viscosity [η] of 0.3-2 dl/g as measured in o-chlorophenol at 25°C.

A laminated molded article of the present invention is a polyester resin laminated molded article composed of a polyhydroxypolyether layer or a layer of a polyester resin composition containing a polyalkylene terephthalate composed of ethylene terephthalate units as main structural units and a polyhydroxypolyether, and a layer comprising a polyalkylene terephthalate composed of ethylene terephthalate units as main structural units, said polyhydroxypolyether being a substantially linear polyhydroxypolyether represented by the following formula (a):

$$Ar^1\!\left(O-CH_2-\underset{OH}{CH}-CH_2-O-Ar\right)_n O-CH_2-\underset{OH}{CH}-CH_2-O-Ar^2 \quad (a)$$

wherein $Ar^1$ and $Ar^2$ independently represent HO-Ar or a monovalent aromatic hydrocarbon group of 6-15 carbon atoms other than HO-Ar, Ar represents a p-phenylene group, and n represents a positive integer; said polyhydroxypolyether having an intrinsic viscosity [η] of 0.3-2 dl/g as measured in o-chlorophenol at 25°C.

A stretched laminated molded article of the present invention is a polyester resin stretched laminated molded article composed of a polyhydroxypolyether layer or a layer of a polyester resin composition containing a polyalkylene terephthalate composed of ethylene terephthalate units as main structural units and a polyhydroxypolyether, and a layer comprising a polyalkylene terephthalate composed of ethylene terephthalate units as main structural units, said polyhydroxypolyether being a substantially linear polyhydroxypolyether represented by the following formula (a):

$$Ar^1\!\left(O-CH_2-\underset{OH}{CH}-CH_2-O-Ar\right)_n O-CH_2-\underset{OH}{CH}-CH_2-O-Ar^2 \quad (a)$$

wherein $Ar^1$ and $Ar^2$ independently represent HO-Ar or a monovalent aromatic hydrocarbon group of 6-15 carbon atoms other than HO-Ar, Ar represents a p-phenylene group, and n represents a positive integer. said polyhydroxypolyether having an intrinsic viscosity [η] of 0.3-2 dl/g as measured in o-chlorophenol at 25°C.

A preform for multilayer blow molded article of the present invention is a preform for a polyester resin multilayer blow molded article composed of a polyhydroxypolyether layer or a layer of a polyester resin composition containing a polyalkylene terephthalate composed of ethylene terephthalate units as main structural units and a polyhydroxypolyether, and a layer comprising polyalkylene terephthalate composed of ethylene terephthalate units as main structural units, said polyhydroxypolyether being a substantially linear polyhydroxypolyether represented by the following formula (a):

$$Ar^1\!\left(O-CH_2-\underset{OH}{CH}-CH_2-O-Ar\right)_n O-CH_2-\underset{OH}{CH}-CH_2-O-Ar^2 \quad (a)$$

wherein $Ar^1$ and $Ar^2$ independently represent HO-Ar or a monovalent aromatic hydrocarbon group of 6-15 carbon atoms other than HO-Ar, Ar represents a p-phenylene group, and n represents a positive integer; said polyhydroxypolyether having an intrinsic viscosity [η] of 0.3-2 dl/g as measured in o-chlorophenol at 25°C:

A multilayer blow molded article of the present invention is a polyester resin multilayer blow molded article composed of a polyhydroxypolyether layer or a layer of a polyester resin composition containing polyalkylene terephthalate composed of ethylene terephthalate units as main structural units and polyhydroxypolyether, and a layer of polyalkylene terephthalate composed of ethylene terephthalate units as main structural units, said polyhydroxypolyether being a substantially linear polyhydroxypolyether represented by the following formula (a):

$$Ar^1\!\left(O-CH_2-\underset{OH}{CH}-CH_2-O-Ar\right)_n O-CH_2-\underset{OH}{CH}-CH_2-O-Ar^2 \quad (a)$$

wherein $Ar^1$ and $Ar^2$ independently represent HO-Ar or a monovalent aromatic hydrocarbon group of 6-15 carbon atoms other than HO-Ar, Ar represents a p-phenylene group, and n represents a positive integer;

said polyhydroxypolyether having an intrinsic viscosity [η] of 0.3-2 dl/g as measured in o-chlorophenol at 25°C.

A third polyhydroxypolyether of the present invention is characterized by containing a structural unit represented by the following formula (a-1):

$-O-CH_2-CH(OH)-CH_2-O-Ar^a-$ (a-1)

wherein $Ar^a$ represents a p-phenylene group and a m-phenylene group, provided that the content of the structural unit having a p-phenylene group is higher than that of the structural unit having a m-phenylene group, and a structural unit represented by the following formula (b-1):

$-O-CH_2-CH(OH)-CH_2-O-Ar^b-$ (b-1)

wherein $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, the molar ration between said structural unit (a-1) and said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, $HO-Ar^a$ and $HO-Ar^b$ wherein $Ar^a$ represents a p-phenylene group and/or a m-phenylene group and, $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, and said polyhydroxypolyether being a substantially linear polyhydroxypolyether having an intrinsic viscosity [η] of 0.3-2 dl/g as measured in o-chlorophenol at 25°C.

The above-mentioned third polyhydroxypolyether may be prepared by a process characterized by reacting in the presence of at least one compound selected from the group consisting of tertiary amine compounds, quaternary ammonium compounds, tertiary phosphine compounds and quaternary phosphonium compounds, an aromatic monoalcohol having 6-15 carbon atoms with a substantially linear hydroxy ether compound containing a structural unit represented by the following formula (a-1):

$-O-CH_2-CH(OH)-CH_2-O-Ar^a-$ (a-1)

wherein $Ar^a$ represents a p-phenylene group and a m-phenylene group, provided that the content of the structural unit having a p-phenylene group is higher than that of the structural unit having a m-phenylene group, and a structural unit represented by the following formula (b-1):

$-O-CH_2-CH(OH)-CH_2-O-Ar^b-$ (b-1)

wherein $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, the molar ratio between said structural unit (a-1) and said structural unit (b-1) being in the range of 50:50 to 95:5, both terminals $Aro^1$ and $Aro^2$ of a compound composed of said structural units (a-1) and (b-1) being independently a group selected from the group consisting of glycidyl group, $HO-Ar^a$ and $HO-Ar^b$ wherein $Ar^a$ repreents a p-phenylene group and/or a m-phenylene group and, $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene.

A gas barrier property-imparting agent of the present invention is characterized by containing a substantially linear polyhydroxypolyether composed of a structural unit represented by the following formula (a-1):

$-O-CH_2-CH(OH)-CH_2-O-Ar^a-$ (a-1)

wherein $Ar^a$ represents a p-phenylene group and a m-phenylene group, provided that the content of the structural unit having a p-phenylene group is higher than that of the structural unit having a m-phenylene group, and a structural unit represented by the following formula (b-1):

$-O-CH_2-CH(OH)-CH_2-O-Ar^b-$ (b-1)

wherein $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, the molar ration between said structural unit (a-1) and said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, $HO-Ar^a$ and $HO-Ar^b$ wherein $Ar^a$ represents a p-phenylene group and/or a m-phenylene group and, $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, and having an intrinsic viscosity [η] of 0.3-2 dl/g as measured in o-chlorophenol at 25°C.

A polyester resin composition of the present invention is a polyester resin composition containing a

polyalkylene terephthalate composed of ethylene terephthalate units as main structural units and polyhydroxypolyether, and characterized in that said polyhydroxypolyether is a substantially linear polyhydroxypolyether containing a structural unit represented by the following formula (a-1):

$-O-CH_2-CH(OH)-CH_2-O-Ar^a-$ (a-1)

wherein $Ar^a$ represents a p-phenylene group and a m-phenylene group, provided that the content of the structural unit having a p-phenylene group is higher than that of the structural unit having a m-phenylene group, and a structural unit represented by the following formula (b-1):

$-O-CH_2-CH(OH)-CH_2-O-Ar^b-$ (b-1)

wherein $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, the molar ratio between said structural unit (a-1) and said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, $HO-Ar^a$ and $HO-Ar^b$ wherein $Ar^a$ represents a p-phenylene group and/or a m-phenylene group and, $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, and having an intrinsic viscosity [$\eta$] of 0.3-2 dl/g as measured in o-chlorophenol at 25°C.

A stretched molded article of the present invention is a stretched molded article of a polyester resin composition containing a polyalkylene terephthalate composed of ethylene terephthalate units as main structural units and a polyhydroxypolyether, said polyhydroxypolyether being characterized by containing a structural unit represented by the following formula (a-1):

$-O-CH_2-CH(OH)-CH_2-O-Ar^a-$ (a-1)

wherein $Ar^a$ represents a p-phenylene group and a m-phenylene group, provided that the content of the structural unit having a p-phenylene group is higher than that of the structural unit having a m-phenylene group, and a structural unit represented by the following formula (b-1):

$-O-CH_2-CH(OH)-CH_2-O-Ar^b-$ (b-1)

wherein $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, the molar ratio of said structural unit (a-1) between said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, $HO-Ar^a$ and $HO-Ar^b$ wherein $Ar^a$ represents a p-phenylene group and/or a m-phenylene group and, $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, and being a substantially linear polyhydroxypolyether having an intrinsic viscosity [$\eta$] of 0.3-2 dl/g as measured in o-chlorophenol at 25°C.

A preform for stretched blow molded article of the present invention is a preform for stretched blow molded article of a polyester resin composition containing a polyalkylene terephthalate composed of ethylene terephthalate units as main structural units, and a polyhydroxypolyether, said polyhydroxypolyether being characterized by containing a structural unit represented by the following formula (a-1):

$-O-CH_2-CH(OH)-CH_2-O-Ar^a-$ (a-1)

wherein $Ar^a$ represents a p-phenylene group and a m-phenylene group, provided that the content of the structural unit having a p-phenylene group is higher than that of the structural unit having a m-phenylene group, and a structural unit represented by the following formula (b-1):

$-O-CH_2-CH(OH)-CH_2-O-Ar^b-$ (b-1)

wherein $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, the molar ratio of between structural unit (a-1) and said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, $HO-Ar^a$ and $HO-Ar^b$ wherein $Ar^a$ represents a p-phenylene group and/or a m-phenylene group and, $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, and being a substantially linear polyhydroxypolyether having an intrinsic viscosity [$\eta$] of 0.3-2 dl/g as measured in o-chlorophenol at 25°C.

A stretched blow molded article of the present invention is a stretched blow molded article of a polyester resin competition containing a polyalkylene terephthalate composed of ethylene terephthalate units as main structural units and a polyhydroxypolyether, said polyhydroxypolyether being characterized by containing a structural unit represented by the following formula (a-1):

$-O-CH_2-CH(OH)-CH_2-O-Ar^a-$ (a-1)

wherein $Ar^a$ represents a p-phenylene group and a m-phenylene group, provided that the content of the structural unit having a p-phenylene group is higher than that of the structural unit having a m-phenylene group, and a structural unit represented by the following formula (b-1):

$-O-CH_2-CH(OH)-CH_2-O-Ar^b-$ (b-1)

wherein $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, the molar ratio between said structural unit (a-1) and said structural unit (b-1) being in the renge of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, $HO-Ar^a$ and $HO-Ar^b$ wherein $Ar^a$ represents a p-phenylene group and/or a m-phenylene group and, $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, and being a substantially linear polyhydroxypolyether having an intrinsic viscosity [$\eta$] of 0.3-2 dl/g as measured in o-chlorophenol at 25°C.

A laminated molded article of the present invention is a polyester resin laminated molded article composed of a polyhydroxypolyether layer or a layer of a polyester resin composition containing a polyalkylene terephthalate composed of ethylene terephthalate units as main structural units and a polyhydroxypolyether, and a layer composed of a polyalkylene terephthalate composed of ethylene terephthalate units as main structural units, said polyhydroxypolyether being characterized by containing a structural unit represented by the following formula (a-1):

$-O-CH_2-CH(OH)-CH_2-O-Ar^a-$ (a-1)

wherein $Ar^a$ represents a p-phenylene group and a m-phenylene group, provided that the content of the structural unit having a p-phenylene group is higher than that of the structural unit having a m-phenylene group, and a structural unit represented by the following formula (b-1):

$-O-CH_2-CH(OH)-CH_2-O-Ar^b-$ (b-1)

wherein $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene,

the molar ratio between said structural unit (a-1) and said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, $HO-Ar^a$ and $HO-Ar^b$ wherein $Ar^a$ represents a p-phenylene group and/or a m-phenylene group and, $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, and being a substantially linear polyhydroxypolyether having an intrinsic viscosity [$\eta$] of 0.3-2 dl/g as measured in o-chlorophenol at 25°C.

A stretched laminated molded article of the present invention is a polyester resin stretched laminated molded article composed of a polyhydroxypolyether layer or a layer of a polyester resin composition containing a polyalkylene terephthalate composed of ethylene terephthalate units as main structural units and a polyhydroxypolyether, and a layer of a polyalkylene terephthalate composed of ethylene terephthalate units as main structural units, said polyhydroxypolyether being characterized by containing a structural unit represented by the following formula (a-1):

$-O-CH_2-CH(OH)-CH_2-O-Ar^a-$ (a-1)

wherein $Ar^a$ represents a p-phenylene group and a m-phenylene group, provided that the content of the structural unit having a p-phenylene group is higher than that of the structural unit having a m-phenylene group, and a structural unit represented by the following formula (b-1):

$-O-CH_2-CH(OH)-CH_2-O-Ar^b-$ (b-1)

wherein $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene,

the molar ration between said structural unit (a-1) and said structural unit (b-1) being in the renge of 50:50 to 95:5, both terminals $Ar^1$ and $Ar^2$ of a polymer composed of said structural units (a-1) and (b-1) being

independently a group selected from the group consisting of monovalent aromatic hydrocarbon groups having 6-15 carbon atoms, HO-$Ar^a$ and HO-$Ar^b$ wherein $Ar^a$ represents a p-phenylene group and/or a m-phenylene group and, $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, and being a substantially linear polyhydroxypolyether having an intrinsic viscosity [η] of 0.3-2 dl/g as measured in o-chlorophenol at 25°C.

A preform for multilayer blow molded article of the present invention is a polyester resin multilayer blow molded article composed of a polyhydroxypolyether layer or a layer of a polyester resin composition containing a polyalkylene terephthalate composed of ethylene terephthalate units as main structural units and a polyhydroxypolyether, and a layer of polyalkylene terephthalate composed of ethylene terephthalate units as main structural units, said polyhydroxypolyether being characterized by containing a structural unit represented by the following formula (a-1):

$-O-CH_2-CH(OH)-CH_2-O-Ar^a-$ (a-1)

wherein $Ar^a$ represents a p-phenylene group and a m-phenylene group, provided that the content of the structural unit having a p-phenylene group is higher than that of the structural unit having a m-phenylene group, and a structural unit represented by the following formula (b-1):

$-O-CH_2-CH(OH)-CH_2-O-Ar^b-$ (b-1)

wherein $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4 ,4′-ketodiphenylene and 4,4′-sulfodiphenylene,

the molar ratio between said structural unit (a-1) and said structural unit (b-1) being in the renge of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, HO-$Ar^a$ and HO-$Ar^b$ wherein $Ar^a$ represents a p-phenylene group and/or a m-phenylene group and, $Ar^b$ is at least one group selected from the group consisting of 2-phenyl-1,4-phenylene, 1,4-naphthylene, 1,5-naphthylene, 2,6-naphthylene, 2,7-naphthylene, 4,4-diphenylene, 4,4′-oxydiphenylene, 4,4′-ketodiphenylene and 4,4′-sulfodiphenylene, and being a substantially linear polyhydroxypolyether having an intrinsic viscosity [η] of 0.32 dl/g as measured in o-chlorophenol at 25°C.

A multilayer hollow molded article of the present invention is a polyester resin multilayer hollow article composed of a polyhydroxypolyether layer or a layer of a polyester resin composition containing a polyalkylene terephthalate composed of ethylene terephthalate units as main structural units and a polyhydroxypolyether, and a layer of a polyalkylene terphthalate composed of ethylene terephthalate units as main structural units, said polyhydroxypolyether being characterized by containing a structural unit represented by the following formula (a-1):

$-O-CH_2-CH(OH)-CH_2-O-Ar^a-$ (a-1)

wherein $Ar^a$ represents a p-phenylene group and a m-phenylene group, provided that the content of the structural unit having a p-phenylene group is higher than that of the structural unit having a m-phenylene group, and a structural unit represented by the following formula (b-1):

$-O-CH_2-CH(OH)-CH_2-O-Ar^b-$ (b-1)

wherein $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4 ,4′-ketodiphenylene and 4,4′-sulfodiphenylene,

the molar ratio between said structural unit (a-1) and said structural unit (b-1) being in the renge of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, HO-$Ar^a$ and HO-$Ar^b$ wherein $Ar^a$ represents a p-phenylene group and/or a m-phenylene group and, $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene, and being a substantially linear polyhydroxypolyether having an intrinsic viscosity [η] of 0.3-2 dl/g as measured in o-chlorophenol at 25°C.

The polyhydroxypolyethers of the present invention are excellent in transparency and gas barrier properties, because they have a low percentage of retention of nonionic organic halide or their terminals are terminated by specific inert groups. Accordingly, such polyhydroxypolyethers as obtained according to the present invention are usable in themselves as gas barrier property-imparting agents and, at the same time, molded articles having high transparency and excellent gas barrier properties can be obtained therefrom by using them in combination, for example, with polyalkylene terephthalates and the like.

## BEST MODE OF PRACTICING THE INVENTION

The polyhydroxypolyethers of the present invention, processes for preparing same and uses thereof are illustrated below in detail.

In the polyhydroxypolyethers of the present invention, there are involved the first to third polyhydroxypolyethers as disclosed hereinafter.

First, the first polyhydroxypolyether of the invention is illustrated.

The first polyhydroxypolyether of the invention may be represented by the following formula [A]:

$-(CH_2\underset{OH}{CH}CH_2O-R^1)_n-$ [A]

wherein $R^1$ represents a divalent aromatic hydrocarbon group consisting essentially of a p-phenylene group, and n is a positive integer.

The polyhydroxypolyether represented by the above-mentioned formula [A] is substantially linear, has an intrinsic viscosity [η] of higher than 0.10 dl/g but less than 0.3 dl/g as measured in o-chlorophenol at 25°C and contains not more than 0.2% by weight of nonionic organic halogen.

The above-illustrated polyhydroxypolyether may be prepared, for example, by a process as will be mentioned below.

That is, this polyhydroxypolyether can be prepared by reacting a diglycidyl ether of an aromatic diol represented by the following formula [B]:

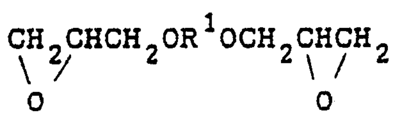 ... [B]

wherein $R^1$ represents a divalent aromatic hydrocarbon group consisting essentially of a p-phenylene group, with an aromatic diol represented by the following formula [C]:

$HO - R^1 - OH$ [C]

wherein $R^1$ represents the same group as defined in the formula [B], in the presence of at least one catalyst selected from the group consisting of tertiary amines, quaternary ammonium compounds, tertiary phosphines and quaternary phosphonium compounds.

The content of nonionic organic halogen in the polyhydroxypolyether obtained by using the above-mentioned starting materials may be reduced to not more than 0.2% by weight, for example, by using a diglycidyl ether of an aromatic diol having a high purity. Such diglycidyl ether as having a high purity can be obtained, for example, by the known method wherein the diglycidyl ether of an aromatic diol represented by the above-mentioned formula [B] which is obtained by reaction of an aromatic diol with epihalohydrin is purified by means of extraction or filtration.

In the above-mentioned formula [A], $R^1$ is a divalent aromatic hydrocarbon group consisting essentially of a p-phenylene group, and specifically $R^1$ represents a p-phenylene group or a mixture of the p-phenylene group and a divalent aromatic hydrocarbon group other than the p-phenylene group. However, when $R^1$ represents a mixture of a p-phenylene group and a divalent aromatic hydrocarbon group other than the p-phenylene group, the other divalent aromatic hydrocarbon group may be desirably present in an amount of less than 50 mol%, preferably less than 40 mol% based on the p-phenylene group. Examples of such divalent aromatic hydrocarbon groups other than the p-phenylene group are those as mentioned below.

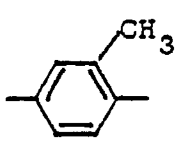 , 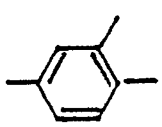 , 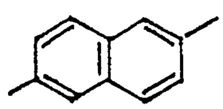 , 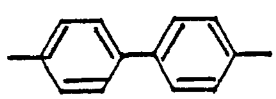 ,

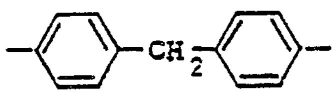 . 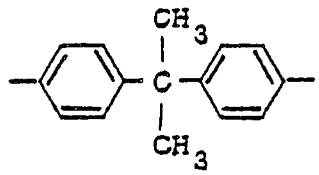 . 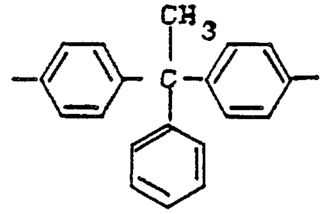

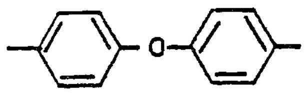 , 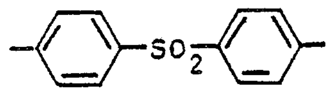

Examples of the diglycidyl ethers of aromatic diols represented by the formula [B], when $R^1$ in the formula [B] is the group as exemplified above, are illustrated herein after.

when $R^1$ in the formula [B] is a p-phenylene group, the diglycidyl ether of an aromatic diol may be represented by the following formula.

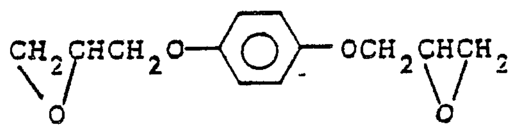

Examples of the diglycidyl ether of an aromatic diol which may be used together with the diglycidyl ether of hydroquinone mentioned above are such compounds as listed below.

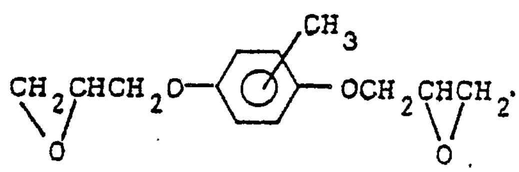

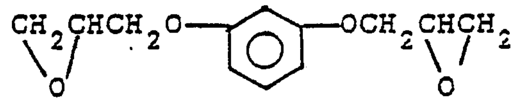

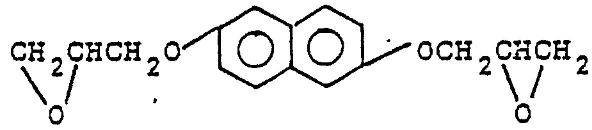

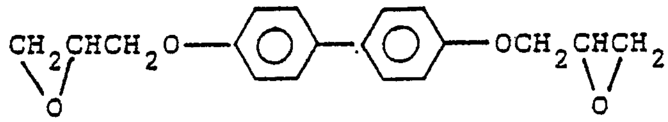

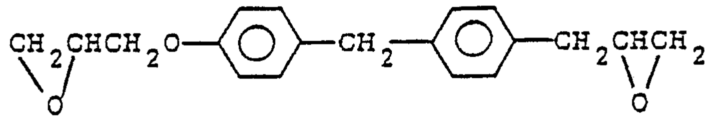

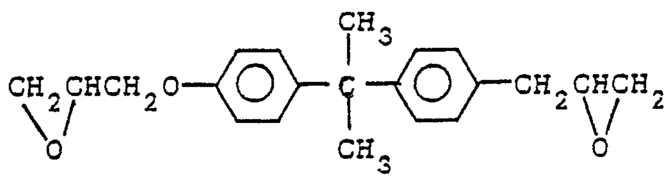

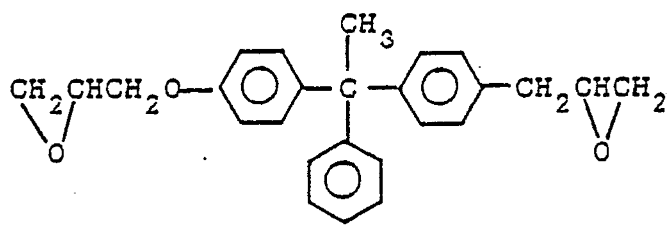

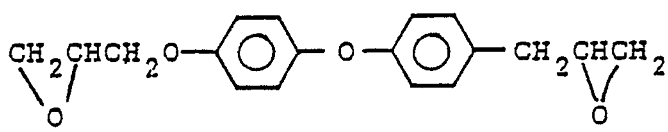

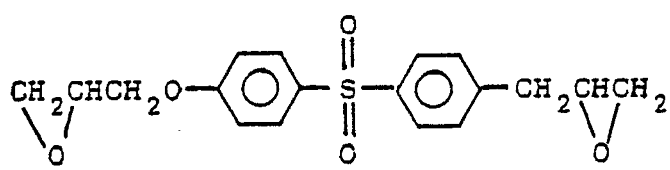

The diglycidyl ether represented by the above-mentioned formula [A] may be prepared, for example, by reacting an aromatic diol represented by the following formula (I):

HO - Ar - OH (I)

wherein Ar is a p-phenylene group, with an epihalohydrin represented by the following formula (II):

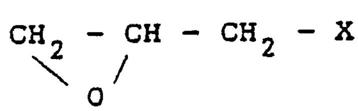 ... (II)

wherein X is a halogen atom such as fluorine, chlorine or bromine, in the presence of a basic compound.

The entire of the aromatic diol represented by the formula (I) used in the above-mentioned reaction is most preferably hydroquinone, however, an aromatic hydrocarbon compound capable of deriving therefrom an aromatic hydrocarbon group other than a p-phenylene group may also be used in the present invention. Examples of the aromatic hydrocarbon compound capable of deriving therefrom an aromatic hydrocarbon

group other than a p-phenylene group are resorcinol, methyl hydroquinone, p,p′-biphenol, bisphenol A, bisphenol F, bisphenol CP, bisphenol L, bisphenol V, 4,4′-dihydroxyphenyl ether and bisphenol S.

The epihalohydrin represented by the formula (II) used in the above-mentioned reaction includes, for example, epifluorhydrin, epichlorohydrin and epibromohydrin.

The polyhydroxypolyethers of the present invention may be prepared by reacting the diglycidyl ether [B] of an aromatic diol obtained in the manner mentioned above with the aromatic diol [C] in the presence of at least one catalyst selected from the group consisting of tertiary amine, quaternary ammonium compounds, tertiary phosphines and quaternary phosphonium compounds.

The diglycidyl ether [B] of an aromatic diol used in this reaction may be less than or in excess of the aromatic diol [C] used. That is, when the digylcidyl ether [B] is less than the equivalent weight of the aromatic diol [C], this digylcidyl ether [B] is used usually in the proportion of 0.75-0.95 moles, preferably 0.80-0.95 moles, more prepferably 0.83-0.95 moles per mole of the aromatic diol used. On the one hand, when the diglycidyl ether [B] is used in excess of the equivalent weight of the aromatic diol [C], the diglycidyl ether [B] is used usually in the proportion of 1.05-1.25 moles, preferably 1.05-1.20 moles, preferably 1.05-1.18 moles per mole of the aromatic diol [C] used.

Examples of basic catalysts used in the above-mentioned reaction include tertiary amine compounds, quaternary ammonium compounds tertiary phosphine compounds and quaternary phosphonium compounds.

The tertiary amine compounds used as the catalysts mentioned above includes, for example, triethylamine, tri-n-propylamine, tri-isopropylamine, tri-n-butylamine, tri-secondary-butylamine, tri-n-hexylamine, dimethylbenzylamine, diethylbenzylamine and tribenzylamine. The quaternary ammonium compounds also include, for example, tetramethyl ammonium hydroxide, tetraethyl ammonium hydroxide, tetra-n-propyl ammonium hydroxide, tetraisopropyl ammonium hydroxide, tetra-n-butyl ammonium hydroxide, trimethyl benzyl ammonium hydroxide and triethyl benzyl ammonium hydroxide. The tertiary phosphine compounds includes, for example, triethylphosphine, tri-n-butylphosphine, tripheylphosphine and trinonylphenylphosphine. The quaternary phosphonium compounds include, for example, quaternary phosphonium hydroxide compounds such as tetramethyl phosphonium hydroxide. Such catalysts mentioned above may be used either singly or in combination.

The proportion of the basic catalyst used in the above-mentioned reaction is usually 0.001-10 moles, preferably 0.005-5 moles, more preferably 0.01-1 mole based on mole of the aromatic diol represented by the above-mentioned formula [C].

In the process mentioned above, the reaction may be carried out, when the diglycidyl ether of the aromatic diol is used in excess of the aromatic diol, in the presence of a compound having one phenolic hydroxyl group in the following manner in order to stabilize the ends of polyhydroxypolyether obtained and an end product. In that case, examples of the usable compounds having one phenolic hydroxyl group are phenol, o-cresol, m-cresol, p-cresol, p-t-butylphenol, p-phenylphenol, p-cumylphenol and p-methoxyphenol, etc. which are used either singly or in combination. These compounds having phenolic hydroxy group are used usually in an amount of less than 0.25 mole, preferably less than 0.20 mole, more preferably 0.18 mole based on mole of the aromatic diol.

In this process, there may be used, as reaction solvents, solvents inert to the starting materials used and to the end product in order to control viscosity of the reaction liquid in the reaction system and permit the reaction to proceed smoothly.

Examples of the solvents used as reaction solvents in the above case include saturated hydrocarbons such as n-decane and decahydronaphthalene; aromatic hydrocarbons such as benzene, toluene, xylene, trimethylbenzene, tetramethylebenzene, ethylbenzene, cumene, n-butylbenzene, tetrahydronaphthalene and naphthalene; ketones such as methyl ethyl ketone, methyl isobutyl ketone, 2-hexanone, cyclohexanone and acetophenone; amides such as N,N-dimethylacetamide and N-methyl-2-pyrrolidone; and sulfoxides such as dimethyl sulfoxide. These reaction solvents are used usually in an amount, based on one part by weight of the resulting polymer, of less than 3 parts by weight, and preferably less than 2 parts by weight, more preferably less than 1 part by weight.

The above-mentioned reaction solvents may be separated from the reaction product, i.e. polyhydroxypolyether, usually by removing said solvents from the reaction system under reduced pressure immediately before the completion of the reaction, or by subjecting the polymerized product after the completion of the reaction to reprecipitation.

In the reaction mentioned above, the reaction temperature employed is usually 70-300°C, preferably 80-270°C. This reaction may be carried out usually at atmospheric pressure or under pressure. When the reaction solvents are used as aforesaid, however, the reaction may also be carried out under reduced pressure conditions while removing the reaction solvents from the system. This reaction usually terminates

with stirring in 0.5-10 hours.

By carrying out the reaction in the manner now described, the first polyhydroxypolyether of the presented by the following formula [A] of the present invention may be prepared:

$\{CH_2\underset{OH}{CH}CH_2O-R^1\}_n$ [A]

wherein $R^1$ represents a divalent aromatic hydrocarbon group consisting essentially of a p-phenylene group, and n is a positive integer which is so decided that an intrinsic viscosity [$\eta$], as measured in o-chlorophenol at 25°C, of the resulting polyhydroxypolyether is in the range of from 0.10 dl/g to less than 0.3 dl/g, preferably 0.13 dl/g to less than 0.3 dl/g, more preferably 0.15 dl/g to less than 0.3 dl/g. When this intrinsic viscosity [$\eta$] is less than 0.10 dl/g, it becomes difficult to continuously draw the resulting polyhydroxypolyether in the form of a strand from the apparatus for preparing the same and also it becomes difficult to continuously cut the resulting polyhydroxypolyether with a cutter into chips, thus the operability decreases.

The polyhydroxypolyether of the present invention is low in the chlorine content, and they contain not more than 0.2% by weight, preferably not more than 0.15% by weight of nonionic organic halogen. Polyhydroxypolyether having such a low nonionic organic halogen content cannot be prepared by the prior art processes, but can be prepared by the processes of the present invention wherein the diglycidyl ether of the aromatic diol having a low nonionic organic halogen content is used as the aforementioned glycidyl ether of the aromatic diol.

By nonionic organic halogen as used herein is meant an organic halogen atom present as a compound by virtue of a covalent bond in the polyhydroxypolyether. The nonionic organic halogen content can be determined by subtracting the content of inorganic halogen (free ionic halogen) determined by the silver nitrate titration method from the total halogen content in the polyhydroxypolyether determined, for example, by the burning flask method (Schöniger method).

Depending upon the starting materials used in the preparation of the first polyhydroxypolyether of the present invention, the terminals of the polyhydroxypolyether may be hydroquinone units

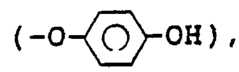

other aromatic diol units (for example,

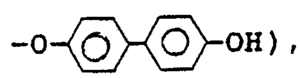

glycerol units ($-OCH_2CH(OH)CH_2OH$) or epoxy group

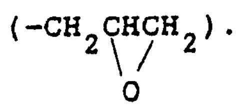

The terminal hydroxy group (-OH) or epoxy group

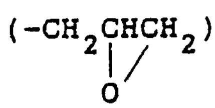

may be converted by the esterification or etherification method mentioned later into, for example, a carboxylic acid ester group such as an acetate ester ($-OCOCH_3$) or an ether group such as an ethoxy group.

The first polyhydroxypolyether of the present invention has a glass transition temperature of 30-150°C.

The polyhydroxypolyether of the present invention has a molecular distribution, defined by the ratio of its weight average molecular weight ( $\overline{M}w$) to its number average molecular weight ( $\overline{M}n$), $\overline{M}w/\overline{M}n$, of from 1.5 to 10.

The first polyhydroxypolyether of the present invention has a substantially linear structure.

The term substantially linear as used herein means that the polyhydroxypolyether has a chain structure

having substantially no branched chain and does not substantially contain a gel-like crosslinked structure (network structure). Concretely speaking, this term means that when 0.5 g of the polyhydroxypolyether having a chain structure is dissolved in 100 ml of 0- chlorophenol at 25°C, no insoluble components are not substantially present in the solution.

The present invention further provides, in addition to such polyhydroxypolyether as mentioned above, polyhydroxypolyether (the second polyhydroxypolyether) as will be described hereinafter.

The second polyhydroxypolyether referred to above is a substantially linear polyhydroxypolyether represented by the following formula (a) having an intrinsic viscosity [η], as measured in o-chlorophenol at 25°C, in the specific range and terminated by specific groups.

$Ar^1\text{-}(O\text{-}CH_2\text{-}\underset{OH}{CH}\text{-}CH_2\text{-}O\text{-}Ar)_n\text{-}O\text{-}CH_2\text{-}\underset{OH}{CH}\text{-}CH_2\text{-}O\text{-}Ar^2$ - (a)

wherein $Ar^1$ and $Ar^2$ independently represent HO-Ar or a monovalent aromatic hydrocarbon group having 6-15 carbon atoms other than HO-Ar wherein Ar represent a p-phenylene group, and n represents a positive integer.

The polyhydroxypolyether as illustrated above has an intrinsic viscosity [η] of 0.3-2 dl/g as measured in o-chlorophenol at 25°C.

Such polyhydroxypolyether as mentioned above may be prepared in the following manner.

First, the hydroxyether compound represented by the following formula (a') is prepared. Subsequently, the compound thus prepared is reacted in the presence of specific catalysts with an aromatic monoalcohol having 6-15 carbon atoms to prepare the desired polyhydroxypolyether of the formula (a).

$Aro^1\text{-}(O\text{-}\underset{OH}{CH}{}_2\text{-}CH\text{-}CH_2\text{-}O\text{-}Ar)_m\text{-}O\text{-}CH_2\text{-}\underset{OH}{CH}\text{-}CH_2\text{-}O\text{-}Aro^2$ (a')

wherein m is any of positive integers, usually 10-600, $Aro^1$ and $Aro^2$, independently, are selected from a glycidyl group and HO-Ar wherein Ar is a phenylene group.

In the present invention, the hydroxyether compound of the formula (a') in which both $Aro^1$ and $Aro^2$ are glycidyl groups may be used effectively.

The hydroxyether compound represented by the formula (a') may be synthesized, for example, by the following process.

First, a mononuclear aromatic diol represented by the following formula (I):

HO -Ar - OH (I)

wherein Ar is a p-phenylene group, is reacted with epihalohydrin represented by the following formula (II):

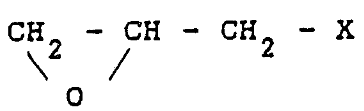 ... (II)

wherein X is halogen atom such as fluorine, chlorine and bromine, in the presence of alkali metal hydroxide compounds to obtain hydroquinone diglycidyl ether or hydroquinone diglycidyl ether oligomer represented by the following formula (III):

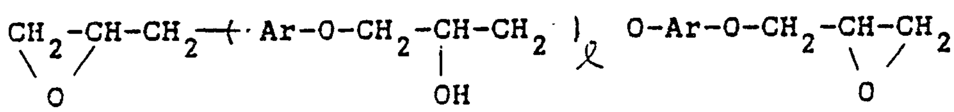 ... (III)

wherein ℓ is 0 or any one selected from positive integers, usually 0-20, and Ar is a p-phenylene group.

The mononuclear aromatic diol of the formula (I) used in the above reaction is preferably hydroquinone, however, this hydroquinone may have a substituent such as a lower alkyl group on the aromatic ring of the hydroquinone. This mononuclear aromatic diol of the formula (I) used is most preferably hydroquinone in its entirety, however, other mononuclear aromatic diols such as resocinol may also be used in combination therewith in such a range that no characteristics of the resulting polyhydroxypolyether are marred, that is, in an amount of not more than 5% by weight based on the total weight of the hydroquinone used.

The epihalohydrin of the formula (II) used in the reaction includes, for example, epifluorohydrin, epichlorohydrin and epibromohydrin. Particularly preferred are epichlorohydrin and epibromohydrin used either singly or in combination.

Examples of the alkali metal hydroxide compounds used in the above reaction include lithium hydroxide, sodium hydroxide, potassium hydroxide, etc. Preferred are sodium hydroxide and potassium

hydroxide used either singly or in combination. These alkali metal hydroxide compounds are usually solids, and they may be added to the reaction system, either in the form of solid or aqueous solution.

The proportion of the epihalohydrin of the formula (II) used in the synthesis of the diglycidyl ether or diglycidyl ether oligomer of the formula (III) is usually 1-3 moles, preferably 1.1-2.8 moles per mole of the mononuclear aromatic diol of the formula (I) used. The proportion of the alkali metal hydroxide compound used is usually 1-3 moles, preferably 1.1-2.8 moles per mole of the mononuclear aromatic diol of the formula (I) used.

The reaction conditions under which the diglycidyl ether or diglycidyl ether oligomer of the formula (III) is prepared are not particularly limited so long as the conditions are such that the mononuclear aromatic diol of the formula (I) can react with the epihalohydrin of the formula (II). For example, the diglycidyl ether or diglycidyl ether oligomer of the formula (III) may be prepared by adding the alkali metal hydroxide to a mixture of the mononuclear aromatic diol of the formula (I) and the epihalohydrin of the formula (II) and then allowing the resulting mixture to undergo reaction with stirring at 60-140°C, preferably 70-130°C for 1-10 hours, preferably 2-8 hours.

In the above-mentioned process, solvents inert to the starting materials used and the end product can also be used as reaction solvents in order that a viscosity of the reaction liquid in the reaction system is controlled so as to facilitate the progress of the reaction and, at the same time, halogenated alkali metal such as sodium chloride as a by-product resulted from the reaction is easily separated from the end product, i.e. the diglycidyl ether or its oligomer of the formula (III).

Useful reaction solvents used in the above reaction include saturated hydrocarbons, aromatic hydrocarbons, ketones, amides and sulfoxide. The diglycidyl ether of the formula (III) or its oligomer, i.e. the end product of the above-mentioned reaction, can be obtained in high yields by using the ketones as the reaction solvents, because the end product is highly soluble in the ketones. When these reaction solvents are used, they are used usually in an amount of not more than 3 parts by weight, preferably not more than 2 parts by weight, more preferably not more than 1 part by weight based on 1 part by weight of the diglycidyl ether of the formula (III) or its oligomer.

After the completion of the reaction of the mononuclear aromatic diol of the formula (I) with the epihalohydrin of the formula (II) in the manner mentioned above, halogenated alkali metals such as sodium chloride resulted as by-products from the reaction are separated therefrom. Separation of the halogenated alkali metals is carried out by the known methods such as separatory funnel or filtration. When the epihalohydrin is used in excess in the above-mentioned reaction, unreaction epihalohydrin is removed by the procedure such as distillation. When the reaction solvents are used in the reaction mentioned above, the solvents are removed from the reaction product by the procedure such as distillation. After removal of the halogenated alkali metals, unreacted epihalohydrin and reaction solvents from the reaction product, there is obtained the diglycidyl ether of the following formula (III) or its oligomer.

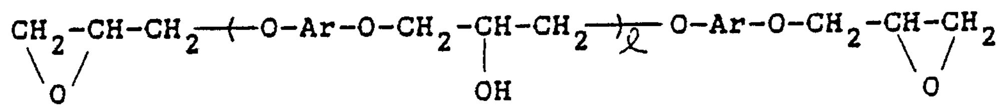

... (III)

wherein Ar is a p-phenylene group, and $\ell$ is 0 or any one selected from positive integers and the value of $\ell$ is determined by the proportions of the mononuclear aromatic diol of the formula (I) and the epihalohydrin of the formula (II) used as the starting materials. That is, the larger is the proportion of the epihalohydrin of the formula (II) to 1 mole of the mononuclear aromatic diol of the formula (I), the smaller is the value of $\ell$. When the proportion of the epihalohydrin of the formula (II) used exceeds 2 moles per 1 mole of the mononuclear aromatic diol of the formula (I) used, there can be obtained the hydroquinone diglycidyl ether of the formula (III) in which $\ell$ is substantially 0. In the process for preparing the polyhydroxypolyether of the present invention, the value of $\ell$ in the above-mentioned formula (III) is generally smaller than the value of m in the intermediate represented by the formula ($a^1$).

The diglycidyl ether of the formula (III) or its oligomer separated in the manner mentioned above may contains therein a small amount of an unaltered mononuclear aromatic diol of the formula (I), an unaltered epihalohydrin of the formula (II) or a monoglycidyl ether which is a reaction product of said mononuclear aromatic diol with said epihalohydrin, and no practical decrease in reactivity is observed in the subsequent step where the diglycidyl ether of the formula (III) or its oligomer is used, even when said glycidyl ether is contaminated with small amounts of such compounds as mentioned above.

Further, the content of nonionic organic halogen present in the second polyhydroxypolyether of the present invention can be reduced to not more than 0.2% by weight, for example, by purifying the diglycidyl ether of the formula (III) or its oligomer obtained in the manner mentioned above and using the same in the subsequent step.

The hydroxyether compound represented by the formula ($a^1$) used for the preparation of the polyhydroxypolyether of the present invention may be prepared by the diglycidyl ether of the formula (III) or its oligomer obtained in the manner mentioned above is further reacted in the presence of catalysts, for example, basic catalyst, with the mononuclear aromatic diol of the formula (I). The mononuclear aromatic diol of the formula (I) used in this reaction is the mononuclear aromatic diol used in the preparation of the diglycidyl ether of the formula (III) or its oligomer, and usually hydroquinone is used.

The diglycidyl ether of the formula (III) or its oligomer may also be used separately after isolating the diglycidyl ether from the oligomer, or may also be used as a mixture comprising said diglycidyl ether and its oligomer.

Examples of the basic catalysts used in the above-mentioned reaction include tertiary amine, quaternary ammonium compounds, tertiary phosphine compounds and quaternary phosphonium compounds.

The above-mentioned compounds used as the basic catalysts are concretely such compounds as exemplified and used in the preparation of the first polyhydroxypolyether of the present invention, and the compounds may be used either singly or in combination.

The proportion of the mononuclear aromatic diol of the formula (I) used in the above-mentioned reaction is usually 0.5-1.5 moles, preferably 0.6-1.4 moles, more preferably 0.7-1.3 moles based on 1 mole of the diglycidyl ether of the formula (III). In that case, the use of hydroquinone in an amount of less than the equimolecular amount of the hydroquinone diglycidyl ether or its oligomer is preferable in general, because the proportion of the monovalent aromatic hydrocarbon group in the terminal group of the hydroquinone polyhydroxypolyether prepared by the process of the present invention becomes large and reactivity of the terminal group can be maintained at a lower level.

The proportion of the basic catalysts used in the above-mentioned reaction is usually 0.001-10 mol%, preferably 0.005-5 mol%, more preferably 0.01-1 mol% based on the diglycidyl ether of the formula (III) and its oligomer.

The reaction of the diglycidyl ether of the formula (III) or its oligomer with the mononuclear aromatic diol of the formula (I) may be carried out in the absence of reaction solvents, however, the reaction solvents may also be used in order to facilitate a smooth progress of the reaction. In that case, the reaction solvents used are the reaction solvents exemplified and used in the preparation of the diglycidyl ether of the formula (III). The amount of the reaction solvents used in this case is usually not more than 3 parts by weight, preferably not more than 2 parts by weight, more preferably not more than 1 part by weight based on 1 part by weight of the resulting hydroxyether compound of the formula ($a^1$).

The temperature at which the reaction for preparing the hydroxyether compound of the formula ($a^1$) is carried out may suitably decided. For instance, when the reaction is carried out in the absence of reaction solvent, the reaction temperature employed is usually 90-180°C, and when the reaction is carried out in the presence of reaction solvents, the reaction temperature employed is usually 80-250°C, preferably 100-220°C. This reaction may be carried out under any pressure conditions, such as ordinary pressure, under pressure or reduced pressure. Particularly, in cases where the reaction solvents are used, when the reaction pressure is maintained at a constant level, the reaction temperature employed can be kept at a boiling point of the reaction solvent used at that pressure, and hence fluctuation of the reaction temperature can be prevented advantageously. The reaction time used under such reaction conditions is usually 0.5-10 hours.

After the reaction carried out in this manner is over, the reaction solvents and unaltered starting materials are removed by distillation or the like means, whereby the hydroxyether compound represented by the following formula ($a^1$) is obtained as a liquid or solid.

$$Aro^1\left(O\text{-}CH_2\text{-}\underset{OH}{\underset{|}{C}}H\text{-}CH_2\text{-}O\text{-}Ar\right)_{m} O\text{-}CH_2\text{-}\underset{OH}{\underset{|}{C}}H\text{-}CH_2\text{-}O\text{-}Aro^2 \qquad (a^1)$$

wherein m is a positive integer, usually 10-600, and $Aro^1$ and $Aro^2$, which may be the same or different, are individually a group selected from among a glycidyl group and HO-Ar in which Ar is a p-phenylene group. Such hydroxyether compound as mentioned above has a substantially linear structure.

In the hydroxyether compound of the formula ($a^1$) thus obtained, a part of the structural unit $-O-CH_2-CH(OH)-O-Ar-$ may have a halogen atom liberated from the starting epihalohydrin of the formula (II), a 1.2 combined structure formed by $\beta$-cleavage and combination of the glycidyl group of said epihalohydrin or a branched structure formed by reaction of the glycidyl group with the hydroxyl group in the molecule, if these are trifle in degree.

The terminal groups $Aro^1$ and $Aro^2$ of the hydroxyether compound thus obtained are individually

selected from the glycidyl group and HO-Ar. It should be pointed out, however, that the product obtained by the reaction mentioned above does contain hydroxyether compounds of the formula ($a^1$) wherein at least one of $Aro^1$ and $Aro^2$ is still glycidyl group.

That is, when the hydroquinone diglycidyl ether or its oligomer (III) is used in an amount larger than that of the mononuclear aromatic diol of the formula (I) such as hydroquinone, the ends of the resulting hydroxyether compound are difficult to become OH groups and are liable to become aromatic hydrocarbon groups derived from the aromatic monovalent alcohol with which the resultant hydroxyether reacts in the subsequent step. Further, in the end-sealing treatment of the subsequent step, the glycidyl groups react with a monovalent aromatic alcohol to obtain the polyhydroxypolyether containing a larger proportion of a monovalent aromatic hydrocarbon group as the terminal group. Such polyhydroxypolyether as obtained above is preferable in that the ends thereof are low in reactivity, when viewed in a general sense. In either case, no polyhydroxypolyether free from the glycidyl group is obtained when the reactants are used in the manner as mentioned above.

When such hydroxyether compounds as mentioned above are blended, for example, with polyethylene terephthalate, molding stability of the resulting polymer decreases by virtue of the reaction of the glycidyl group remaining in the hydroxyether compound, with the result that characteristics, such as gas barrier properties, etc. of the molded article obtained thereby decrease.

Accordingly, in the process for preparing polyhydroxyethers of the present invention, the hydroxyether compound of the formula ($a^1$) obtained by the above-mentioned reaction are reacted with an aromatic monoalcohol of 6-15 carbon atoms. By virtue of the reaction as mentioned above, all the terminal glycidyl groups become aromatic hydrocarbon groups, and the ends of the resulting polyhydroxyether compound are completely blockaded.

The aromatic monoalcohol which reacts with the hydroxyether compound of the formula ($a^1$) to form the polyhydroxypolyether of the present invention represented by the formula (a) is a compound having 6-15, preferably 6-12 carbon atoms and one OH group in the molecule. The OH group in this aromatic monoalcohol may attach to the aromatic ring either directly or through an alkylene group or the like. This OH group reacts with the glycidyl group remaining at the terminal of the hydroxyether compound of the formula ($a^1$) mentioned above, and accordingly the aromatic monoalcohol of 6-15 carbon atoms used in the present invention has no active group capable of reacting with the glycidyl group, except for the OH-group mentioned above.

Concrete examples of such aromatic monoalcohol of 6-15 carbon atoms are phenol, cresol, xylenol, ethyl phenol, diethyl phenol, propyl phenol, isopropyl phenol, dipropyl phenol, diisopropyl phenol, butyl phenol, isobutyl phenol, tertiary butyl phenol, dibutyl phenol, diisobutyl phenol, ditertiary butyl phenol, pentyl phenol, hexyl phenol, octyl phenol, methylethyl phenol, methylisobutyl phenol, methyl tertiary butyl phenol, phenyl phenol, tolyl phenol, cumyl phenol, methoxy phenol, ethoxy phenol, propioxy phenol, 4′-hydroxyacetophenone, 3′-hydroxyacetophenone, 2′-hydroxyacetophenone, ethyl-4-hydroxyphenyl ketone, propyl-4-hydroxyphenyl ketone, α-naphthol, β-naphthol, etc. Unaltered aromatic monoalcohol is usually removed by distillation operation after completion of the reaction. Taking into account the removal efficiency, therefore, the aromatic monoalcohol used in the present invention includes preferably the compounds having a relatively low boiling point, and in this case, the compounds having a boiling point of not more than 250°C are usually used. Of the aromatic monoalcohols having such boiling point as mentioned above, preferred examples of compounds are phenol, cresol, ethylphenol, propyl phenol, isopropyl phenol, methoxy phenol and ethoxy phenol. In the present invention, however, unaltered aromatic monoalcohol can also be removed by subjecting the resulting polyhydroxypolyether of the formula (a) such treatment as re-precipitation or the like, without relying on the distillation operation as mentioned above. When this treatment is adopted, a difference in advantage between the use of relatively low boiling aromatic monoalcohols and that of other aromatic monoalcohols is small.

The reaction of the hydroxyether compound of the above-mentioned formula ($a^1$) with the aromatic monoalcohol is carried out in the presence of specific catalysts.

The catalyst used in the present invention includes at least one compound selected from among tertiary amine compounds, quaternary ammonium compounds, tertiary phosphine compounds and quaternary phosphonium compounds. The catalysts used in this reaction are those placed in the same category as the catalysts used in the preparation of the hydroxyether compound of the formula ($a^1$) by the reaction of the glycidyl ether of the formula (III) or its oligomer with the mononuclear aromatic diol of the formula (I) as mentioned previously.

Accordingly, concrete examples of the catalysts used in the preparation of polyhydroxypolyethers of the formula (a) are the catalyst compounds exemplified and used in the process for the preparation of the hydroxyether compound of the formula ($a^1$) as mentioned previously. As the catalysts used in this invention,

there may be used the catalysts which remained, as they were, in the hydroxyether compound of the formula ($a^1$) as prepared, and which may further be replenished with fresh catalysts. Alternatively, after the hydroxyether compound of the formula ($a^1$) has been prepared, the catalysts used are removed therefrom, and fresh catalysts may be added. In this case, the catalysts used may be the same as or different from those used in the preparation of the hydroxyether compound of the formula ($a^1$).

In the present invention, the aromatic monoalcohol of 6-15 carbon atoms is used usually in an amount, based on mole of the hydroxyether compound of the formula ($a^1$), of 0.1-10 moles, preferably 0.5-5 moles and more preferably 0.6-4 moles.

The catalysts are used usually in an amount, based on the total sum of mononuclear aromatic diol units contained in the hydroxyether compound of the formula ($a^1$), of 0.001-10 mol%, preferably 0.005-5 mol% and more preferably 0.01-1 mol%.

In the present invention, the reaction of the hydroxyether compound of the formula ($a^1$) with the aromatic monoalcohol is carried out preferably in the presence of a reaction solvent in order to assure a smooth progress of the reaction by controlling a viscosity of the reaction system, though the reaction may be carried out in the absence of the reaction solvent. In the cases where the reaction solvents are used, the solvents are such compounds as placed in the same category as the reaction solvents used in the preparation of the hydroxyether compound of the formula ($a^1$). That is, the reaction solvents used include saturated hydrocarbons, ketones, amides, sulfoxides, etc. as exemplified by showing concrete examples thereof previously. Of these reaction solvents, ketones are particularly preferred when solubilities of the starting hydroxyether compound of the formula ($a^1$) and the reaction product polyhydroxypolyether are taken into consideration. Accordingly, in the present invention, when reaction solvents are used, the reaction solvents which were used in the preparation of the hydroxyether compound of the formula ($a^1$) may be used, as they were, or after removing a part or whole of said reaction solvents, fresh reaction solvents may be added to the reaction system.

In the present invention, when the use of reaction solvents is involved, the reaction solvents are used usually in the proportion, based on 1 part by weight of the hydroxyether compound of the formula ($a^1$), of not more than 3 parts by weight, preferably not more than 2 parts by weight and more preferably not more than 1 part by weight.

In the present invention, the reaction of the hydroxyether compound of the formula ($a^1$) with the aromatic monoalcohol of 6-15 carbon atoms is carried out usually at a temperature of usually 100-200°C, preferably 110-190°C and more preferably 120-180°C when the reaction is carried out in the absence of solvents, and at a temperature of usually 100-280°C, preferably 110-260°C and more preferably 120-250°C when the reaction is carried out in the presence of solvents. This reaction may be carried out at ordinary pressure, under pressure or reduced pressure. The reaction is completed usually in 0.5-5 hours with stirring.

By carrying out the reaction in this manner, the polyhydroxypolyether of the following formula is formed.

$$Ar^1\{O\text{-}CH_2\text{-}\underset{OH}{\underset{|}{C}H}\text{-}CH_2\text{-}O\text{-}Ar\}_n\text{-}O\text{-}CH_2\text{-}\underset{OH}{\underset{|}{C}H}\text{-}CH_2\text{-}O\text{-}Ar^2 \quad \text{(a)}$$

wherein $Ar^1$ and $Ar^2$ independently represent HO-Ar or a monovalent aromatic hydrocarbon group of 6-15 carbon atoms other than HO-Ar, Ar represents a p-phenylene group, and n represents a positive integer and usually shows a value approximate to the value of m in the aforesaid formula ($a^1$).

The polyhydroxypolyether of the formula (a) thus formed may be obtained after removal therefrom of unaltered aromatic monoalcohol and the reaction solvent, if it is used, by distillation or other known procedures such as re-precipitation and the like.

After removing the reaction solvent and unaltered aromatic monoalcohol in this manner, pellets of the polyhydroxypolyether of the formula (a) as obtained can be prepared by extruding said polyhydroxypolyether in a molten state into a stand-like product, followed by cooling and cutting in the method, per se, known.

The polyhydroxypolyether thus obtained has an intrinsic viscosity [$\eta$], as measured in o-chlorophenol at 25°C, of 0.3-2 dl/g, and this intrinsic viscosity [$\eta$] can be adjusted to 0.4-1.8 dl/g by suitably controlling the conditions under which said polyhydroxypolyether is prepared. The polyhydroxypolyether having such intrinsic viscosity as mentioned above has a number average molecular weight ( $\overline{M}n$) of 2000-100000, preferably 3000- 80000. Molded or stretched molded articles comprising the polyhydroxypolyether having an intrinsic viscosity [$\eta$] of less than 0.3 dl/g tend to decrease in mechanical strength.

The polyhydroxypolyether of the present invention has usually a glass transition temperature of 40-80°C, preferably 50-70°C.

In the polyhydroxypolyether of the present invention, a value showing a molecular-weight distribution as

defined by a ratio ( $\overline{M}w$/ $\overline{M}n$) of a weight average molecular weight ( $\overline{M}w$) to a number average molecular weight ( $\overline{M}n$) is usually in the range of from 1.5 to 10.

The polyhydroxypolyether of the present invention has a substantially linear structure.

The term "substantially linear" as used herein is meant that the polyhydroxypolyether has a chain structure having substantially no branched chain, and contains substantially no gel-like crosslinked structure (network structure). Concretely speaking, this means that when 0.5 g of the polyhydroxypolyether having a linear structure is dissolved in 100 ml of o-chlorophenol at 25°C, no insoluble components are found substantially in the solution.

The terminal of the polyhydroxypolyether of the present invention is a p-hydroxyphenoxy group or an aromatic hydrocarbon group of 6-15 carbon atoms. A ratio of the terminal p-hydroxyphenoxy group to the terminal aromatic hydrocarbon group of 6-15 carbon atoms present in the polyhydroxypolyether of the present invention is equal to that of the p-hydroxyphenoxy group to the glycidyl group present in the hydroxyether compound of the formula ($a^1$) which is used in the preparation of the polyhydroxypolyether of the present invention. That is, the polyhydroxypolyether of the present invention does not substantially the glycidyl group, because all the glycidyl groups contained in the hydroxyether compound of the formula ($a^1$) are converted into hydrocarbon groups by reaction with aromatic monoalcohols.

The third polyhydroxypolyether of the present invention is illustrated hereinafter.

This polyhydroxypolyether contains a structural unit represented by the following formula (a-1) and a structural unit represented by the following formula (b-1), the molar ratio of said structural unit (a-1) to said structural unit (b-1) being in a specific range, and both ends of a polymer constituted by said structural units (a-1) and (b-1) being independently blockaded by specific terminal groups, respectively.

$-O-CH_2-CH(OH)-CH_2-O-Ar^a-$ (a-1)

wherein $Ar^a$ represents a p-phenylene group and/or a m-phenylene group, and the content of the structural unit having a o-phenylene group is higher than that of the structural unit having a m-phenylene group.

$-O-CH_2-CH(OH)-CH_2-O-Ar^b-$ (b-1)

wherein $Ar^b$ represents at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene.

Both terminal groups $Ar^1$ and $Ar^2$ of the polymer constituted by the above-mentioned structural units (a-1) and (b-1) are independently selected for the group consisting of monovalent aromatic hydrocarbon groups of 6-15 carbon atoms, $HO-Ar^a$ and $HO-Ar^b$ wherein $Ar^a$ represents a p-phenylene group and/or a m-phenylene group, and $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene.

The polyhydroxypolyether of the present invention is substantially linear and has an intrinsic viscosity of 0.3-2 dl/g.

Accordingly, the polyhydroxypolyether of the present invention may be represented, for example, by the following formula (a):

$$Ar^1 \!-\!\!\left(O-CH_2-CH(OH)-CH_2-O-Ar^a\right)_p\!-\!\!\left(O-CH_2-CH(OH)-CH_2-O-Ar^b\right)_q\!-O-CH_2-CH(OH)-CH_2-O-Ar^2 \quad \ldots \text{(a)}$$

wherein $Ar^1$, $Ar^2$, $Ar^a$ and $Ar^b$ are as defined above, the ratio of p to q is from 50:50 to 95:5, and a value of (p+q) is usually from 10 to 600.

The third polyhydroxypolyether of the present invention is further illustrated below with reference to the process for the preparation thereof.

Basically, the third polyhydroxypolyether of the present invention may be prepared by first preparing a substantially linear hydroxyether compound containing a structural unit represented by the following formula (a-1):

$-O-CH_2-CH(OH)-CH_2-O-Ar^a-$ (a-1)

wherein $Ar^a$ is as defined above, and a structural unit represented by the following formula (b-1):

$-O-CH_2-CH(OH)-CH_2-O-Ar^b-$ (b-1)

wherein $Ar^b$is as defined above, and having terminal groups $Aro^1$ and $Aro^2$ independently selected from the

group consisting of a glycidyl group, HO-$Ar^a$ and HO-$Ar^b$ wherein $Ar^a$ and $Ar^b$ are as defined above, and then reacting the resulting hydroxyether compound in the presence of specific catalysts with an aromatic monoalcohol of 6-15 carbon atoms. This hydroxyether compound contains the structural unit (a-1) and the structural unit (b-1) at a molar proportion of from 50:50 to 95:5.

The hydroxyether compound used in the above-mentioned reaction may be represented, for example, by the following formula (c-1):

$$Aro^1 \left( O-CH_2-CH(OH)-CH_2-O-Ar^a \right)_m \left( O-CH_2-CH(OH)-CH_2-O-Ar^b \right)_n -O-CH_2-CH(OH)-CH_2-O-Aro^2 \quad \ldots \text{(c-1)}$$

wherein m and n are individually any number optionally selected from among positive integers, the molar proportion of m:n is from 50:50 to 95:5, a value of (m + n) is usually from 10 to 600, $Ar^a$ and $Ar^b$ are as defined above and $Aro^1$ and $Aro^2$ are independently represent a glycidyl group, HO-$Ar^a$ or HO-$Ar^b$ wherein $Ar^a$ and $Ar^b$ are as defined above.

The substantially linear hydroxyether compound of the formula (a-1) used as a starting compound in the process mentioned above may be prepared, for example, by a process as will be mentioned below.

That is, a mononuclear aromatic diol represented by the following formula (I):

HO-$Ar^a$-OH (I)

wherein $Ar^a$ is as defined above, and under certain circumstances, together with a dinuclear aromatic diol represented by the following formula (II):

HO-$Ar^b$-OH (II)

wherein $Ar^b$ is as defined above, is reacted with epihalohydrin represented by the following formula (III):

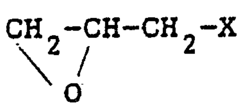

... (III)

wherein X is a halogen atom such as fluorine, chlorine or bromine, in the presence of alkali metal hydroxide compounds to obtain diglycidyl ether or diglycidyl ether oligomer represented by the following formula (IV):

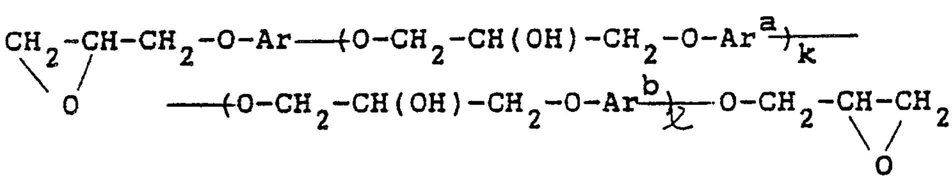

... (IV)

wherein k and ℓ are individually a number optionally selected from among positive integers, a value of (k + ℓ) is usually from 0 to 20, Ar represents either $Ar^a$ or $Ar^b$, and $Ar^a$ and $Ar^b$ are as defined above.

The mononuclear aromatic diol of the formula (I) used in the above-mentioned reaction includes compounds having a p-phenylene group and those having a m-phenylene group, and concretely those compounds are hydroquinone and resorcine. These compounds may be used either singly or in combination. In the present invention, it is particularly preferable that hydroquinone is used singly or hydroquinone is used in combination with resorcine.

The mononuclear aromatic diol of the formula (I) used in the above-mentioned reaction may have in the aromatic ring a substituent such as a lower alkyl group or the like. When mononuclear aromatic diols other than hydroquinone or resorcine are used as the mononuclear aromatic diol of the formula (I) in the reaction mentioned above, the amount of other mononuclear aromatic diol used is preferably less than 5% by weight based on the sum total of hydroquinone and resorcine used.

The dinuclear aromatic diol of the formula (II) includes, for example, phenylphenol, 1,4-naphthalene diol, 1,5-naphthalene diol, 2,6-naphthalene diol, 2,7-naphthalene diol, 4,4′-dihydroxydiphenyl, 4,4′-dihydroxydiphenyl ether, 4,4′-dihydroxydiphenyl ketone and 4,4′-dihydroxydiphenyl sulfone. These dinuclear aromatic diol may be used either singly or in combination.

The epihalohydrin of the formula (III) includes, for example, epifluorohydrin, epichlorohydrin and epibromohydrin. In the present invention, it is particularly preferable that epichlorohydrin or epibromohydrin is used singly or in combination.

Examples of the alkali metal hydroxide compounds used in the aforementioned reaction are lithium hydroxide, sodium hydroxide, potassium hydroxide, etc. In the present invention, however, it is preferable that sodium hydroxide or potassium hydroxide is used singly or in combination. These alkali metals hydroxides which are normally solid may be added to the reaction system either in a solid state or in the state of aqueous solution.

The epihalohydrin of the formula (III) is used in an amount of 1-3 moles, preferably 1.1-2.8 moles per mole of the sum of the mononuclear aromatic diol of the formula (I) and the dinuclear aromatic diol of the formula (II) used. The alkali metal hydroxide is used in an amount of 1-3 moles, preferably 1.1-2.8 moles per mole of the sum of the mononuclear aromatic diol of the formula (I) and the dinuclear aromatic diol of the formula (II) used.

The reaction conditions under which the above-mentioned reaction is carried out are not particularly limited if the mononuclear aromatic diol of the formula (I) and/or the dinuclear aromatic diol of the formula (II) may react satisfactorily with the epihalohydrin of the formula (III). For instance, a mixture is first prepared by mixing the mononuclear aromatic diol of the formula (I) and/or the dinuclear aromatic diol of the formula (II) with the epihalohydrin of the formula (III), and the mixture is then allowed to undergo reaction at a reaction temperature of 60-140°C, preferably 70-130°C, for a reaction time of 1-10 hours, preferably 2-8 hours while stirring the mixture, whereby the glycidyl ether of the formula (IV) or its oligomer is obtained.

In the process mentioned above, solvents inert to the starting compounds used and to the end product obtained may be used as reaction solvents in order to control a viscosity of the reaction liquid in the reaction system for a smooth progress of the reaction and, at the same time, to facilitate the separation of the end product, diglycidyl ether or its oligomer from alkali metal halides such as sodium chloride by-produced by the reaction.

Examples of the inert solvents used as the reaction solvents include saturated hydrocarbons, aromatic hydrocarbons, ketones, amides and sulfoxides which are used in the preparation of the aforementioned first polyhydroxypolyether of the present invention. The glycidyl ether or its oligomer, i.e. the end product of the above-mentioned reaction, are highly soluble in ketones, this end product can be obtained in high yields by virtue of the ketones used as the reaction solvents. These reaction solvents are used usually in an amount of not more than 3 parts by weight, preferably not more than 2 parts by weight and more preferably not more than 1 part by weight based on 1 part by weight of the diglycidyl ether of the formula (IV) or its oligomer.

After completion of the reaction of the mononuclear aromatic diol of the formula (I) and/or the dinuclear aromatic diol of the formula (II) with the epihalohydrin of the formula (III) in the manner as described above, the by-produced alkali metal halides such as sodium chloride and the like are separated from the reaction product. The alkali metal halides may be separated by the known method utilizing a separatory funnel or filter. When excess epihalohydrin is used in the above-mentioned reaction, the epihalohydrin may be removed by such means as distillation. When the reaction solvent is used, the remaining solvent may be removed by such means as distillation. By removal of the alkali metal halides, unaltered epihalohydrin and reaction solvent from the reaction product, the glycidyl ether or its oligomer, i.e. the end product of the reaction is obtained. This diglycidyl ether or its oligomer may be represented by the following formula (IV).

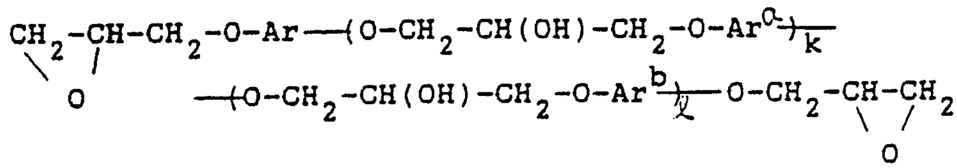

... (IV)

wherein k and ℓ are individually a number optionally selected from among positive integers, Ar represents either $Ar^a$ or $Ar^b$, and $Ar^a$ and $Ar^b$ are as defined above.

In the above-mentioned formula (IV), a value of (k + ℓ) depends on the proportion of the sum of the mononuclear aromatic diol (I) and the dinuclear aromatic diol (II) used to the epihalohydrin (III) used. That is, when the sum of the mononuclear aromatic diol (I) and the dinuclear aromatic diol (II) used is taken as 1 mole, the larger is the proportion of the epihalohydrin (III) used, the smaller is the value of (k + ℓ). When the proportion of the epihalohydrin (III) used exceeds 2 moles per mole of the sum of the mononuclear aromatic

diol (I) and the dinuclear aromatic diol (II) used, the diglycidyl ether (IV), in which the value of $(k+\ell)$ is substantially 0, can be obtained. Generally, the value of $(k+\ell)$ in the above-mentioned formula (IV) is smaller than the value of $(m+n)$ in the intermediate (c-1) formed in the process for the preparation of the polyhydroxypolyether of the present invention.

In the diglycidyl ether (IV) or its oligomer isolated in the manner now described, there may be contained small amounts of the starting mononuclear aromatic diol (I) and dinuclear aromatic diol (II) or the ephihalohydrin (III), or of a monoglycidyl ether which is a reaction product of the mononuclear aromatic diol (I) or the dinuclear aromatic diol (II) with the epihalohydrin (III), and reactivity in the subsequent stage of the diglycidyl ether (IV) will not practically decreases even when said diglycidyl ether (IV) contains small amounts of such compounds as mentioned above.

Furthermore, the content of the nonionic organic halogen content in the diglycidyl ether (IV) or its oligomer can be reduced to not more than 0.2% by weight, for example, by purifying said diglycidyl ether (IV) or its oligomer and using it in the subsequent step.

By reacting the diglycidyl ether (IV) or its oligomer thus obtained with the mononuclear aromatic diol (I) and/or the dinuclear aromatic diol (II), for example, in the presence of basic catalysts, the hydroxyether compound (c-1) which is the starting material for the preparation of the polyhydroxypolyether of the present invention can be prepared. The mononuclear aromatic diol (I) and/or the dinuclear aromatic diol (II) which is reacted with the diglycidyl ether (IV) or its oligomer in the above-mentioned reaction may be those used in the preparation of the diglycidyl ether (IV) or its oligomer, and they may be used either singly or in combination. These diols may be the same as or different from those used in the preparation of the diglycidyl ether (IV) or its oligomer.

In the sum total of the amount of the diols used in the preparation of the diglycidyl ether (IV) or its oligomer and the amount of diols reacted with the diglycidyl ether (IV) or its oligomer, the proportion of the mononuclear aromatic diol (I) to the dinuclear aromatic diol (II) used is in the range of from 50:50 to 95:5, and in the mononuclear aromatic diol (I) used, the amount of a hydroquinone compound having a p-phenylene group is always larger than that of a resorcine compound having a m-phenylene group.

In the sum total of the amount of diols used in the preparation of the diglycidyl ether (IV) or its oligomer and the amount of diols reacted with the diglycidyl ether (IV) or its oligomer, the proportion of the mononuclear aromatic diol (I) to the dinuclear aromatic diol (II) used is in the range of from 50:50 to 95:5, and in the mononuclear aromatic diol (I) used, the amount of a hydroquinone compound having a p-phenylene group is always larger than that of a resorcine compound having a m-phenylene compound.

If the proportion of the mononuclear aromatic diol (I) to the dinuclear aromatic diol (II) exceeds 95:5 and the amount of the mononuclear aromatic diol (I) used becomes larger than that of the dinuclear aromatic diol (II), the resulting polyhydroxypolyether of the present invention will come to have physical properties substantially similar to those of hydroquinone polyhydroxypolyether or hydroquinone/resorcine copolyhydroxypolyether. Accordingly, when this polyhydroxypolyether of the present invention is used as a gas barrier-imparting agent particularly as a composition for polyalkylene terephthalate such as polyethylene terephthalate, the resulting molded article will come to decrease in transparency. If the proportion of the mononuclear aromatic diol (I) to the dinuclear aromatic diol (II) exceeds 50:50 and the amount of the mononuclear aromatic diol (II) used becomes larger than that of the mononuclear aromatic diol (I), the resulting polyhydroxypolyether will come to increase in glass transition temperature. Therefore, in most cases, this polyhydroxypolyether will come to decrease in stretchability particularly when said polyhydroxypolyether is used as a gas barrier-imparting agent for polyalkylene terephthalate such as polyethylene terephthalate. Furthermore, because diols which constitute structural component units of $AR^b$ are not inexpensive, the production cost of the polyhydroxypolyether of the present invention disadvantageously increases with increasing proportion of the sum of the diols constituting $Ar^b$. Further, it is preferable in the present invention to use the mononuclear aromatic diol (I) and the dinuclear aromatic diol (II) in the proportion of 55:45 to 93:7, preferably 60:40 to 90:10.

In the mononuclear aromatic diol (I), if the amount of hydroquinone used is smaller than that of resorcine used, the resulting polyhydroxypolyether of the present invention decreases in glass transition temperature. In most cases, therefore, drying this polyhydroxypolyether becomes difficult, said drying being necessary when said polyhydroxypolyether is used as a gas-barrier property imparting agent for polyalkylene terephthalate such as particularly polyethylene terephthalate.

When the diglycidyl ether or its oligomer is used, it is also possible to use the same by isolating the diglycidyl ether from the oligomer of diglycidyl ether and using the separated components separately or to use the same as a mixture of the diglycidyl ether and the oligomer of diglycidyl ether.

Examples of the basis catalyst used in the above- mentioned reaction include tertiary amine compounds, quaternary ammonium compounds, tertiary phosphine compounds and quaternary phosphonium

compounds. Concrete examples of these catalysts are the compounds exemplified in the case of preparation of the first polyhydroxypolyether of the present invention. These catalysts may be used either singly or in combination.

In the above-mentioned reaction, the mononuclear aromatic diol (I) and/or the dinuclear aromatic diol (II) is used usually in an amount, based on 1 mole of the diglycidyl ether (IV) or its oligomer, of 0.5-1.5 moles. preferably 0.6-1.4 moles and more preferably 0.7-1.3 moles. When one or two or more diols selected from among the mononuclear aromatic diol (I) and the dinuclear aromatic diol (II) are used in an amount less than an equimolar quantity of the diglycidyl ether (IV) or its oligomer, the proportion of monovalent aromatic hydrocarbon groups in the terminal groups of the polyhydroxypolyether prepared by the process of the present invention becomes large as a natural consequence and hence the use of the diols in that way is generally preferable, because the ends of the polyhydroxypolyether can be maintained at a lower level of reactivity.

The proportion of the basic catalyst used in the above-mentioned reaction, based on the diglycidyl ether (IV) or its oligomer, is usually 0.001-10 mol%, preferably 0.005-5 mol% and more preferably 0.01-1 mol%.

The reaction of the diglycidyl ether (IV) or its oligomer with the mononuclear aromatic diol (I) and/or the dinuclear aromatic diol (II) may be carried out without using a reaction solvent, but the reaction may be used using a reaction solvent in order to regulate a viscosity of the reaction system at the time of reaction so that the reaction proceeds smoothly. In that case, the amount of the reaction solvent used is usually in an amount, based on 1 part by weight of the resulting hydroxyether compound (c-1), of not more than 3 parts by weight, preferably not more than 2 parts by weight and more preferably not more than 1 part by weight.

The reaction temperature employed for preparing the hydroxyether compound (c-1) may be suitably preset. For instance, the reaction temperature is preset usually to 90-180°C, preferably 100-170°C when the reaction solvent is not used, and usually to 80-250°C, preferably 100-220°C when the reaction solvent is used. This reaction can be carried out under any pressure conditions, for example, at atmospheric pressure, under pressure and under reduced pressure. When the reaction solvent is used, in particular, if the reaction pressure is maintained at a constant level, the reaction temperature at that pressure can be maintained at a boiling point of said reaction and hence vibration in reaction temperature can advantageously be inhibited. The reaction time employed under such reaction conditions as mentioned above is usually 0.5-10 hours.

After the completion of the reaction conduced in this manner, the reaction solvent, unaltered reactions, etc. are removed by a means such as distillation to give a hydroxyether compound represented by the following formula (c-1).

$$\mathrm{Aro}^1\!-\!\left(\mathrm{O{-}CH_2{-}CH(OH){-}CH_2{-}O{-}Ar^a}\right)_m\!-\!\left(\mathrm{O{-}CH_2{-}CH(OH){-}CH_2{-}O{-}Ar^b}\right)_n\!-\mathrm{O{-}CH_2{-}CH(OH){-}CH_2{-}O{-}Aro^2} \quad \ldots \quad (c\text{-}1)$$

wherein m, n, $Ar^a$, $Ar^b$, $Aro^1$ and $Aro^2$ are as defined above.

In the hydroxyether compound (c-1) thus obtained, parts of the structural units $-O-CH_2-CH(OH)-CH_2-O-Ar$ - and $-O-CH_2-CH(OH)-CH_2-O-Ar$ - may contain halogen atoms liberated from the starting epihalohydrin (III), 1 2 bond structure formed by the $\beta$-cleaved glycidyl groups of said epihalohydrin, or a branched structure formed by the intramolecular reaction of the glycidyl group with hydroxyl group, if their amount contained is only a little.

The terminal groups $Aro^1$ and $Aro^2$ of the hydroxyether compound obtained by the reaction carried out in the manner mentioned above are individually the group selected from among glycidyl group and HO-Ar. However, the groups $Aro^1$ and $Aro^2$ of the hydroxyether compound (c-1) obtained by the above-mentioned reaction are not wholly HO-Ar, and this hydroxyether compound includes compounds in which at least parts of the groups $Aro^1$ and $Aro^2$ are glycidyl groups.

That is, when the proportion of the diglycidyl ether (IV) or its oligomer used to the sum of the mononuclear aromatic diol (I) and the dinuclear aromatic diol (II) is made large, the ends of the resulting hydroxyether compound (c-1) are difficult to become OH groups and apt to become aromatic hydrocarbon groups caused by the reaction with an aromatic monoalcohol in the next step. In other words, in the next step, i.e. terminal blockading treatment, the glycidyl group react with monovalent aromatic alcohol to give a

polyhydroxypolyether containing a large proportion of monovalent aromatic hydrocarbon groups as the terminal groups. Such polyhydroxypolyether as obtained in this manner is preferred in a general sense from the standpoint of low reactivity of the terminal groups. In either case, when the hydroxyether compound is prepared in the above-mentioned process using the reactants in the proportions as defined, no polyhydroxypolyether having no glycidyl group is obtained.

When such hydroxyether compound as mentioned above is blended, for example, with polyethylene terephthalate, the resulting blend decreases in stability at the time of molding because of the reaction of the remaining glycidyl group therewith and, as the result the molded article decreases in transparency or gas barrier properties.

Accordingly, in the process of preparing the polyhydroxypolyether of the present invention, the hydroxyether compound (c-1) obtained in the above-mentioned reaction is allowed to react further with an aromatic monoalcohol of 6 to 15 carbon atoms. By virtue of this reaction, all the glycidyl groups present at the ends of the hydroxyether compound become monovalent aromatic hydrocarbon groups and the ends are completely blockaded.

The aromatic monoalcohol which reacts with the hydroxyether compound of the above-mentioned formula (c-1) to form the polyhydroxypolyether of the formula (a) of the present invention is a compound of 6-15, preferably 6-12 carbon atoms having in the molecule one OH group. The OH group may attach directly or via an alkylene group or the like to the aromatic ring. This OH group reacts with the glycidyl group remaining at the terminal of the hydroxyether compound of the above-mentioned formula (c-1), and accordingly the aromatic monoalcohol of 6-15 carbon atoms used in the present invention has no reactive group with the exception of the above-mentioned OH group.

Concrete examples of such aromatic monoalcohols of 6-15 carbon atoms as mentioned above include the previously exemplified compounds used at the time of blockading the terminals of the aforementioned second polyhydroxypolyether. The aromatic monoalcohols remained unaltered at the above-mentioned reaction are usually removed, after the completion of the reaction, by distillation operation, and hence the aromatic monoalcohols used in the present invention are preferably compounds having a relatively low boiling point when removal efficiency by the distillation operation is taken into consideration. In that case, usually the compounds having a boiling point of below 250°C are used. Examples of such aromatic monoalcohols having such low boiling points are phenol, cresol, ethylphenol, propylphenol, isopropylphenol, methoxyphenol and ethoxyphenol. In the present invention, however, removal of the unaltered aromatic monoalcohols may be carried out, without relying on the above-mentioned distillation operation, by utilizing such treatment means as subjecting the resulting polyhydroxypolyether of the formula (a) to reprecipitation treatment or the like. When this treatment means is adopted, a difference in advantage between the use of relatively low boiling aromatic monoalcohols and that of other aromatic monoalcohols is small.

The reaction of the hydroxyether compound of the above-mentioned formula (c-1) with the aromatic monoalcohol is carried out in the presence of specific catalysts.

The catalysts used in the present invention include at least one compound selected from among tertiary amine compounds, quaternary ammonium compounds, tertiary phosphine compounds and quaternary phosphonium compounds. In the above-mentioned reaction, the catalysts used are those of the same system as used in the preparation of the hydroxyether compound of the formula (c-1) by the reaction of the glycidyl ether of the aforementioned formula (IV) or its oligomer with the mononuclear aromatic diol of the formula (I).

Accordingly, concrete examples of the catalysts used in the preparation of the polyhydroxypolyether of the formula (a) may be such compounds as exemplified and used in the process of preparing the hydroxyether compound of the above-mentioned formula (c-1). These catalysts used in the preparation of the hydroxyether compound of the formula (c-1) may be used, as they are, without separating them therefrom, or additional catalysts may be further added, or these catalysts once used in the preparation of the hydroxyether compound of the formula (c-1) are separated and thereafter fresh catalysts may be added. The catalysts used in the above-mentioned reaction and those used in the preparation of the hydroxyether compound of the formula (c-1) may be the same or different.

In the reaction mentioned above, the aromatic monoalcohol of 6-15 carbon atoms is used usually in an amount of 0.1-10 moles, preferably 0.5-5 moles and more preferably 0.6-4 moles based on 1 mole of the hydroxyether compound (c-1).

The amount of the catalyst used in this reaction is usually 0.001-10 mol%, preferably 0.005-5 mol% and more preferably 0.01-1 mol% based on the sum total of the units derived from the mononuclear aromatic diol contained in the hydroxyether compound (c-1).

In the present invention, the reaction of the hydroxyether compound (c-1) with the aromatic monoalcohol may be carried out without using a reaction solvent, but is preferably carried out in the presence of

the reaction solvent in order to carry out the reaction smoothly by regulating a viscosity of the reaction system. When the reaction solvent is used, there may be used the same compounds as used in the preparation of the hydroxyether compound (c-1), for example, saturated hydrocarbons, aromatic hydrocarbons, ketones, amides and sulfoxides as exemplified previously. Of these reaction solvents, particularly preferred are ketones when solubility in the reaction solvents of the starting hydroxyether (c-1) and of the reaction product polyhydroxypolyether (a) are considered. Accordingly, when this reaction is carried out in the presence of reaction solvent, the reaction solvent which has been used in the preparation of the hydroxyether compound (c-1) may be used, as it is, or after removal of a part or all of this reaction solvent, a fresh reaction solvent may be added.

The amount of reaction solvent used, when the reaction is carried out in the presence of reaction solvent, is usually less than 3 parts by weight, preferably less than 2 parts by weight and more preferably less than 1 part by weight based on 1 part by weight of the hydroxyether compound (c-1).

The reaction of the hydroxyether compound (c-1) with the aromatic monoalcohol of 6-15 carbon atoms is carried out usually at a temperature of 100-200°C, preferably 110-190°C and more preferably 120-180°C when no reaction solvent is used, and at a temperature of 100-280°C, preferably 110-260°C and more preferably 120-250°C when reaction solvent is used. The reaction may be carried out at atmospheric pressure, under pressure or under reduced pressure. The reaction is carried out with stirring and completed usually in 0.5-5 hours.

By virtue of the reaction carried out in the manner as mentioned above, the polyhydroxypolyether of the present invention is obtained. This polyhydroxypolyether may be represented, for example, by the following formula (a):

$$Ar^1 \text{—} (O\text{-}CH_2\text{-}CH(OH)\text{-}CH_2\text{-}O\text{-}Ar^a)_p \text{—} (O\text{-}CH_2\text{-}CH(OH)\text{-}CH_2\text{-}O\text{-}Ar^b)_q \text{—} O\text{-}CH_2\text{-}CH(OH)\text{-}CH_2\text{-}O\text{-}Ar^2 \quad \ldots \text{(a)}$$

wherein $Ar^1$, $Ar^2$, $Ar^a$ and $Ar^b$ are as defined previously, the proportion of p to q is 50:50-90:5, preferably 60:40-95:5, and a value of $(p+q)$ is usually larger than the value of $(k+\ell)$ in the aforementioned formula (IV), and approximates to the value of $(m+n)$ in the formula (c-1).

When solvent is used, from the mixture of the thus formed polyhydroxypolyether, unaltered aromatic monoalcohol, and the reaction solvent, solvent and unaltered aromatic monoalcohol may be removed by means of distillation or the like means. The reaction solvent or unaltered aromatic monoalcohol may also be removed by other means such as re-precipitation and the like mentioned previously.

After removal of the reaction solvent or unaltered aromatic monoalcohol, the polyhydroxypolyether obtained is melted and then extruded into strands. The strands are cooled and then cut by the method, per se, known to obtain pellets of the polyhydroxypolyether.

The polyhydroxypolyether thus obtained has an intrinsic viscosity $[\eta]$ as measured at 25°C in o-chlorophenol of 0.3-2 dl/g, and this intrinsic viscosity $[\eta]$ may be adjusted to 0.4-1.8 dl/g by controlling the preparation conditions. The polyhydroxypolyether having such intrinsic viscosity $[\eta]$ as mentioned above usually has a number average ($\overline{M}n$) molecular weight of 2,000-100,000, preferably 3,000-80,000. Molded articles or stretched molded articles containing the polyhydroxypolyether of the present invention having an intrinsic viscosity $[\eta]$ of not more than 0.3 dl/g are prone to decrease in mechanical strength.

The polyhydroxypolyether of the invention usually has a glass transition temperature of 30-150°C, preferably 40-120°C.

In the polyhydroxypolyether of the invention, a value showing molecular weight distribution defined by a ratio of weight average molecular weight ($\overline{M}w$) to number average molecular weight ($\overline{M}n$) is usually 1.5-10.

The polyhydroxypolyether of the invention has a substantially linear structure.

By "substantially linear" as used herein is meant that the polyhydroxypolyether has a chain-like structure having substantially no branched chain and contains substantially no gelled crosslinked structure (network structure). In the concrete, this means that when 0.5 g of the polyhydroxypolyether having a linear structure is dissolved in 100 ml of o-chlorophenol at 25°C, no insolubles are substantially left in the solution.

The present polyhydroxypolyether is terminated by the hydroxyl-substituted aromatic hydrocarbon group or monovalent aromatic hydrocarbon group of 6-15 carbon atoms. The proportion of the hydroxyl-substituted aromatic hydrocarbon group to the monovalent aromatic hydrocarbon group of 6-15 carbon atoms present as the terminal group of the present polyhydroxypolyether is equal to the proportion of the hydroxyl-substituted aromatic hydrocarbon group to the glycidyl group present in the hydroxyether compound (c-1) used in the preparation of the present hydroxypolyether. That is, the present polyhydroxypolyether substantially contains no glycidyl group, because all glycidyl groups contained in the hydroxyether compound (c-1) react with the aromatic monoalcohol to be converted into hydrocarbon groups.

As illustrated above, the present polyhydroxypolyether has at its terminal group the monovalent aromatic hydrocarbon group of 6-15 carbon atoms and the mono- or dinuclear aromatic hydrocarbon group containing as a substituent the phenolic hydroxy groups represented by $HO-Ar^a$ and $HO-Ar^b$. In general, however, the polyhydroxypolyether having a larger proportion of the monovalent aromatic hydrocarbon group as the terminal group is preferred so far as a small reactivity of the end of polyhydroxypolyether is concerned.

In this connection, the present polyhydroxypolyether sometimes contain small amounts of polyhydroxypolyether which is terminated by $\beta,\gamma$-dihydroxypropioxy group resulted from the reaction of moisture with the glycidyl group present in the reaction system at the time of preparing the present polyhydroxypolyether, or by a group derived from said reaction.

As mentioned above, the present polyhydroxypolyether does not contain at all the glycidyl group as its terminal group. It is known that the glycidyl group itself is a group inducing spontaneous variability and abnormality of a chromosome. Accordingly, the present polyhydroxypolyether which contains no such inductive group as the glycidyl group is excellent in safety and hygiene, in particular, when used as a food packaging material.

It is also known that the glycidyl group is a functional group high in reactivity and easily reacts with a functional group for forming polyether, such as carboxyl or hydroxyl group. Accordingly, the present polyhydroxypolyether containing no such highly reactive glycidyl group is preferable in that when it is used as a gas barrier property imparting agent for other resins, it is found to be excellent in stability at the time of molding thereof, and gives a homogeneous composite material. In particular, when the present polyhydroxypolyether is used as a gas barrier property imparting agent for polyalkylene terephthalate such as polyethylene terephthalate, there are brought about such advantages that the occurrence of gelling or scorching is markedly inhibited to secure a stable molding operation for a long period of time and a homogeneous composition or laminate free from foreign matter is obtained.

The present polyhydroxypolyether is prepared by reacting the glycidyl group at its terminal with the monovalent aromatic alcohol in the manner as mentioned before. In that case, a low molecular weight oligomer contained in the polyhydroxypolyether also reacts with the monovalent aromatic alcohol, thereby increasing the molecular weight on the whole. Accordingly, the present polyhydroxypolyether has such a characteristic feature that the content of the low molecular weight oligomer contained therein is small in comparison with that of the prior art polyhydroxypolyether. This means that at the time of melt molding the present polyhydroxypolyether, because of decrease in volatile component, a long-term stability in molding operation can be secured and, at the same time, because of inhibition of elution or elimination of the oligomer in the actual use of the polyhydroxypolyether, safety and hygiene are improved. Since the oligomer contained in the present polyhydroxypolyether is treated with the monovalent aromatic alcohol, the proportion of hydrophilic hydroxyl group in the oligomer decreases. Accordingly, when the present polyhydroxypolyether, composition thereof or composite material thereof such as a laminate is used for food packaging purposes, there is also brought about such an advantage from the standpoint of safety and hygiene of food that elution of the oligomer into water, alcohol or acetic acid usually contained in food packages is inhibited.

The present polyhydroxypolyether is a copolyhydroxypolyether having introduced by copolymerization to hydroquinone polyhydroxypolyether or hydroquinone-resorcin copolyhydroxypolyether, at least one or two or more members selected from among phenylhydroquinone, 1,4-naphthalene diol, 1,5-naphthalene diol, 2,6-naphthalene diol, 4,4′-dihydroxydiphenyl ether, 4,4′-dihydroxydiphenyl ketone and 4,4′-dihydroxydiphenyl sulfone, as mentioned previously. By virtue of the introduction of such copolymerizable components as mentioned above, the present copolyhydroxypolyether has such a characteristic feature that it has a refractive index larger than that of hydroquinone polyhydroxypolyether or hydroquinone-resorcin copolyhydroxypolyether. That is, the refractive index of hydroquinone polyhydroxyether or hydroquinone-resorcin copolyhydroxypolyether as measured by using sodium D line at 25°C is 1.59-1.60, whereas the refractive index of the copolyhydroxypolyether having introduced therein the above-mentioned copolymerizable components is 1.60-1.64, preferably 1.61-1.63. It is publicly known that when such copolyhydroxypolyether having incorporated thereinto copolymerizable components as mentioned above is used as a gas barrier imparting agent for other resin, the resulting composite material particularly the

resulting composition is excellent in transparency if a difference in refractive index between the two resins becomes smaller. When polyalkylene terephthalate having ethylene terephthalate as its main constituent is selected and used as other resin to be combined with the above-mentioned copolyhydroxypolyether, a refractive index of the resulting stretched article in most cases coincides, though it depends on the degree of stretching thereof, with the range of the refractive index of said copolyhydroxypolyether. Accordingly, when this copolyhydroxypolyether is used as a gas barrier property imparting agent for polyalkylene terephthalate having ethylene terephthalate as its main constituent, there can be obtained a composite material, in particular, a composition thereof, both having excellent transparency.

The first to third polyhydroxypolyethers of the present invention may be used either in a stretched or unstretched state as materials for molded articles of various shaped such as film, sheet, fiber, receptacle and the like by ordinary molding methods.

First, stretched molded articles of the present polyhydroxypolyether are illustrated hereinafter.

Stretched molded articles of various shapes such as film, sheet, fiber and the like may be obtained by subjecting the present first to third polyhydroxypolyethers to monoaxially stretched molding or biaxially stretched molding. In that case, the present first to third polyhydroxypolyethers may be used either singly or in admixture. The polyhydroxypolyethers used may be such compositions thereof as prepared by incorporation thereinto of commonly used additives such as inorganic fillers, lubricants, slip agents, anti-blocking agents, stabilizers, antistatic agents, pigments and the like.

The stretched molded articles of the present polyhydroxypolyethers may be prepared by any known methods. Generally, however, an unstretched molded article such as a film or sheet is formed from the polyhydroxypolyether alone or its composition comprising, if necessary, the aforementioned additives, and the unstretched molded article thus formed, as it is, or after cooling it to a temperature below its glass transition temperature to solidify, is stretched at a temperature higher than the glass transition temperature, preferably at a temperature equal to, or higher by 80°C than the glass transition temperature.

In preparing stretched molded articles from the present polyhydroxypolyethers, when the unstretched molded article is a film or sheet, a stretched article may be obtained by stretching the unstretched film or sheet monoaxially (monoaxial stretching); stretching it in the longitudinal direction and then in the transverse direction (biaxial stretching); stretching it simultaneously in the longitudinal and transverse directions (simultaneous biaxial stretching); biaxially stretching it and subsequently stretching the stretched article in either direction repeatedly in succession; biaxially stretching it and then stretching the stretched article in both directions; or by a so-called vacuum-forming method in which the film or sheet is stretched by reducing the pressure of the space between the film or sheet and a mold. In the case of preparing the monoaxially stretched article of the polyhydroxypolyether, the stretch ratio employed is usually 1.1-10 times, preferably 1.2-8 times, especially preferably 1.5-7 times. In the case of the biaxially stretched article, the stretch ratio is usually 1.1-8 times, preferably 1.2-7 times, especially preferably 1.5-6 times in the longitudinal direction, and usually 1.1-8 times, preferably 1.2-7 times, especially preferably 1.5-6 times. The stretched molded articles of the polyhydroxypolyethers may be laminates obtained by laminating the sheet of film of the polyhydroxypolyether to a sheet or film of other resin. The laminates as mentioned above may be prepared by laminating an unstretched sheet or film of the polyhydroxypolyether to an unstretched sheet or film of other resin and then stretching the resulting laminate, or by bonding a film or sheet of other resin (the film or sheet may be stretched) to the stretched molded article of the polyhydroxypolyether.

The stretched molded articles of the present polyhydroxypolyethers are excellent in mechanical strength and gas barrier properties. Particularly, when these stretched molded articles are used as covering materials for electrical components, electronic components and metallic components, they are effective in protecting the electrical or electronic circuit or preventing the metal from its being corroded. The stretched films of the polyhydroxypolyether may be used effectively by utilizing their electrical characteristics for such purposes as application to condenser, motor and transformer, or as sheathing materials for electric wire and cable. Utilizing their excellent gas barrier properties, these stretched films may be used also as films for food packaging.

As mentioned above, the first to third polyhydroxypolyethers of the present invention exhibit favorable gas barrier properties even when they are used singly. However, by virtue of using them in combination with other thermoplastic resins, the resulting molded articles can be markedly improved. That is, the present polyhydroxypolyethers may be used as gas barrier property imparting agents for other resins.

In the present invention, the present polyhydroxypolyethers are used as gas barrier property imparting agents according to a procedure in which a film prepared by using the polyhydroxypolyether is laminated to a film prepared by using other thermoplastic resin, and the resulting laminate is then molded to obtain a molded article, and to a procedure in which the polyhydroxypolyether is incorporated into other thermoplastic resin, and the resulting resin composition is then molded to obtain a molded article.

In these case, the thermoplastic resins used may include polyester, polyamide, polycarbonate and polyolefin. Particularly preferable as the thermoplastic resins used in the present invention are polyesters such as polyalkylene terephthalate composed of ethylene terephthalate as main structural units.

The polyalkylene terephthalate constituting the laminated molded article obtained by using the present polyhydroxypolyether is preferably polyethylene terephthalate having the content of ethylene terephthalate structural units of usually at least 50 mol%, preferably at least 70 mol%. The dicarboxylic acid component units constituting the polyalkylene terephthalate may contain small amounts of other aromatic dicarboxylic acid components in addition to the terephthalic acid components.

The aromatic dicarboxylic acid component units other than the terephthalic acid component units include, in concrete, components units derived from isophthalic acid, phthalic acid and naphthalenedicarboxylic acid. The diol component units constituting the polyalkylene terephthalate are preferably ethylene glycol component units, but the diol components units may have small amounts of other diol components units in addition to the ethylene glycol components units. The diol components units other than the ethylene glycol component units may include components derived from diols of 3-15 carbon atoms such as 1,3-propanediol, 1,4-butanediol, neopentyl glycol, cyclohexanediol, cyclohexanedimethanol, 1,4-bis($\beta$-hydroxyethoxy)benzene, 1,3-bis($\beta$-hydroxyethoxy)benzene, 2,2-bis(4-$\beta$-hydroxyethoxyphenyl)propane and bis(4-$\beta$-hydroxyethoxyphenyl)sulfone.

The polyalkylene terephthalate may contain, if necessary, component units derived from other polyfunctional compounds, in addition to the above-mentioned aromatic dicarboxylic acid component units and diol component units.

Polyfunctional compounds forming the polyfunctional compound component units include, in concrete, aromatic polybasic acids such as trimellitic acid, trimesic acid and 3,3′,5,5′-terecarboxydipheny, aliphatic polybasic acids such as butanetetracarboxylic acid, aromatic polyols such as phloroglusin and 1,2,4,5-tetrahydroxybenzene, aliphatic polyols such as glycerol, trimethylolethane, trimethylolpropane and pentaerythritol, and oxypolycarboxylic acids such as tartaric acid and malic acid.

In the polyalkylene terephthalate as illustrated above, the proportion of the terephthalic acid component units is usually 50-100 mol%, preferably 70-100 mol%, the proportion of the aromatic dicarboxylic acid component units other than the terephthalic acid component units is usually 0-50 mol%, preferably 0-30 mol%, the proportion of the ethylene glycol component units is usually 50-100 mol%, preferably 70-100 mol%, the proportion of the diol component units other than the ethylene glycol component units is usually 0-50 mol%, preferably 0-30 mol%, and the proportion of the polyfunctional compound component units is usually 0-2 mol%, preferably 0-1 mol%.

The above-mentioned polyalkylene terephthalate has usually an intrinsic viscosity [$\eta$] (a value measured in o-chlorophenol at 25°C) of 0.5-1.5 dl/g, preferably 0.6-1.2 dl/g, a melting point of 210-265°C, preferably 220-260°C, and a glass transition temperature of 50-120°C, preferably 60-100°C.

Illustrated below is a laminate having gas barrier properties imparted to by the use of the first to third polyhydroxypolyethers of the present invention, said laminate being a laminated molded article composed of a layer of the above-mentioned polyalkylene terephthalate and a layer of the present polyhydroxypolyether.

This laminated molded article having gas barrier properties thus imparted includes concretely;

a two-layer laminate composed of a layer of the present polyhydroxypolyether and a layer of the polyalkylene terephthalate having ethylene terephthalate as main structural units;

a three-layer laminate composed of two outer layers of the above-mentioned polyalkylene terephthalate and an interlayer of the polyhydroxypolyether;

a three-layer laminate composed of two outer layers of the polyhydroxypolyether and an interlayer of the polyalkylene terephthalate;

a multilayer laminate composed of at least four layers of the polyhydroxypolyether and the above-mentioned polyalkylene terephthalate laminated alternately with the outermost layers of the polyalkylene terephthalate;

a multilayer laminate composed of at least four layers of the polyhydroxypolyether and the above-mentioned polyalkylene terephthalate laminated alternately with the outermost layers of the polyhydroxypolyether; and

a multilayer laminate composed of at least four layers of the polyhydroxypolyether and the above-mentioned polyalkylene terephthalate laminated alternately with one outermost layer of the polyhydroxypolyether and the other outermost layer of the polyalkylene terephthalate.

These laminated molded articles having gas barrier properties imparted to in the manner as above may be used in various shapes such as sheets, plates, tubes, hollow structures and containers, and they may be prepared by known methods.

The polyhydroxypolyether and polyalkylene terephthalate layers constituting the above-mentioned laminated molded articles having gas barrier properties thus imparted may have their thickness suitably determined, without particular limitation, according to the ultimate use of said laminated molded articles. For instance, when the laminated molded article is a two-layer laminated molded article, the polyhydroxypolyether layer has usually a thickness of 4-350 µm, preferably 6-200 µm, and the polyalkylene terephthalate layer has usually a thickness of 8-600 µm, preferably 10-500 µm. When the laminated molded article is the former of the above-mentioned three-layer laminated molded articles, the polyhydroxypolyether interlayer has usually a thickness of 4-350 µm, preferably 6-200 µm, and the two outermost layers of the polyalkylene terephthalates each have usually 4-300 µm, preferably 5-250 µm. When the laminated molded article is the latter of the above-mentioned three-layer laminated molded articles, the polyalkylene terephthalate interlayer has usually a thickness of 8-600 µm, preferably 10-500 µm, and the two outermost layers of the polyhydroxypolyether has usually a thickness of 4-100 µm, preferably 6-50 µm. When the laminated molded article is any one of the above-mentioned multilayer laminated molded articles composed of at least four layers, the interlayers and the outermost layers of the polyhydroxypolyether and of the polyalkylene terephthalate may individually have their thickness suitably selected in the same manner as mentioned above.

The laminated molded articles having gas barrier properties thus imparted are excellent in gas barrier properties and, at the same time, in stretchability, electrical characteristics particularly insulation properties, mechanical strength, transparency and the like properties.

The laminates having gas barrier properties thus imparted may be further formed into stretched molded articles.

That is, stretched molded articles may be prepared by stretching the above-mentioned laminated molded articles having gas barrier properties imparted thereto. The stretched, laminated molded articles may be those in which the constituting polyhydroxypolyether and polyalkylene terephthalate layers may be stretched monoaxially or biaxially, and may be in various forms such as films, sheets and plates. The stretch ratios employed in the stretched, laminated molded articles may be the same as those proposed in the case of the aforementioned stretched molded articles of the polyhydroxypolyether, and the resulting stretched molded articles can be subjected to heat setting.

The stretched, laminated molded articles using the present polyhydroxypolyether are excellent in gas barrier properties and, at the same time, in such properties as mechanical strength and transparency.

Particularly, when the stretched molded article is a film, it can protect electrical and electronic circuits for long period of time or can effectively prevent metallic components from their being corroded when used for covering electrical components, electronic components or metallic components. The stretched laminated films are highly useful as materials for condensers, motors and transformers, or as materials for sheathing electric wires and cables. Further, the stretched laminated articles may be used as food packaging materials. The above-mentioned stretched, laminated molded articles have excellent gas barrier properties, and hence they may be used as containers for food and carbonated beverages.

Illustrated below are resin compositions prepared by incorporating the first to third polyhydroxypolyethers of the present invention as gas barrier property imparting agents into other thermoplastic resins.

Other thermoplastic resins usable in the above-mentioned resin compositions having gas barrier properties thus imparted thereto may be those used in the case of the above-mentioned laminates, and of the thermoplastic resins, particularly preferred are polyalkylene terephthalates as mentioned previously. Of the resin compositions, particularly preferred are polyester resin compositions using polyethylene terephthalate as mentioned previously.

In the polyester resin compositions having gas barrier properties imparted thereto by the use of the present polyhydroxypolyether, the proportion of the polyhydroxypolyether to be incorporated is usually 1-500 parts by weight, preferably 2-300 parts by weight and especially preferably 3-100 parts by weight based on 100 parts by weight of the polyalkylene terephthalate.

The above-mentioned polyester resin compositions may be prepared generally, without any particular limitation, by homogeneously mixing the polyhydroxypolyether and polyalkylene terephthalate used in a molten state or as a solution. Particularly, it is preferable to adopt a process in which these two components are kneaded in a molten state using a molding machine capable of mixing these components by stirring such as an extrusion molding machine or injection molding machine.

The polyester resin compositions comprising the above-mentioned polyalkylene terephthalate and polyhydroxypolyether may be incorporated with various additives such as nucleating agents, inorganic fillers, lubricants, slip agents, anti-blocking agents, stabilizers, antistatic agents, anti-fogging agents and pigments.

The above-mentioned polyester compositions may be used by ordinary molding methods as materials for forming films, sheets, fibers, receptacles and other molded articles of various shapes in an unstretched state.

Stretched molded articles of the polyester resin compositions include monoaxially stretched molded articles and biaxially stretched molded articles, both may be in any form such as films, sheets or fibers.

The stretched molded articles of the polyester resin compositions may be prepared by any known methods. Generally, a film of sheet molded from the polyester composition is subjected, as it is or after solidifying it by cooling, to stretching treatment at a glass transition point or melting point thereof, preferably at a temperature higher by 80°C than the glass transition point or melting point. Further, the stretched molded article is subjected to heat setting treatment for a short period time by heating at the stretching temperature as mentioned above or a temperature higher than that temperature.

In preparing the stretched molded articles of the polyester resin compositions having gas barrier properties thus imparted thereto, there may be employed therefor, when the molded article as originally formed is a film or sheet, such methods mentioned previously as the monoaxial stretching method, biaxial stretching method, simultaneous biaxial stretching method, the method in which the biaxially stretched film or sheet is further stretched in either direction successively and repeatedly, and the vacuum molding method.

When the stretched molded article of the above-mentioned polyester resin composition is a monoaxially stretched molded article, the stretch ratio employed is usually 1.1-10 times, preferably 1.2-8 times and especially preferably 1.5-7 times. When the stretched molded article is a biaxially stretched molded article, the stretch ratio employed in the longitudinal direction is usually 1.1-8 times, preferably 1.2-7 times and especially preferably 1.5-6 times, and usually 1.1-8 times, preferably 1.2-7 times and especially preferably 1.5-6 times in the traverse direction.

The stretched molded articles of these polyester resin compositions having gas barrier properties may be prepared in a form where the stretched film or sheet of said composition is laminated to other resins.

In preparing the stretched laminated comprising the layers of the polyester resin compositions having gas barrier properties as mentioned above, there may be employed a method in which the unstretched film or sheet of the polyester resin composition is laminated to an unstretched film or sheet of other resin, and the resulting laminate is then stretched, and a method in which a film of sheet of other resin is bonded to the stretched molded article of the polyester resin composition.

The stretched molded articles of the polyester resin compositions having gas barrier properties thus obtained are excellent in properties such as mechanical strength, transparency and gas barrier properties, and hence may be used in the forms of films, sheets, tubes, containers and bottles.

The polyester resin composition of the present invention is illustrated hereinafter.

The present polyester resin composition may be obtained by mixing the polyhydroxypolyether obtained in the manner mentioned previously with polyalkylene terephthalate.

The polyalkylene terephthalate used in the present invention is the thermoplastic resin used in the case where the polyhydroxypolyether of the present invention is used as a gas barrier property imparting agent.

That is, the polyalkylene terephthalate constituting the present polyester resin composition is a polyester, the dicarboxylic acid component units of which have ethylene terephthalate units as main structural units, and the diol component units have ethylene glycol units as main structural units.

The present polyester resin composition is prepared by mixing the polyhydroxypolyether with the polyalkylene terephthalate as illustrated above.

In mixing the above-mentioned polyhydroxypolyether with the polyalkylene terephthalate illustrated above, there may be adopted, without particular limitation, any method commonly used therefor such as melt kneading with ordinary kneading apparatuses.

In the present polyester resin composition, the proportion of the polyhydroxypolyether is usually 1-100 parts by weight, preferably 2-50 parts by weight and especially preferably 3-30 parts by weight based on 100 parts by weight of the polyalkylene terephthalate.

The present polyester composition may be incorporated with other resins to such an extent that no characteristics of the composition are marred, and may be incorporated with additives commonly used in resin composition such as nucleating agents, inorganic fillers, lubricants, slip agents, anti-blocking agents, stabilizers, antistatic agents, anti-fogging agents and pigments.

The present polyester composition may be molded by common molding methods into molded articles of various shapes such as films, sheets, fibers and receptacles which are used in an unstretched state.

The present polyester resin composition may also be stretched-molded into stretched molded articles having various shapes such as films, sheets, fibers and receptacles, and the stretched molded articles thus obtained are further improved in gas barrier properties.

The stretched molded articles of the present polyester resin composition may be those which have been stretched monoaxially or biaxially, and the shape of the articles may be any of film, sheet and fiber.

The stretched molded articles of the present polyester resin composition may be prepared by any methods known, per se. Generally, a film or sheet molded from the polyester resin composition is subjected, as it is, or after cooling it to solidify at a temperature below the glass transition point of said resin composition, to heat treatment at a temperature equal to said glass transition point or the melting point of said resin composition, preferably a temperature of from said glass transition point or melting point to a temperature higher by 80°C than that temperature. The stretched molded article thus obtained is heat-set at a temperature equal to, or higher than, the above-mentioned stretching temperature.

In preparing the stretched molded articles of the present polyester resin composition, there may be adopted when the molded article as first formed from said composition is a film or sheet, the aforementioned monoaxial stretching method, biaxial stretching method, simultaneous biaxial stretching method, the method in which the biaxially stretched film or sheet is further stretched in either direction repeatedly and successively, the method in which the biaxially stretched film or sheet is stretched in both directions, and the so-called vacuum molding method. The stretch ratio employed in the case where the molded article as first formed in monoaxially stretched, is usually 1.1-10 times, preferably 1.2-8 times and especially preferably 1.5-7 times, and when said molded article is biaxially stretched, the stretch ratio employed is usually 1.1-8 times, preferably 1.2-7 times and especially preferably 1.5-6 times in the longitudinal direction, and usually 1.1-8 times, preferably 1.2-7 times and especially preferably 1.5-6 times in the traverse direction.

These stretched molded articles of the present polyester composition may be prepared in the form of a laminate in which the stretched molded article is laminated to a layer of other resin.

The stretched laminate comprising a layer of the present polyester resin composition may be prepared by laminating an unstretched molded article of the polyester resin composition such as a film or sheet to an unstretched molded article of other resin such as a film or sheet, and then stretching the resulting laminate, or by bonding a film or sheet of other resin to a stretched molded article of the polyester resin composition.

The stretched molded articles of the present polyester resin composition obtained in the manner as mentioned above are excellent in such properties as mechanical strength, transparency and gas barrier properties, and may be used in the form of films, sheets, tubes, receptacles, bottles and the like.

The preforms of the present polyester resin composition for stretched blow molded articles are formed from said polyester resin composition.

The present preforms for stretched blow molded articles may be prepared by methods commonly used hitherto.

For instance, the present preforms for polyester blow molded articles may be obtained by fabricating tubular products of the present polyester composition into desired forms.

The present polyester stretched blow molded articles are those formed from the above-mentioned polyester resin composition. The stretched blow molded articles may be prepared, for example, by subjecting the above-mentioned preforms for stretched blow molded articles to stretch blow molding.

The present stretched blow molded articles may be those monoaxially or biaxially stretched. The stretched blow molded articles biaxially stretched are improved in mechanical strength and gas barrier properties.

The stretch ratios employed in the preparation of the present stretched blow molded articles may be the same ones as used in the case of the aforementioned stretched molded articles of the present polyester resin composition. The present polyester stretched blow molded articles of the present invention may be prepared by stretch blow molding the above-mentioned preforms for polyester blow molded articles. The stretch blow molding method employed herein includes, for example, a process in which the above-mentioned preform of the polyester resin composition is stretched in the longitudinal direction within the ranges of stretching temperature for the polyester resin composition as aforesaid, and then the stretched preform is further stretched in the traverse direction by blow molding (a biaxial stretch blow molding method).

The blow molded articles formed from the present polyester resin composition are excellent in the mechanical strength, transparency and gas barrier properties, and may be used for various purposes. Particularly, the biaxially stretched blow molded receptacles or containers of the present invention are excellent in gas barrier properties, and they may be used for containing seasonings, oils, alcoholic beverages, cosmetics and detergents and of course are suitable for containing sparkling beverages such as Coca-Cola, aerated drinks and beer. That is, by virtue of the use of the present stretched molded articles as receptacles or containers as aforesaid, it is possible to minimize the wall thickness thereof in comparison with the conventional ones and prolong the period of time during which the edibles and drinkables

contained therein are relishable.

The polyester resin laminated molded articles of the present invention are illustrated hereinafter.

The present laminated molded articles may be composed of a polyhydroxypolyether layer formed by using any one of the first to third polyhydroxypolyethers of the present invention, as they are, or may be composed of a polyhydroxypolyether layer formed by using a composition obtained by mixing said polyhydroxypolyether with a specific polyalkylene terephthalate.

The specific polyalkylene terephthalate used in the resin composition mentioned above is a polyalkylene terephthalate used as a thermoplastic resin when the present polyhydroxypolyether is used as a gas barrier property imparting agent therefor.

That is, this polyalkylene terephthalate is a polyalkylene terephthalate, the dicarboxylic acid component of which has ethylene terephthalate units as main structural units, and the diol component of which has ethylene glycol units as seed structural units.

In the present polyester laminated molded articles, the proportion of the polyhydroxypolyether is usually 1-100 parts by weight, preferably 2-50 parts by weight and especially preferably 3-30 parts by weight based on 100 parts by weight of the polyalkylene terephthalate when the composition obtained by mixing said polyhydroxypolyether and said polyalkylene terephthalate.

In the present invention, when the polyhydroxypolyether is used alone or the resin composition is used as aforesaid, the resin or resin composition may be incorporated with other resins to such an extent that no characteristics of said resin or resin composition are marred. Further, the resin or resin composition mentioned above may be incorporated with various additives for resin commonly used such as nucleating agents, inorganic fillers, lubricants, slip agents, anti-blocking agents, stabilizers, antistatic agents, anti-fogging agents, pigments, etc.

In the present polyester resin laminated molded articles, a layer to be laminated on the polyhydroxypolyether layer or the layer of the resin composition comprising the polyhydroxypolyether and polyalkylene terephthalate is the layer of the polyalkylene terephthalate composed of ethylene terephthalate component units as main structural units.

The polyalkylene terephthalate from which the layer to be laminated is formed is the same polyalkylene terephthalate as used in preparing the above-mentioned resin composition comprising the polyhydroxypolyether and polyalkylene terephthalate.

Concrete examples of the present laminated molded articles include:

a two-layer laminated molded article composed of a layer of the polyhydroxypolyether layer and a layer of the polyalkylene terephthalate composed of ethylene terephthalate component units as main structural units (hereinafter this layer is called "the polyalkylene terephthalate layer"),

a three-layer laminated molded article composed of the two outer polyalkylene terephthalate layers and the polyhydroxypolyether interlayer,

a three-layer laminated molded article composed of the two outer polyhydroxypolyether layers and the polyalkylene terephthalate interlayer,

a multilayer laminated molded article composed of at least four layers of the polyhydroxypolyether and polyalkylene terephthalate laminated alternately with both outermost layers of the polyalkylene terephthalate,

a multilayer laminated molded article composed of at least four layers of the polyhydroxypolyether and polyalkylene terephthalate laminated alternately with both outermost layers of the polyhydroxypolyether, and

a multilayer laminated molded article composed of at least four layers of the polyhydroxypolyether and polyalkylene terephthalate laminated alternately with the two outermost layers, one of which is composed of the polyhydroxpolyether, and the other is composed of the polyalkylene terephthalate.

In the above-exemplified laminated molded articles, the polyhydroxypolyether layer is the layer formed from the present polyhydroxypolyether as aforesaid, or the layer formed from the resin composition of this polyhydroxypolyether and polyalkylene terephthalate.

There laminated molded articles may be used in various forms such as sheets, plates, tubes, hollow structures, receptacles or containers, and they may be prepared by known methods.

With regard to their thickness, the polyhydroxypolyether and polyalkylene terephthalate layers constituting the above-mentioned laminated molded articles may be suitably decided according to the ultimate use thereof without any particular limitation. For instance, in the case of the above-mentioned two-layer laminated molded article, the polyhydroxypolyether layer has a thickness of usually 4-350 µm, preferably 6-200 µm, and the polyalkylene terephthalate layer has a thickness of usually 8-600 µm, preferably 10-500 µm. In the case of the three-layer laminated molded article of the first-mentioned type, the polyhydroxypolyether interlayer has a thickness of usually 4-350 µm, preferably 6-200 µm, the polyalkylene

terephthalate outer layers each have a thickness of usually 4-300 µm, preferably 5-250 µm. In the case of the three-layer laminated molded article of the latter type, the polyalkylene terephthalate interlayer has a thickness of usually 8-600 µm, preferably 10-500 µm, and the polyhydroxypolyether outer layers each have a thickness of usually 4-100 µm, preferably 6-50 µm. In the case of the multilayer laminated molded articles composed of at least four layers, the polyhydroxypolyether layers and the polyalkylene terephthalate layers either as interlayers or outermost layers may have their thickness present in the same manner as above.

The laminated molded articles as illustrated above are excellent in properties such as stretchability, electrical characteristics particularly electrical insulation, mechanical strength, transparency and gas barrier properties.

The above-mentioned laminates may further be formed into stretched molded articles.

That is, the present stretched laminates molded articles may be prepared by stretching the above-mentioned laminates.

The present stretched, laminated molded articles may be prepared by any of methods, per se, known. Generally, the molded articles as first formed such as a film or sheet composed of a laminate having the above-mentioned polyhydroxypolyether layer are stretched, as they are, or after solidifying them by cooling to a temperature below their glass transition point, at a temperature higher than the glass transition point, preferably at a temperature of from the glass transition temperature to a temperature higher by 80°C than the glass transition point.

In preparing the present stretched, laminated molded articles, there may be adopted, for example, when the molded article as first formed is a film or sheet, the aforementioned monoaxial stretching method, biaxial stretching method, simultaneous biaxial stretching method, method in which the biaxially stretched film or sheet is further stretched in either direction repeatedly and successively, method in which the biaxially stretched film or sheet is stretched in both directions, and the so- called vacuum molding method. The stretch ratio employed in the case where the molded article as first formed is monoaxially stretched, is usually 1.1-10 times, preferably 1.2-8 times and especially preferably 1.5-7 times, and when said molded article is biaxially stretched, the stretch ratio employed is usually 1.1-8 times preferably 1.2-7 times and especially preferably 1.5-6 times in the longitudinal direction, and usually 1.1-8 times, preferably 1.2-7 times and especially preferably 1.5-6 times in the traverse direction.

The present stretched, laminated molded articles are excellent in mechanical strength and gas barrier properties. Particularly, when the present stretched, laminated molded articles are used in electrical components and electronic components, the resulting components are excellent in properties such as mechanical strength, transparency and gas barrier properties. When the stretched, laminated molded articles are films, in particular, they are used as sheathing materials for electrical components, electronic components or metallic components, thereby protecting electrical or electronic circuits for an extended period of time or effectively preventing the metallic components from their being corroded. Further, the stretched laminated films are high in usefulness as materials for condenser, motor, transformer or as those for sheathing electric wire and cable. The stretched laminated films may also be used as food packaging materials. The above-mentioned stretched, laminated molded articles may be used as receptacles or containers for food and aerated beverages, because they have excellent gas barrier properties.

The present preforms for polyester resin blow molded articles may be formed from the above-mentioned polyester resin laminates.

The present preforms may be prepared by the conventional methods used therefor. For instance, the present preforms for polyester blow molded articles may be obtained by molding the above-mentioned polyester resin laminates into tubular forms.

The polyester resin stretched multilayer blow molded articles of the present invention may be prepared by stretched blow molding the above-mentioned preforms for stretched blow molded articles.

The present stretched multilayer blow molded articles may be monoaxially stretched molded articles or biaxially stretched molded articles. Particularly, when the present stretched multilayer blow molded articles are those obtained by biaxial stretching, they are improved in mechanical strength and gas barrier properties.

The present stretched multilayer blow molded articles may be prepared by stretch blow molding the above-mentioned preforms for blow molded articles composed of polyester resin, and in that case the biaxial stretch blow molding method may be adopted therefor.

The present polyester resin multilayer blow molded articles are excellent in mechanical strength, transparency and gas barrier properties, and they may be used for various purposes. The present biaxially stretched blow molded receptacles or containers are particularly excellent in gas barrier properties and hence they are used for containing seasonings, oils, alcoholic beverages, cosmetics, detergents, etc., and of

course are suitable for containers for sparkling beverages such as Coca-Cola, cider, beer, etc. That is, by virtue of using the present stretched molded articles, it is possible to prolong a period of time during which the edibles or drinkables contained in the receptacles or containers formed from the present stretched blow molded articles are relishable, without increasing in wall thickness of the rèceptacles or containers as in the case of conventional ones.

## Effect of the invention

Because of its low content of nonionic organic halogen, polyhydroxypolyether is excellent in transparency and gas barrier properties.

The present polyhydroxypolyether is very favorable is gas barrier properties, transparency and moldability, because no glycidyl group is present at the terminal of molecule and said terminal is completely blocked. By such end termination as mentioned above, excellent characteristics of polyhydroxypolyether such as mechanical strength will not decrease. Further, since the present polyhydroxypolyether has no glycidyl group at the end thereof, it does not undergo reaction even when it is placed under circumstances wherein the reaction is easy to proceed, for example, when it is molded in a molten state or when it is mixed with other resin.

A gas barrier property imparting agent composed of the present polyhydroxypolyether is capable of markedly improving gas barrier properties of other polymers such as polyethylene terephthalate when said agent is incorporated into the other polymers.

The polyether composition of the present invention comprising the above-mentioned polyhydroxypolyether is excellent in melt moldability, stretch moldability, transparency and gas barrier properties, and is markedly excellent as a material for stretched molded article, preform for stretched blow molded article, and stretched blow molded article.

The present polyester resin laminated molded articles, polyester laminated molded articles, preforms for polyester multilayer blow molded articles and polyester stretched multilayer blow molded articles, each having layers containing polyhydroxypolyether having the above-mentioned characteristics, are all excellent in transparency, melt moldability, stretch moldability and gas barrier properties. These molded articles mentioned above are also favorable in mechanical strength.

[Example]

The invention is further illustrated by the following examples in which parts are by weight unless otherwise stated.

The performance assessment of polyhydroxypolyethers was conducted in accordance with the method as mentioned below.

## Methods of Assessment

The composition of polyhydroxypolyethers was determined by the N.M.R. spectrum of the resulting polyhydroxypolyethers.

The intrinsic viscosity [$\eta$] was measured at 25°C in o-chlorophenol.

The glass transition temperature was measured at a raising rate of 10°C/min using a differential scanning calorimeter with regard to a resin sample which was prepared by heating the resulting polyhydroxypolyethers until they has been in the molten flow state and quenching them to room temperature.

The mechanical properties were measured using Instron tensile machine in accordance with a conventional method.

The nonionic organic halogen contents of polyhydroxypolyethers were determined in accordance with the method described in Saito, Oikawa, "Analytical Chemistry", vol 31, E-375, 1982, by which the total halogen contents were measured by a burning flask method (Schöniger method) and then the inorganic halogen contents (free-ionic halogen) were measured by a silver nitrate titration method to obtain the differences in said total halogen contents and said inorganic halogen contents.

More particularly, about 50 mg of polyhydroxypolyethers sample were weighed precisely, decomposed

completely in a flask according to a burning method and a decomposition gas was introduced into 10 ml of water to prepare an adsorption solution. The adsorption solution was measured by a 2000 i type ion chromatography manufactured by Ionex Co., Ltd. in U.S.A. (Column: AS-4 type ion chromatography column available from the same company; eluent: mixed aqueous solution of sodium bicarbonate (2.8 m mol) and sodium carbonate (2.25 m mol); detector: conductimetric detector).

The inorganic halogen (free ionic halogen) content was measured in the following manner. Initially, about 10 g of polyhydroxypolyethers sample were weighed precisely and mixed with 100 ml of cyclohexane, and a mixture was dissolved under heat with stirring, allowed to cool at ordinary temperature and charged with 2 ml of a distilled water and 1 ml of acetic acid to prepare a measuring solution. Subsequently, the measured solution was solution. Subsequently, the measuring solution was titrated with an N/500 isopropyl alcoholic silver nitrate solution using an E-535 type automatic titration apparatus manufactured by Metrol Co., Ltd. (burette volume: 10 ml, electrode: composite silver electrode). A blank test was carried out with no use of polyhydroxypolyether sample. The inorganic halogen contents were calculated from the differences in the contents measured by the blank test and those by the test with use of the sample.

The gas barrier property was assessed by measuring a coefficient of oxygen permeability at 25°C by use of an OXTRAN apparatus manufactured by Mocon Co., Ltd. and a coefficient of carbon dioxide permeability at 25°C by a PERMATRAN C-IV apparatus manufactured by Mocon Co., Ltd.

The color shade was measured using ND-1001 DP differential colorimeter manufactured by Nihon Denshoku Kogyo K.K.

The haze was measured using NDH-20D haze meter manufactured by Nihon Denshoku Kogyo K.K.

## EXAMPLE 1

To a reaction vessel equipped with a stirring means, a reflux means, a distilling-out pipe and a discharge valve at the bottom were charged 2202 parts of hydroquinone, 4010 parts of hydroquinone diglycidyl ether (epoxy content: 8.98 eq/kg, terminal hydroxyl content: 20 eq/$10^6$ g; nonionic chlorine content: 0.3% by weight), 2800 parts of cyclohexanone and 13 parts of 20% aqueous tetraethyl ammonium hydroxide. The reflux means and the distilling-out pipe are both attached to the reaction vessel through valves and they are adapted to distil off a reflux or evaporation component out of the system through the opening and closing of the valve. Further, a reflux pipe is connected to a vacuum apparatus comprising a vacuum pump and a pressure reducing regulator and it is designed to distil off an evaporation substance under reduced pressure.

The polymerization was carried out in the following manner. The reaction system was prepared to permit the reflux by closing a valve to the running tube and opening a valve to the reflux means. Initially, the reaction system was completely purged with nitrogen, heated at about 130°C for about two hours, then elevated to about 150°C and kept at reduced pressure for about three hours under a nitrogen atmosphere with stirring to proceed the reaction.

Subsequently, the valve connected to the reflux pipe was opened and the valve connected to the reflux means was closed. The reaction system was kept at 170°C for about one hour with stirring.

During this process, cyclohexanone was distilled off through the distilling-out pipe and increased viscosity of a reaction product in the system was observed.

The temperature of the reaction system was raised to about 240°C over a period of about one hour, while gradually reducing the pressure of the reaction system from ordinary pressure to about 2 mmHg by operating the vacuum pump, and the reaction system was further kept at about 240°C and 2 mmHg for about one hour. During this process, cyclohexanone and unreacted hydroquinone remaining in the reaction system in small amounts were distilled off.

After the polymerization reaction as mentioned above was completed, the system was returned to ordinary pressure, while lowering the temperature to about 150°C. The discharge valve at the bottom of the reaction vessel was opened to remove the resulting polymer in strand form from the reaction vessel. The polymer was closed through water and cut into pellets using a cutter. Further, the resulting pellets were dried at about 40°C under reduced pressure.

The polymer thus prepared was hydroquinone polyhydroxypolyether having an intrinsic viscosity [$\eta$] of 0.28 dl/g, a glass transition temperature of 57°C and a nonionic organic chlorine content of 0.022% by weight.

## EXAMPLE 2

The polymerization reaction of hydroquinone and hydroquinone diglycidyl ether was carried out using the reaction vessel mentioned in Example 1 in a similar manner as in Example 1 except that the amount of hydroquinone diglycidyl ether was changed to 3679 parts.

After completion of the polymerization, the pressure was returned to ordinary pressure by introducing a nitrogen gas into the system, while lowering the temperature to 130°C. The discharge valve at the bottom of the reaction vessel was opened to removed the resulting polymer from the reaction vessel. The polymer as discharged was in strand form, while the polymer after cooling through the water was brittle, which permitted the pelletizing by a cutter. In this example, however, the polymer was formed into coarse powders using a crusher and withdrawn in its form. The powders were dried under reduced pressure, similarly to Example 1.

The polymer thus prepared was hydroquinone polyhydroxypolyether having an intrinsic viscosity [$\eta$] of 0.16 dl/g, a glass transition temperature of 55°C and a nonionic organic chlorine content of a 0.020% by weight.

## EXAMPLE 3

The initial polymerization was carried out by heating the reaction system at about 130°C for about two hours and then at about 150°C for about three hours using the reaction vessel mentioned in Example 1 in a similar way as in Example 1, except that the amount of hydroquinone diglycidyl ether was changed to 3697 parts. After completion of such initial polymerization, 425 parts of p-cumyl phenol were added to the initial polymer which was further reacted at about 150°C for about one hour.

After opening and closing operation of the valve similarly to Example 1, a post-polymerization reaction was carried out by raising the temperature to about 170°C over a period of one hour, keeping at that temperature for about one hour, further raising the temperature to about 240°C and reducing the pressure to about 2 mmHg over a period of about one hour and maintaining this condition for about one hour. After the polymerization reaction, after-treatment was carried out similarly to Example 1 to afford a pellet-like polymer.

The polymer thus prepared was hydroquinone polyhydroxypolyether having an intrinsic viscosity [$\eta$] of 0.26 dl/g, a glass transition temperature of 57°C and a nonionic organic chlorine content of 0.021% by weight.

## EXAMPLE 4

The polymerization and after-treatment were carried out using the reaction vessel illustrated in Example 1, in a similar way as in Example 1 except that a mixture of 1762 parts of hydroquinone and 745 parts of p,p′-biphenol was employed in place of hydroquinone. There was prepared a pellet-like polymer.

The polymer thus prepared was hydroquinone-p,p′-biphenolcopolyhydroxypolyether was a molar ratio of hydroquinone to p,p′-biphenol of 89 to 11, having an intrinsic viscosity [$\eta$] of 0.26 dl/g, a glass transition temperature of 70°C and a nonionic organic chlorine content of 0.020% by weight.

## EXAMPLES 5-7

100 parts of polyethylene terephthalate (Mitsui PET J135, Mitsui Pet Resin Co., Ltd.) dried at 150°C for 10 hours were mixed with polyhydroxy polyether prepared in Example 1 serving as an agent for imparting gas barrier properties, in the amounts indicated in Table 1. The resulting mixture was extruded under molten condition at a molding temperature of about 250°C to 290°C using an extruder. After cooling the molded product, it was cut using a cutter into pellets having the composition which comprised polyethylene terephthalate and polyhydroxy polyether.

The resulting pellets were pressed into a sheet having a thickness of about 100 $\mu$m.

Thus, the pressed sheet was stretched by a biaxial stretching apparatus to three times simultaneously in the longitudinal and transverse directions to prepare a biaxially oriented film.

All of the resulting biaxially oriented films had a thickness of about 11 μm with a substantially uniform thickness and they were found to be stretched uniformly. The transparency and coefficients of carbon dioxide permeability of the pressed sheets and biaxially oriented films having the present composition are shown in Table 1.

Table 1

| Example | Amount of hydroquinone polyhydroxypolyethers used per 100 parts of polyethylene terephthalate (Parts) | Physical properties of pressed sheet | | Physical properties of biaxially oriented film | |
|---|---|---|---|---|---|
| | | Haze (%) | $CO_2$ permeability coefficient $\left(\frac{ml.mm}{m^2.day.atm}\right)$ | Haze (%) | $CO_2$ permeability coefficient $\left(\frac{ml.mm}{m^2.day.atm}\right)$ |
| 5 | 5 | 1.8 | 21 | 0.3 | 12 |
| 6 | 10 | 4.8 | 18 | 0.5 | 8.2 |
| 7 | 15 | 8.5 | 16 | 1.1 | 6.4 |

## COMPARATIVE EXAMPLE 1

The polyethylene terephthalate used in Example 5 was pressed into a sheet having a thickness of about 100 µm. The haze of the pressed sheet was measured with the result of 1.5% and the coefficient of $CO_2$ permeability was 25 ml.mm/m$^2$.day.atm.

Further, the pressed sheet was biaxially stretched in a similar manner as in Example 5 to prepare a biaxially oriented film having a thickness of about 11 µm.

The haze of the biaxially oriented film was measured with the result of 0.3% and the $CO_2$ permeability coefficient was 15 ml.mm/m$^2$.day.atm.

## EXAMPLES 8-10

About 10 parts each of polyhydroxypolyethers prepared in Examples 2 to 4 were incorporated as an agent for imparting gas-barrier properties into 100 parts of polyethylene terephthalate used in Example 5, and mixed. Further, each of the mixtures was kneaded using an extruder similarly to Example 5 to prepare pellets of the composition.

Similarly to Example 5, each of the pellets was used to prepare a pressed sheet having a thickness of 100 µm.

The transparency and $CO_2$ permeability coefficients of the resulting pressed sheets were measured with the results as shown in Table 2.

Further, these pressed sheets were used to prepare biaxially oriented films having a thickness of about 11 µm in a similar way as in Example 5. The transparency and $CO_2$ permeability coefficients of the biaxially oriented films are shown in Table 2.

Table 2

| Example | Polyhydroxypolyether | Physical properties of pressed sheet | | Physical properties of biaxially oriented film | |
|---|---|---|---|---|---|
| | | Haze (%) | $CO_2$ permeability coefficient $\left(\frac{ml.mm}{m^2.day.atm}\right)$ | Haze (%) | $CO_2$ permeability coefficient $\left(\frac{ml.mm}{m^2.day.atm}\right)$ |
| 8 | Product of Example 2 | 0.7 | 18 | 0.3 | 8.4 |
| 9 | Product of Example 3 | 5.1 | 18 | 0.4 | 7.6 |
| 10 | Product of Example 4 | 4.1 | 17 | 0.3 | 7.7 |

## EXAMPLES 11-13

100 parts of polyethylene terephthalate (Mitsui PET J135, Mitsui Pet Resin Co., Ltd.) dried at 150°C for 10 hours were mixed with polyhydroxypolyether prepared in Example 1 in the amounts indicated in Table 3. The mixture was extruded under molten condition at a molding temperature of about 250°C to 290°C using an extruder. After cooling the molded product, it was cut using a cutter into pellets of the composition comprising polyethylene terephthalate and polyhydroxypolyether.

Further, the resulting pellets were pressed into a sheet having a thickness of about 100 µm.

Then, the pressed sheet of the above composition was stretched by a biaxial stretching apparatus to three times simultaneously in the longitudinal and transverse directions to prepare a biaxially oriented film.

All of the resulting biaxially oriented films had a thickness of about 11 µm with a substantially uniform thickness and they were found to be stretched uniformly.

The transparency and $CO_2$ permeability coefficients of the pressed sheets and biaxially oriented films of the above compositions are shown in Table 3.

Table 3

| Example | Amount of hydroquinone polyhydroxypolyethers used per 100 parts of polyethylene terephthalate (Parts) | Physical properties of pressed sheet | | Physical properties of biaxially oriented film | |
|---|---|---|---|---|---|
| | | Haze (%) | $CO_2$ permeability coefficient $\left(\frac{ml.mm}{m^2.day.atm}\right)$ | Haze (%) | $CO_2$ permeability coefficient $\left(\frac{ml.mm}{m^2.day.atm}\right)$ |
| 11 | 5 | 1.8 | 21 | 0.3 | 12 |
| 12 | 10 | 4.9 | 18 | 0.5 | 8.2 |
| 13 | 15 | 8.5 | 16 | 1.1 | 6.4 |

EXAMPLES 14-16

A mixture of polyethylene terephthalate and polyhydroxypolyether, each prepared in Examples 1, 2 and 3 was injection-molded at a molding temperature of about 270°C using an injection molding machine to prepare a preform (cold parison) having a thickness of about 3.2 mm.

Then, the preform was biaxially stretched-blow molded using a biaxial stretching-blow molding machine to about 2.5 times in the longitudinal direction and about 4 times in the traverse direction to prepare a stretched bottle having an internal volume of about one liter.

The transparency at the sidewall, $CO_2$ permeability coefficients and $O_2$ permeability coefficients of the stretched bottles were measured with the results shown in Table 4.

Table 4

| Example | Composition | Physical properties of biaxially stretched bottle | | |
|---|---|---|---|---|
| | | Haze at the sidewall of bottle (%) | $CO_2$ permeability coefficient $\left(\frac{ml}{day.bottle.atm}\right)$ | $O_2$ permeability coefficient $\left(\frac{ml}{day.bottle.atm}\right)$ |
| 14 | Composition of Example 1 | 0.8 | 3.0 | 0.70 |
| 15 | Composition of Example 2 | 3.7 | 2.1 | 0.58 |
| 16 | Composition of Example 3 | 7.1 | 1.0 | 0.39 |

## COMPARATIVE EXAMPLE 2

The polyethylene terephthalate used in Example 12 was injection molded to prepare a preform consisting of polyethylene terephthalate alone and having the same thickness (abut 3.2 mm) as that of the preform in Example 15.

Subsequently, the preform was biaxially stretched-blow molded similarly to Example 15 to prepare a stretched bottle having an internal volume of about one liter.

The physical properties of the stretched bottle were measured. The haze at the sidewall of the bottle was 0.4% and the $CO_2$ permeability coefficient was 4.0 ml/day.bottle.atm.

## EXAMPLES 17-19

A mixture prepared by mixing 10 parts each of polyhydroxypolyethers illustrated in Examples 2, 3 and 4 with 100 parts of the polyethylene terephthalate used in Example 11 was kneaded using an extruder similarly to Example 12 to prepare pellets of the compositions.

The pellets thus prepared were used to prepare pressed sheets having a thickness of about 100 $\mu$m in a similar manner as in Example 12.

The transparency and $CO_2$ permeability coefficients of the pressed sheets were measured. The result is shown in Table 5.

Further, these pressed sheets were used to prepare biaxially oriented films having a thickness of about 11 $\mu$m in a similar way as in Example 12.

The transparency and $CO_2$ permeability coefficients of the resulting biaxially oriented films are shown in Table 5.

Table 5

| Example | Polyhydroxypolyether | Physical properties of pressed sheet | | Physical properties of biaxially oriented film | |
|---|---|---|---|---|---|
| | | Haze (%) | $CO_2$ permeability coëfficient ($\frac{ml.mm}{m^2.day.atm}$) | Haze (%) | $CO_2$ permeability coëfficient ($\frac{ml.mm}{m^2.day.atm}$) |
| 17 | Product of Example 2 | 0.7 | 18 | 0.3 | 8.4 |
| 18 | Product of Example 3 | 5.1 | 18 | 0.4 | 7.6 |
| 19 | Product of Example 4 | 4.1 | 17 | 0.3 | 7.7 |

## EXAMPLES 20-22

The pellets of the composition comprising polyethylene terephthalate and polyhydroxypolyether, each prepared in Examples 17 to 19 were injection molded to prepare preforms having a thickness of about 3.2 mm in a similar way as in Example 14.

The preforms were biaxially stretched-blow molded similarly to Example 14 to prepare stretched bottles having an internal volume of about one liter.

The transparency at the sidewall and $CO_2$ permeability coefficients of the stretched bottles were measured. The result is shown in Table 6.

Table 6

| Example | Composition | Physical properties of biaxially stretched bottle | | |
|---|---|---|---|---|
| | | Haze at the sidewall of bottle (%) | $CO_2$ permeability coefficient ($\frac{ml}{day.bottle.atm}$) | $O_2$ permeability coefficient ($\frac{ml}{day.bottle.atm}$) |
| 20 | Composition of Example 17 | 1.5 | 1.9 | 0.56 |
| 21 | Composition of Example 18 | 4.9 | 1.8 | 0.51 |
| 22 | Composition of Example 19 | 3.8 | 2.2 | 0.58 |

## Example 23

Polyethylene terephthalate (Mitsui PET J135, Mitsui Pet Co., Ltd.) dried at 150°C for 10 hours was pressed at about 260°C to prepare a pressed sheet having a thickness of about 100 µm.

Separately, a mixture in which hydroquinone polyhydroxypolyether prepared in Example 1 was incorporated in the proportion of 40 parts based on 100 parts of the above polyethylene terephthalate, was subjected to melt extrusion at about 260°-280°C using an extruder to prepare pellets of the composition. Further, the pellets of the composition were pressed at about 260°C to prepare a pressed sheet having a thickness of about 100 µm.

Further, the pressed sheet of polyethylene terephthalate was superposed on the pressed sheet of the composition comprising polyethylene terephthalate and polyhydroxypolyether, and the superposed sheets was pressed at about 260°C to prepare a laminated sheet of two layers and having a thickness of about 150 µm.

The resulting laminated sheet had good adhesion of the polyethylene terephthalate layer to the composition layer and 13% of the haze as measured. The laminated sheet was measured for the gas-barrier property with the result of a coefficient of $CO_2$ permeability being 15 ml.mm/m$^2$.day.atm.

Further, the laminated sheet consisting of the polyethylene terephthalate layer and the composition layer was stretched to three times simultaneously in the longitudinal and traverse directions using a biaxial stretching apparatus to prepare a biaxially oriented film.

The resulting biaxially oriented film had a thickness of about 17 µm and uniform biaxial orientation. Also, the interlaminar bonding between the polyethylene terephthalate layer and the composition layer of the biaxially oriented film was good.

The physical properties of the biaxially oriented film were measured. The haze was 2.4% and a coefficient of $CO_2$ permeability was 5.9 ml.mm/m$^2$.day.atm.

## EXAMPLES 24-26

The pellets of the respective compositions were prepared in a similar way as in Example 23, except that the polyhydroxypolyethers shown in Table 7 were respectively used in the proportion of 40 parts based on 100 parts of polyethylene terephthalate, instead of hydroquinone polyhydroxypolyether in Example 23. Further, there was prepared similarly to Example 23 the laminated sheet of two layers having a thickness of about 150 µm which consisted of the polyethylene terephthalate layer and the composition layer.

The interlaminar bonding between the polyethylene terephthalate layer and the composition layer of the resulting laminated sheet was also good. Further, the physical properties of the resulting biaxially oriented film were measured. The result is shown in Table 7.

Table 7

| Example | Polyhydroxypolyether | Physical properties of laminated sheet | | Physical properties of laminated biaxially oriented film | |
|---|---|---|---|---|---|
| | | Haze (%) | $CO_2$ permeability coefficient $\left(\frac{ml.mm}{m^2.day.atm}\right)$ | Haze (%) | $CO_2$ permeability coefficient $\left(\frac{ml.mm}{m^2.day.atm}\right)$ |
| 24 | Product of Example 2 | 1.3 | 17 | 0.5 | 5.7 |
| 25 | Product of Example 3 | 16 | 18 | 3.1 | 5.4 |
| 26 | Product of Example 4 | 11 | 19 | 2.1 | 6.1 |

## EXAMPLE 27

The polyethylene terephthalate used in Example 23 was first injection molded and then the polyester composition consisting of polyethylene terephthalate and hydroquinone polyhydroxypolyether (weight ratio 100:40) used in Example 23 was again injection molded to prepare a preform having an inner layer consisting of a polyethylene terephthalate layer and an outer layer consisting of a composition layer of hydroquinone polyhydroxypolyether and polyethylene terephthalate, each layer having a thickness of about 1.6 mm.

Subsequently, the preform was heated to a temperature of 85 to 95°C using a heating apparatus utilizing far infrared rays, and stretched to about 2.5 times longitudinally and to about 4.3 times transversely using a stretching blow molding machine to prepare a stretched bottle having an internal volume of about one liter and having two layers wherein the polyethylene terephthalate layer had a thickness of about 150 µm at a minimum wall thickness part and the composition layer had a thickness of about 150 µm at a minimum wall thickness part.

The transparency at the sidewall of the stretched bottle was measured with the result of the haze being 4.9%. The gas barrier property of the stretched bottle was measured with the result of $CO_2$ permeability coefficient being 1.6 ml/day.bottle.atm and $O_2$ permeability coefficient being 0.42 ml/day.bottle.atm.

## EXAMPLE 28

First, the polyethylene terephthalate used in Example 23 was melted using one extruder and separately the composition of polyethylene terephthalate and hydroquinone polyhydroxypolyether (weight ratio 100:40) was melted using the other extruder. Then, the melts were independently fed to a pipe die for three layers of two kinds. A three-layered pipe composed of a polyethylene terephthalate layer/a composition layer/ a polyethylene terephthalate layer (thickness, about 1.2 mm/1.2 mm/1.2 mm) was extruded through the die and cooled to prepare a three-layered pipe having an outside diameter of 24.8 mm and a thickness of 3.6 mm.

The pipe was cut and heat melted at one end to work a bottom and heat melted at the other end to work a top, thus making a preform of 16.5 cm in full length, weighing about 50 g.

Then, the preform was fitted to a biaxial-stretching, blow molding machine (LB01, Corpoplast Co., Ltd.) and biaxially stretched to 2.5 times in a longitudinal direction and to 4 times in a transverse direction to make a multi-layered container having an internal volume of 1.5 liters) polyethylene terephthalate layer/ composition layer/ polyethylene terephthalate layer, about 120 µm/about 120 µm/about 120 µm in thickness).

The physical properties of the multi-layered container were measured. The haze of the sidewall was 3.5%, the $CO_2$ permeability coefficient was 2.3 ml/day.bottle.atm and the $O_2$ permeability coefficient was 0.51 ml/day.bottle.atom.

## EXAMPLE 29

A reaction vessel equipped with a stirrer, a distillation means having a separating means adopted to separate fractions of distillate and return the lowermost layer of the fractions to the reaction vessel and a continuous liquid feeding means was charged with 2202 parts of hydroquinone and 5550 parts of epichlorohydrin, and 663 parts of a 50% aqueous sodium hydroxide solution was added dropwise with stirring over a period of about 90 minutes maintaining at about 65 °C. After the completion of the addition, the reaction was continued for an additional 60 minutes.

Further, 2470 parts of a 50% aqueous sodium hydroxide solution was continuously added dropwise to the system maintained at a temperature of about 70°C over a period of about 120 minutes, while reducing the pressure of the system to about 200 mm Hg. At this time, unreacted epichlorohydrin and water were azeotropically distilled, and hence the water was distilled off and the unreacted eiphalohydrin was returned

to the system.

After the completion of the addition of the 50% aqueous sodium hydroxide solution, the reaction was continued for about 60 minutes additionally.

Subsequently, the temperature of the system was elevated to about 120°C and, at the same time, the pressure of the system was further increased to about 5 mm Hg, and the unreacted epichlorohydrin was completely distilled off from the system.

After the epichlorohydrin was distilled off, the pressure of the system was returned to normal pressure and, at the same time, the temperature of the system was decreased up to about 100°C, and this reaction liquid was incorporated with a mixture comprising 5420 parts of xylene and 7500 parts of water and thoroughly stirred. The reaction liquid thus formed was allowed to stand, whereby it was separated into two phases.

The lower phase (aqueous phase) was removed, and the upper phase (xylene phase) was incorporated with 422 parts of a 6% aqueous sodium hydroxide solution, and the mixture was stirred at about 70° for about 120 minutes. Because the reaction thus formed was alkaline, it was neutralized at about 90° by the addition of 1536 parts of a 10% aqueous sodium dihydrogenphosphate over a period of about 30 minutes.

After the neutralization, the temperature of the reaction liquid was elevated to about 140°C and, at the same time, the pressure of the reaction system was reduced up to about 300 mm Hg, and water present in the system was removed together with the xylene by azeotropic distillation to obtain a xylene solution containing a reaction product, the concentration of which is about 70%. This solution was filtered to remove by separation sodium chloride deposited in the reaction liquid and small amounts of gel formed as a by-product.

The solid was obtained by cooling after the distillating the solution to remove exylene completely over a period of about 60 minutes ata temperature of about 150 °C under a pressure of about 1 mmHg and then crush it into powder.

The thus obtained powder was found to amount to 4026 parts and, as a result of analysis, was identified as a powder consisting essentially of hydroquinone diglycidyl ether and an oligomer formed by addition to this hydroquinone diglycidylether of structural units derived from 1 molecule of hydroquinone and 1 molecule of epichlorohydrin and epoxy equivalent thereof was 135.0g/eq (epoxy content:5.78eq/kg).

Subsequently, a reaction vessel equipped with a stirring means and a refluxing means was charged with 270 parts by hydroquinone diglycidylether and its oligomer prepared in the manner as mentioned above, 99 part of hydroquinone, 165 parts of cyclohexanone and 0.7 part of a 20% aqueous solution of tetraethylammonium hydroxide, the atmosphere inside the reaction vessel was thoroughly replaced with nitrogen gas, the charges were heated up to about 150° with stirring in the nitrogen atmosphere, and the reaction was carried out for about 120 minutes. Evaporation products generated at this time were returned by refluxing to the reaction system.

This reaction was further continued with refluxing at a temperature elevated up to about 170°C for about 120 minutes. From the reaction liquid thus obtained, a specimen was collected by sampling, the collected specimen was heated up to about 140°C and at the same time, evaporation products such as cyclohexanone used as the solvent and the like were removed by reducing pressure until the pressure ultimately became about 1 mm Hg, whereby the reaction product was isolated.

As a result of analysis of the isolated reaction product, it was found that this reaction product was hydroquinone polyhydroxypolyether having intrinsic viscosity [$\eta$] of 0.35 dl/g, about 90% of the terminal group of which was a glycidyl group, and the remainder, about 10%, was a p-hydroxyphenoxy group.

Subsequently, to the remainder of the reaction solution after the sampling was added a mixture comprising 59 parts of p-cresol and 0.2 part of a 20% aqueous solution of tetraethylammonium hydroxide, and the reaction was carried out again under reflux at about 170°C for about 120 minutes. After the lapse of 120 minutes, the apparatus was changed so as to be adapted to distill off the refluxing components out of the system, and the temperature was elevated from about 170°C to 250°C over a period of about 60 minutes to remove the distillate therefrom.

At the point of time when no distillate was observed, the pressure of the reaction system was reduced to about 2 mm Hg in the ultimate.

After reducing the pressure as above, the resulting reaction was further heated at about 250°C for about 60 minutes to completely distil off the evaporation products such as cyclohexanone used as the solvent and unaltered p-cresol.

Subsequently, nitrogen gas was introduced into the reaction system to return the pressure inside the reaction vessel to normal pressure, the reaction mixture was extruded from the reaction vessel into a strand form, cooled by immersing in water, and then cut into pellets.

The pellets thus obtained were dried at about 50°C under reduced pressure.

As a result of analysis of the pellets thus obtained, it was found that the pellets thus obtained consist of hydroquinone polyhydroxypolyether having an intrinsic viscosity [η] of 0.37 dl/g and a glass transition temperature of 60°C, in which about 90% of the terminal group is a p-tolyl group, and the remainder, about 10%, of the terminal group is a p-hydroxyphenyl group, thus the glycidyl group has completely disappeared.

The pellets obtained were tested for shade to find that they have L value (brightness) of 58.5 and b value (yellowness index) of 11.5.

The polyhydroxypolyether thus obtained was press molded into a sheet having a thickness of about 200μm with a press molding machine at about 200°C and a pressure of 50 kg/cm$^2$.

The sheet thus obtained was tested for haze to find that this sheet has a haze of 2.3 and thus has excellent trasnparency.

As a result of measurement of mechanical properties of this sheet, it was found that the sheet has tensile break strength of 410 kg/cm$^2$, tensile elongation at break of 45%, and tensile modulus of 26000 kg/cm$^2$, and thus is excellent in strength.

Gas barrier properties of this sheet were measured to find that the $CO_2$ permeability coefficient was 0.81 ml.mm/m$^2$.day.atm, and the $O_2$ permeability coefficient was 0.27 ml.mm/m$^2$.day.atm.

## EXAMPLE 30

The apparatus used in the preparation of the polyhydroxypolyether of Example 29 was charged with 270 parts of hydroquinone diglycidylether and its oligomer, 101 parts of hydroquinone, 165 parts of cyclohexanone and 0.7 part of a 20% aqueous solution of tetraethylammonium hydroxide, the atmosphere inside the vessel was thoroughly replaced with nitrogen gas, the charges were then heated up to about 140°C with stirring in the nitrogen atmosphere, and the reaction was carried out for about 30 minutes.

Subsequently, in the same manner as in Example 29, the reaction was further continued at about 150°C for about 90 minutes and then at about 170°C for about 120 minutes. From the reaction liquid thus formed, a small amount of specimen was collected by sampling, and the collected specimen was treated in the same manner as in Example 29 to isolate a reaction product. The reaction product thus isolated was assayed to find that this reaction product was identified as hydroquinone polyhydroxypolyether having an intrinsic viscosity [η] of 0.47 dl/g, about 85% of the terminal group of which was a glycidyl group, and the remainder, about 15%, was a p-hydroxyphenoxy group.

Subsequently, to the remainder of the reaction product after the sampling was added a mixture comprising 56 parts of p-methoxyphenyl and 0.2 part of a 20% aqueous solution of tetraethylammonium hydroxide, and the reaction was carried out in the same manner as in Example 29 under reflux at about 170°C for about 120 minutes. Subsequently, the apparatus was changed so as to be adapted to distil off the refluxing components out of the system, the temperature was elevated from about 170°C up to about 250°C over a period of about 60 minutes and, at the same time, the pressure of the reaction system was reduced ultimately to about 2 mm Hg. Thereafter, the reaction mixture was heated at that pressure to about 250°C for about 60 minutes, and the same procedure as in Example 29 was repeated to obtain pellets.

As a result of analysis of the pellets thus obtained, it was found that the pellets obtained consist of hydroquinone polyhydroxypolyether having an intrinsic viscosity [η] of 0.48 dl/g and a glass transition temperature of 61°C, in which about 86% of the terminal group is a p-methoxyphenyl group, and the remainder, about 15%, of the terminal group is a p-hydroxyphenyl group, thus the glycidyl group completely disappeared.

The pellets were tested for shade to find that they have L value (brightness) of 61.0 and b value (yellowness index) of 13.9.

The polyhydroxypolyether thus obtained was press molded in the same manner as in Example 29 to prepare a pressed sheet having a thickness of about 200 μm.

This press sheet had a haze of 2.2%.

As regards mechanical properties, this sheet had a tensile break strength of 430 kg/cm$^2$, tensile elongation at break of 72% and tensile modulus of 28000 kg/cm$^2$. This sheet was tested for gas barrier properties to find that it had a $CO_2$ permeability coefficient of 0.78 ml.mm/m$^2$.day.atm, and an $O_2$ permeability coefficient of 0.26 ml.mm/m$^2$.day.atm.

Subsequently, this pressed sheet was stretched simultaneously with a biaxial stretching apparatus to three times in the longitudinal and traverse directions, respectively, at a temperature of about 70-85°C and a rate of 10 mm/sec to obtain a biaxially oriented film having a thickness of about 22 μm.

This biaxially oriented film was tested for mechanical properties to find that it had a tensile break strength of 450 kg/cm$^2$, tensile elongation at break of 33% and tensile modulus of 34000 kg/cm$^2$. Gas barrier properties of the film were measured, as the result, the $CO_2$ permeability coefficient was 0.77 ml.mm/m$^2$ .day.atm, and the $O_2$ permeability was 0.23 ml.mm/m$^2$.day.atm.

## EXAMPLE 31

With 270 parts of hydroquinone diglycidylether and its oligomer, 104 parts of hydroquinone, 165 parts of cyclohexanone and 0.7 part of a 20% aqueous solution of tetramethylammonium hydroxide, the reaction was carried out in the same manner as in Example 30 at about 140°C for about 30 minutes, at about 150°C for about 90 minutes and then at about 170°C for about 120 minutes.

From the thus obtained reaction liquid, the reaction product was obtained by the same sampling and treatment as in Example 29. The reaction product obtained was identified, on analysis, as hydroquinone polyhydroxypolyether having an intrinsic viscosity [$\eta$] of 0.54 dl/g, in which about 80% of the terminal group was a glycidyl group and the remainder, about 20%, was a p-hydroxyphenoxy group.

The remainder of the reaction liquid after the sampling was charged with a mixture comprising 28 parts of phenol and 0.2 part of a 20% aqueous solution of tetraethylammonium hydroxide, and pellets of the reaction product were obtained by repeating the same operation as in Example 29 which involves reaction, removal of the distillate and post-treatment.

The thus obtained pellets had, on analysis, had an intrinsic viscosity [$\eta$] of 0.55 dl/g and a glass transition temperature of 62°C. About 80% of the terminal group of the polyhydroxypolyether obtained was a phenoxy group, and the remainder of the terminal group, about 20%, was a p-hydroxyphenyl group, thus the glycidyl group completely disappeared.

With this polyhydroxypolyether, the same press molding as in Example 30 was carried out to prepare a pressed sheet having a thickness of about 200 µm.

This pressed sheet had a haze of 2.5%. This pressed sheet was tested for mechanical properties to find that it had a tensile break strength of 455 kg/cm$^2$. tensile elongation at break of 78% and tensile modulus of 29000 kg/cm$^2$. Gas barrier properties of the film were measured, as the result, the $CO_2$ permeability coefficient was 0.7 ml.mm/m$^2$.day.atm, and the $O_2$ permeability coefficient was 0.27 ml.mm/m$^2$.day.atm.

Subsequently, this pressed sheet was stretched in the same manner as in Example 30 to prepare a biaxially oriented film having a thickness of about 22 µm.

This biaxially oriented film was tested for mechanical properties to find that it had a tensile break strength of 465 kg/cm$^2$, tensile elongation at break of 37% and tensile modulus of 34000 kg/cm$^2$. Gas barrier properties of the film were measured, as the result, the $CO_2$ permeability coefficient was 0.75 ml.mm/m$^2$.day.atm, and the $O_2$ permeability coefficient was 0.21 ml.mm/m$^2$.day.atm.

Separately, dried polyethylene terephthalate (MITSUI PET J 125 produced and sold by Mitsui Pet Resin K.K.) was press molded at about 270°C and a pressure of about 50 kg/cm$^2$ to prepare a pressed sheet having a thickness of about 100 µm.

Subsequently, a multi-layer pressed sheet having a thickness of about 200 µm was prepared by press molding so that the pressed sheet of polyhydroxypolyether prepared in Example 30 becomes an interlayer and two pressed sheets of polyethylene terephthalate prepared as above become the two outer layers having interposed said interlayer therebetween.

The adhesion between the polyethylene terephthalate layer and the polyhydroxypolyether layer of this multi-layer pressed sheet was good. The haze of this multi-layer pressed sheet as measured was 1.8%.

Subsequently, this multi-layer pressed sheet was stretched biaxially to three times simultaneously at about 85-95°C in the longitudinal and traverse direction to prepare a pressed sheet having a thickness of about 22µm.

In the biaxially oriented film thus obtained, the thickness of the polyethylene terephthalate layers each had a thickness of about 7µm, and the polyhydroxypolyether layer had a thickness of about 10µm. The adhesion between the polyethylene terephthalate layers and the polyhydroxypolyether layer in the biaxially oriented film was found favorable. The biaxially oriented film was measured for gas barrier properties, with the result that the $CO_2$ permeability coefficient was 1.9 ml.mm/m$^2$.day.atm, and the $O_2$ permeability coefficient was 0.66 ml.mm/m$^2$.day.atm.

## COMPARATIVE EXAMPLE 3

With the same starting materials with the same proportions as in Example 31, the reaction was carried out under the same conditions as in Example 31 to prepare hydroquinone polyhydroxypolyether, about 80% of the terminal group of which is a glycidyl group, and the remainder of the terminal group, about 20%, is a p-hydroxyphenyl group.

The polyhydroxypolyether, without adding anything thereto, was allowed to undergo reaction in the same manner as in Example 31. As the result, a slight increase in viscosity of the system was observed when the polymerization was still in progress at about 170°C, but gelation of the system took place during the subsequent step when the temperature was elevated up to about 250°C, whereby no polyhydroxypolyether having favorable flow characteristics was obtained.

## EXAMPLE 32

A reaction liquid of a hydroxyether compound was obtained by repeating the procedure of Example 29 with the exception that the amount of hydroquinone used was changed to 160 parts, and the reaction temperature and time employed were changed to about 140°C and about 60 minutes, about 150°C and about 60 minutes and to about 170°C and about 90 minutes.

Subsequently, the reaction liquid was incorporated with a mixture comprising 24 parts of phenol and 0.2 part of a 20% aqueous solution of tetraethylammonium hydroxide. allowed again to undergo reaction and, after distilling off the distillate, subjected to post treatment in the manner similar to that of Example 29 to obtain pellets of polyhydroxypolyether.

This polyhydroxypolyether had an intrinsic viscosity [$\eta$] of 0.96 dl/g and a glass transition temperature of 62°C. About 80% of the terminal group of this polyhydroxypolyether was a p-ethylphenyl group, and the remainder, about 20%, of the terminal group was a p-hydroxyphenyl group thus the glycidyl group completely disappeared therefrom.

As a result of investigation on the hue of the pellets of this polyhydroxypolyether, it was found that L value (brightness) was 57.5 and b value (yellowness) was 13.5.

This polyhydroxypolyether was press molded in the same manner as in Example 30 to prepare a pressed sheet having a thickness of about 200µm.

The pressed sheet thus prepared had a haze of 2.3%. Mechanical properties of this pressed sheet as tested showed a tensile break strength of 490 kg/cm$^2$, tensile elongation at break of 76% and tensile modulus of 29000 kg/cm$^2$. Gas barrier properties of the film were measured, as the result, the $CO_2$ permeability coefficient was 0.78 ml.mm/m$^2$.day.atm.

## EXAMPLE 33

A reaction liquid of a hydroxyether compound was obtained by repeating the procedure of Example 29 with the exception that the amount of hydroquinone used was changed to 110 parts, and the reaction temperature and time employed were changed to about 140°C and about 90 minutes and then to about 150°C and about 30 minutes.

After incorporating this reaction liquid with a mixture comprising 40 parts of phenol and 0.2 part of a 20% aqueous solution of tetraethylammonium hydroxide, the subsequent procedure of Example 29 was repeated with the exception that the temperature and time employed for carrying out the reaction and distilling off the evaporation components were changed to about 150°C and about 30 minutes, about 170°C and about 120 minutes, about 60 minutes used for the temperature rise from about 170°C up to 250°C and to about 250°C and about 60 minutes, followed by post-treatment, whereby pellets of polyhydroxypolyether were obtained.

This polyhydroxypolyether had an intrinsic viscosity [$\eta$] of 1.57 dl/g and a glass transition temperature of 63°C. It was found that about 60% of the terminal of this polyhydroxypolyether was a phenyl group, and the remainder, about 40%, of the terminal group was a p-hydroxyphenyl group, thus the glycidyl group completely disappeared therefrom.

As a result of investigation on the hue of the pellets of the polyhydroxypolyether, it was found that L

value (brightness) was 61.6 and b value (yellowness) was 13.1.

Subsequently, this polyhydroxypolyether was press molded in the same manner as in Example 30 to prepare a pressed sheet having a thickness of about 200µm.

The pressed sheet thus prepared had a haze of 2.0%. Mechanical properties of this pressed sheet as tested showed a tensile break strength of 560 kg/cm$^2$, tensile elongation at break of 86% and tensile modulus of 31000 kg/cm$^2$. Gas barrier properties of the pressed sheet were measured, with the result that the $CO_2$ permeability coefficient was 0.75 ml.mm/m$^2$.day.atm.

## EXAMPLE 34

A reaction requid of a hydroxyether compound was obtained by carrying out the reaction at about 140°C for about 30 minutes, about 150°C for about 90 minutes and then at about 170°C for about 120 minutes in the same manner as in Example 31 with the exception of using the hydroquinone in an amount of 117 part.

After incorporating this reaction liquid with a mixture comprising 20 parts of phenol and 0.2 part of a 20% aqueous solution of tetraethylammonium hydroxide, the reaction, removal by distillation of the evaporation components and post-treatment were carried out in the same manner as in Example 31 to obtain pellets of polyhydroxypolyether.

This polyhydroxypolyether had an intrinsic viscosity [$\eta$] of 0.58 dl/g and a glass transition temperature of 63°C. About 20% of the terminal group of the polyhydroxypolyether was a phenyl group, and the remainder, about 80%, of the terminal group was a p-hydroxyphenyl group, thus the glycidyl group completely disappeared therefrom.

As a result of investigation on the hue of the pellets of this polyhydroxypolyether, it was found that L value (brightness) was 56.9 and b value (yellowness) was 12.8.

Subsequently, this polyhydroxypolyether was press molded in the same manner as in Example 29 to prepare a pressed sheet having a thickness of about 200µm. The pressed sheet thus prepared had a haze of 2.1%. Mechanical properties of this pressed sheet as tested showed a tensile break strength of 460 kg/cm$^2$, tensile elongation at break of 75% and tensile modulus of 28500 kg/cm$^2$.

A biaxially oriented film having a thickness of about 22µm was prepared from this pressed sheet by treating it in the same manner as in Example 30.

Mechanical properties of this film as tested showed a tensile break strength of 480 kg/cm$^2$, tensile elongation at break of 38% and tensile modulus of 34500 kg/cm$^2$. Gas barrier properties of this biaxially oriented film were measured, with the result that the $CO_2$ permeability coefficient was 0.74 ml.mm/m$^2$.day.atm, and the $O_2$ permeability coefficient was 0.24 ml.mm/m$^2$.day.atm.

## COMPARATIVE EXAMPLE 4

In Example 31, the same starting materials were used except 20 parts of phenol, and the reaction, removal by distillation of the evaporation components and post-treatment were carried out to obtain pellets of polyhydroxypolyether.

This polyhydroxypolyether had an intrinsic viscosity [$\eta$] of 0.69 dl/g and a glass transition temperature of 63°C. The terminal group of this polyhydroxypolyether was almost a p-hydroxyphenyl group, but there was observed such terminal as formed by addition of the solvent cyclohexanone to the glycidyl group.

As a result of investigation on the hue of this polyhydroxypolyether, it was found that L value (brightness) was 22.8 and b value (yellowness) was 24.8, thus the hue of this polyhydroxypolyether was markedly inferior to that of the present polyhydroxypolyether.

Subsequently, this polyhydroxypolyether was press molded in the same manner as in Example 29 to prepare a pressed sheet having a thickness of about 200µm.

Mechanical properties of this pressed sheet as tested showed a tensile break strength of 450 kg/cm$^2$, tensile elongation at break of 52% and tensile modulus of 30500 kg/cm$^2$. This pressed sheet had a haze of 7.6, and thus this polyhydroxypolyether was inferior in transparency to the present polyhydroxypolyether.

## EXAMPLE 35

A reaction liquid of a hydroxyether compound was obtained by repeating the procedure of Example 31 with the exception of using the hydroquinone in an amount of 121 parts.

After incorporating this reaction liquid with a mixture comprising 22 parts of p-cresol and 0.2 part of a 20% aqueous solution of tetraethylammonium hydroxide, the reaction, removal by distillation of the evaporation component and post-treatment were carried out in the same manner as in Example 32 to obtain pellets of polyhydroxypolyether.

This polyhydroxypolyether had an intrinsic viscosity [$\eta$] of 0.33 dl/g and a glass transition temperature of 60°C. About 15% of the terminal group of this polyhydroxypolyether was a p-toly group, and the remainder, about 85%, of the terminal group was a p-hydroxyphenyl group, thus the glycidyl group completely disappeared therefrom.

The hue of the pellets of this polyhydroxypolyether showed L value (brightness) of 55.4 and b value (yellowness) of 16.0.

This polyhydroxypolyether was press molded in the same manner as in Example 29 to prepare a pressed sheet having a thickness of about 200µm. This pressed sheet had a haze of 2.0%.

EXAMPLE 36

A reaction liquid of a hydroxyether compound was obtained by repeating the procedure of Example 31 with the exception of using 165 parts of methyl isobutyl ketone in place of the cyclohexanone and of operating the reaction system under pressure.

After incorporating this reaction liquid with a mixture comprising 41 parts of 4,4′-hydroxyacetophenone and 0.2 part of a 20% aqueous solution of tetraethylammonium hydroxide, the reaction was carried out at about 170°C for about 120 minutes in the same manner as in Example 31 with the exception of operating the reaction system under pressure. Thereafter, the system was modified to be adapted to remove the evaporation components by distillation under pressure, and the temperature was elevated from about 170°C up to about 250°C over a period of about 60 minutes and, at the same time, the pressure of the system was gradually reduced to distil off the evaporation components under reduced pressure.

Subsequently, the evaporation components were completely distilled off at about 250°C and an ultimately reduced pressure of about 2 mm Hg, and thereafter the same post-treatment as in Example 31 was effected to obtain pellets of polyhydroxypolyether.

This polyhydroxypolyether had an intrinsic viscosity [$\eta$] of 0.57 dl/g and a glass transition temperature of 61°C. About 85% of the terminal group of this polyhydroxypolyether was a p-acetylphenyl group, and the remainder, about 15%, of the terminal group was a p-hydroxyphenyl group, thus the glycidyl group completely disappeared therefrom.

The hue of this polyhydroxypolyether showed L value (brightness) of 61.3 and b value (yellowness) of 11.4.

This polyhydroxypolyether was press molded in the same manner as in Example 30 to prepare a pressed sheet having a thickness of about 200µm.

This pressed sheet had a haze of 1.8%. Mechanical properties of this pressed sheet as tested showed a tensile break strength of 470 kg/cm$^2$, tensile elongation at break of 70% and tensile modulus of 27000 kg/cm$^2$. Gas barrier properties of this pressed sheet were examined, with the result that the $CO_2$ permeability coefficient was 0.81 ml.mm/m$^2$.day.atm.

EXAMPLE 37

A reaction vessel equipped with a stirrer, a distillation means having a separating means adapted to separate fractions of distillate and return only the upper layer of the fraction to the reaction vessel and a continuous liquid feeding means was charged with 2202 parts of hydroquinone, 2406 parts of epichlorohydrin and 3680 parts of cyclohexanone, and then 120 parts of a 50% aqueous solution of sodium hydroxide was added with stirring while maintaining the temperature at about 70°C. Subsequently, the temperature of the system was elevated up to about 100°C over a period of about 60 minutes.

To this system was added 2168 parts of a 50% aqueous solution of sodium hydroxide over a period of

about 90 minutes. At this time, water was distilled off together with the cyclohexanone, and hence only the cyclohexanone separated from the water was returned to the reaction vessel. After the addition of the 50% aqueous solution of sodium hydroxide, such operation as above was continuously conducted for about 60 minutes.

Subsequently, this system was charged with 5000 parts of water, stirred and allowed to stand, whereby the system was separated into two phases. The water phase was removed, and the remaining reaction liquid was washed with water. Such water-washing operation was repeated twice additionally.

Subsequently, to this reaction liquid was added 406 parts of a 10% aqueous solution of sodium dihydrogenphosphate, and the mixture was stirred at about 60°C for about 15 minutes. Thereafter, this sytem was charged with 5000 parts of water, stirred and allowed to stand, followed by separating and washing. This washing operation was conducted twice more.

After washing, the distillation was conducted at about 90°C under reduced pressure to distil off water and the solvent cyclohexanone as an azeotrope. This distillation operation was continued until water present in the system distilled off and the distillate separated into two phases no longer.

A part of the thus obtained reaction liquid contaminated with the solvent cyclohexanone was collected, and this cyclohexanone was distilled off at about 110°C under high vacuum. As the result, it was found that the concentration of the reaction product in the reaction liquid was 66.5%. As a result of analysis of this reaction product from which the cyclohexanone had been removed, it was found that the reaction product was an oligomer of hydroquinone diglycidylether having an epoxy equivalent of 310 g/ep (epoxy content: 3.23 eq/lg).

Subsequently, the reaction vessel used for the preparation of polyhydroxypolyether in Example 29 was charged with 932 parts of a solution of the oligomer of hydroquinone diglycidyl ether thus obtained, 97 parts of hydroquinone and 0.9 part of tri-n-butylamine, and the procedure of Example 29 was repeated with the exception that the reaction was carried out at about 150°C for about 30 minutes and then at about 170°C for about 120 minutes to obtain a reaction liquid of a hydroxyether compound.

The reaction liquid thus obtained was subjected to sampling in the same manner as in Example 29, and the fractions of distillate such as the solvent cyclohexanone and the like were distilled off at about 140°C under reduced pressure. As a result of identification, it was found that the resulting reaction product was hydroquinone polyhydroxypolyether having an intrinsic viscosity [$\eta$] of 0.56 dl/g, about 90% of the terminal of which is a glycidyl group.

Subsequently, this system was charged with a mixture comprising 52 parts of phenol and 0.3 part of tri-n-butylamine. Subsequently, in the same manner as in Example 29, the reaction and distillation were carried out as follows. The reaction system was heated again under reflux at about 170°C for about 120 hours and then, the temperature was elevated from about 170°C to 250°C over a period of about 60 minutes and at the same time, the pressure of reaction system was reduced, and the apparatus was further heated at about 250 °C for 60 minutes until the pressure ultimately became about 2 mmHg. The post-treatment as in Example 29 was repeated to obtain pellets of polyhydroxypolyether.

As a result of analysis of the pellets thus obtained, it was found that they had an intrinsic viscosity [$\eta$] of 0.54 dl/g and a glass transition temperature of 61°C. It was further found that about 90% of the terminal group of this polyhydroxypolyether was a p-phenyl group, thus the glycidyl group completely disappeared therefrom. The hue of the pellets of this polyhydroxypolyether as determined showed L value (brightness) of 64.6 and b value (yellowness) of 13.2.

The polyhydroxypolyether thus obtained was press molded in the same manner as in Example 29 to prepare a pressed sheet having a thickness of about 200$\mu$m.

This pressed sheet had a haze of 1.9%. Mechanical properties of this sheet as measured showed a tensile break strength of 445 kg/cm$^2$, tensile elongation at break of 74% and tensile modulus of 29000 kg/cm$^2$.

Gas barrier properties of this sheet as measured showed the $CO_2$ permeability coefficient of 0.77 ml.mm/m$^2$.day.atm.

Subsequently, the polyethylene terephthalate used in Example 31 was press molded in the same manner as in Example 31 to prepare a pressed sheet having a thickness of about 200$\mu$m.

This pressed sheet of polyethylene terephthalate was superposed on the pressed sheet of polyhydroxypolyether prepared previously, and the combined sheet was press molded in the same manner as in Example 29 to prepare a multilayer pressed sheet having a thickness of about 200$\mu$m.

The adhesion between the polyethylene terephthalate layer and the polyhydroxypolyether layer of this pressed sheet was good. The haze of this multilayer pressed sheet as measured was 1.8%.

Subsequently, this multilayer pressed sheet was stretched biaxially in the same manner as in Example 31 to prepare a biaxially oriented film having a thickness of about 22$\mu$m. In the biaxially oriented film thus

prepared the adhesion between the polyethylene terephthalate layer and the polyhydroxypolyether layer was good. Gas barrier properties of this multilayer pressed sheet as measured showed the $CO_2$ permeability coefficient of 1.5 ml.mm/m$^2$.day.atm.

## EXAMPLE 38

In the process for the preparation of hydroquinone diglycidyl ether oligomer disclosed in Example 37, the same procedure of Example 37 was repeated with the exception that the amount of epichlorohydrin used was changed to 2128 parts, whereby a solution of hydroquinone diglycidyl ether oligomer.

From this solution, the hydroquinone diglycidyl ether oligomer was isolated by sampling and distilling off the cyclohexanone therefrom. As a result of determination, it was found that the concentration of this oligomer in the reaction liquid was 70.4%, and the oligomer had an epoxy equivalent of 1120 g/eq (epoxy content: 0.89 eq/kg).

Subsequently, the same reaction vessel as used for the preparation of polyhydroxypolyether in Example 37 was charged with 318 parts of the solution of hydroquinone diglycidyl ether oligomer thus obtained, 9.2 parts of hydroquinone and 0.9 part of a 40% aqueous solution of tetrabutylammonium hydroxide, and the reaction was carried out at about 150 °C for about 30 minutes and then at about 170 °C for 120 minutes as the same manner in Example 37 to obtain a reaction liquid of a hydroxyether compound.

After charging this reaction liquid with a mixture comprising 8 parts of phenol and 0.3 part of a 40% aqueous solution of tetrabutylammonium hydroxide, the same procedure as in Example 37, including reaction, removal of distillates and post-treatment, was carried out to obtain pellets of polyhydroxypolyether.

On analysis, the pellets obtained had an intrinsic viscosity [$\eta$] of 0.67 dl/g and a glass transition temperature of 63°C. More than about 90% of the terminal group of this polyhydroxypolyether was a phenyl group, thus the glycidyl group completely disappeared therefrom.

On investigation, the hue of this polyhydroxypolyether showed L value (brightness) of 66.2 and b value (yellowness) of 11.9.

## EXAMPLE 39

The end terminated hydroquinone polyhydroxypolyether prepared in Example 31 by reaction with phenol was extrusion molded with an extruder equipped with T-die at a temperature of from about 160°C to about 250°C to prepare an extruded sheet having a thickness of about 80µm. This extruded sheet had a haze of 1.0%. On examination of mechanical properties, this extruded sheet had a tensile break strength of 480 kg/cm$^2$ (direction of flow) to 440 kg/cm$^2$ (perpendicular to the direction of flow), elongation of 77% (direction of flow) to 70% (perpendicular to the direction of flow), and tensile modulus of 32000 kg/cm$^2$ (direction of flow) to 29000 kg/cm$^2$ (perpendicular to the direction of flow). This extruded sheet had the $CO_2$ permeability coefficient of 0.82 ml.mm/m$^2$.day.atm.

With a biaxial stretching apparatus, the extruded sheet was stretched at a temperature of about 70°C to about 90°C first to two times in the traverse direction (perpendicular to the flow) and then to three times in the longitudinal direction (the flow) to prepare a biaxially oriented film having an average thickness of about 13µm. Mechanical properties of this biaxially oriented film as tested showed a tensile break strength of 590 kg/cm$^2$ (direction of flow) to 540 kg/cm$^2$ (perpendicular to the direction of flow), elongation of 41% (direction of flow) to 36% (perpendicular to the direction of flow) and tensile modulus of 40000 kg/cm$^2$ (direction of flow) to 37000 kg/cm$^2$ (perpendicular to the direction of flow). This biaxially oriented film had the $CO_2$ permeability coefficient of 0.76 ml.mm/m$^2$.day.atm.

## EXAMPLE 40

The end terminated hydroquione polyhydroxypolyether prepared in Example 34 by reaction with phenol was extrusion molded in the same manner as in Example 39 to prepare an extruded sheet having a thickness of about 80µm. The haze of this extruded sheet as measured was 1.3%. Mechanical properties of this extruded sheet as tested showed a tensile break strength of 500 kg/cm$^2$ (direction of flow) to 480

kg/cm$^2$ (perpendicular to the direction of flow), elongation of 79% (direction of flow) to 70% (perpendicular to the direction of flow), and tensile modulus of 33000 kg/cm$^2$ (direction of flow) to 31000 kg/cm$^2$ (perpendicular to the direction of flow). This extruded sheet had the $CO_2$ permeability coefficient of 0.83 ml.mm/m$^2$.day.atm.

The extruded sheet was stretched with a biaxial stretching apparatus first in the traverse direction (perpendicular to flow) to two times and then in the longitudinal direction (flow) to three times to prepare a biaxially oriented film having a thickness of about 13µm. Mechanical properties of this biaxially oriented film as tested showed a tensile break strength of 650 kg/cm$^2$ (direction of flow) to 570 kg/cm$^2$ (perpendicular to the direction of flow), elongation of 38% (direction of flow) to 36% (perpendicular to the direction of flow), and tensile modulus of 41000 kg/cm$^2$ (direction of flow) to 39000 kg/cm$^2$ (perpendicular to the direction of flow). The biaxially oriented film had the $CO_2$ gas permeability coefficient of 0.74 ml.mm/m$^2$.day.atm.

## EXAMPLE 41

A dried polyethylene terephthalate (MITSUI PET J 135 produced by Mitsui Pet Resin K.K.) was melted in one extruder. Separately, the end terminated hydroquinone polyhydroxypolyether prepared in Example 31 by reaction with phenol was melted in another extruder. These melts were respectively fed to a T-die of the two-kind three-layer type to extrude a co-extruded sheet composed of polyethylene terephthalate/hydroquinone polyhydroxypolyether/polyethylene terephthalate (thickness: about 40µm/20µm/40µm). This co-extruded sheet was transparent, and the adhesion between the polyethylene terephthalate layer and the hydroquinone polyhydroxypolyether layer was good. The co-extruded sheet had a haze of 0.8%.

This co-extruded multilayer sheet was stretched with a biaxial stretching apparatus in Example 39 at a temperature of about 80°C to about 100°C first in the traverse direction (perpendicular to the flow) to two times and then in the longitudinal direction (the flow) to three times to prepare a biaxially oriented film of the two-kind three-layer type having an average thickness of about 17µm. In the laminated biaxially oriented film, the adhesion between the hydroquinone polyhydroxypolyether layer and the polyethylene terephthalate layer was good, and said hydroquinone polyhydroxypolyether and said polyethylene terephthalate layer each had a thickness of about 3µm and of about 7µm. Mechanical properties of this laminated biaxially oriented film as tested showed a tensile break strength of 1400 kg/cm$^2$ (direction of flow) to 1100 kg/cm$^2$ (perpendicular to the direction of flow), elongation of 68% (direction of flow) to 45% (perpendicular to the direction of flow) and tensile modulus of 42000 kg/cm$^2$ (direction of flow) to 37000 kg/cm$^2$ (perpendicular to the direction of flow). The biaxially oriented film had the $CO_2$ permeability coefficient of 3.7 ml.mm/m$^2$.day.atm.

## EXAMPLE 42

The pressed sheet of the hydroquinone polyhydroxypolyether and terminated by reaction with phenol prepared in Example 37 and the pressed sheet having a thickness of about 100µm prepared by compression molding the same dried polyethylene terephthalate as used in Example 42 at a temperature of about 270°C and a pressure of 50 kg/cm$^2$ were laid one on top of the other, and then pressure of 50 kg/cm$^2$ to prepare a multilayer pressed sheet having a thickness of about 150µm. In the multilayer pressed sheet, the adhesion between the hydroquinone polyhydroxypolyether layer and the polyethylene terephthalate layer was good. This multilayer pressed sheet had a haze of 1.3%.

This multilayer pressed sheet was biaxially stretched simultaneously at a temperature of 80-90°C to prepare a biaxially oriented film having an average thickness of about 17µm. In the biaxially oriented film thus obtained, the thickness of the hydroquinone polyhydroxypolyether was about 8µm, and that of the polyethylene terephthalate layer was about 9µm. The adhesion between the hydroquinone polyhydroxypolyether layer and the polyethylene terephthalate layer in the biaxially oriented film was good. Mechanical properties of this laminated biaxially oriented film as tested showed a tensile break strength of 1050 kg/cm$^2$, elongation of 45% and tensile modulus of 28500 kg/cm$^2$. This biaxially oriented film had the $CO_2$ permeability coefficient of 2.0 ml.mm/m$^2$.day.atm.

## COMPARATIVE EXAMPLE 5

The same dried polyethylene terephthalate as used in Example 41 was pressed molded to prepare a pressed sheet having a thickness of about 100µm. Mechanical properties of this pressed sheet as tested showed a tensile break strength of 480 kg/cm$^2$ and elongation of 82%. Gas barrier properties of the pressed sheet as measured showed the $CO_2$ permeability coefficient of 24 ml.mm/m$^2$.day.atm, and the $O_2$ permeability coefficient of 4.6 ml.mm/m$^2$.day.atm.

This pressed sheet was biaxially stretched simultaneously in the same manner as in Example 42 to three times in the longitudinal and traverse directions to prepare a biaxially oriented film having a thickness of about 11µm. Mechanical properties of this biaxially oriented film as tested showed a tensile break strength of 1550 kg/cm$^2$, elongation of 55% and tensile modulus of 46000 kg/cm$^2$. Gas barrier properties of this biaxially oriented film as tested showed the $CO_2$ permeability coefficient of 15 ml.mm/m$^2$.day.atm and the $O_2$ permeability coefficient of 2.6 ml.mm/m$^2$.day.atm.

## EXAMPLE 43

A mixture comprising 100 parts of polyethylene terephthalate (MITSUI PET J 125, a product of Mitsui Pet Resin K.K.) dried at 150°C for 10 hours and 10 parts of the polyhydroxypolyether of Example 29 vacuum dried at 50°C for 12 hours was melt extruded with an extruder at a temperature of about 250-290°C. After cooling, the extrudate was cut to prepare pellets of a composition of polyethylene terephthalate and polyhydroxypolyether. The pellets were press molded to prepare a pressed sheet having a thickness of about 100µm. The pressed sheet obtained was colorless. The pressed sheet of this composition had a tensile break strength of 440 kg/cm$^2$ and elongation of 78%, and the $CO_2$ and $O_2$ permeabilities of this sheet as measured were 19 ml.mm/m$^2$.day atm and 3.5 ml.mm/m$^2$.day.atm, respectively.

The pressed sheet of this composition was stretched simultaneously with a biaxial stretching apparatus to three times in the longitudinal and traverse direction to prepare a biaxially oriented film.

The biaxially oriented film obtained had a thickness of about 11µm, and the film was found to be stretched uniformly with less thickness irregularities. This film had a tensile break strength of 1480 kg/cm$^2$, elongation of 52% and tensile modulus of 38000 kg/cm$^2$. The $CO_2$ permeability of the film was 8.2 ml.mm/m$^2$.day.atm.

## EXAMPLES 44-50

Pressed sheets each having a thickness of about 100µm were prepared by repeating Example 43 except that there were used compositions prepared by using polyethylene terephthalates or polyhydroxypolyethers in the proportions as indicated in Table 8 in place of the polyethylene terephthalate and polyhydroxypolyether used in Example 43. The mechanical properties and $CO_2$ permeability coefficients of the pressed sheets of the compositions obtained were as shown in Table 8.

Subsequently, these pressed sheets of the compositions were individually stretched simultaneously in the longitudinal and traverse direction to three times in the same manner as in Example 44 to prepare biaxially oriented films. The biaxially oriented films had an average thickness as shown in Table 8, and they were uniformly stretched. The mechanical properties and $CO_2$ permeability coefficients of these biaxially oriented films were as shown in Table 8.

Table 8

| Example | Constituent of composition: Starting material: Polyethylene terephthalate *1 | Constituent of composition: Starting material: Polyhydroxy-polyether | Amount of polyhydroxypolyether per 100 parts of polyethylene terephthalate (wt. parts) |
|---|---|---|---|
| 44 | Mitsui Pet J-135 | Ex.31 | 10 |
| 45 | Mitsui Pet J-135 | Ex.31 | 40 |
| 46 | Mitsui Pet J-135 | Ex.31 | 80 |
| 47 | Mitsui Pet J-135 | Ex.32 | 10 |
| 48 | Mitsui Pet J-125 | Ex.34 | 10 |
| 49 | Mitsui Pet J-125 | Ex.36 | 10 |
| 50 | Mitsui Pet J-125 | Ex.38 | 10 |

*1 Product of Mitsui Pet Resin K.K.

| Properties of pressed sheet: Tensile break strength ($kg/cm^2$) | Properties of pressed sheet: Elongation (%) | Properties of pressed sheet: $CO_2$ permeability coefficient (mL.mm/m$^2$.day.atm) | Properties of biaxially oriented film: Average thickness (μm) | Properties of biaxially oriented film: Tensile break strength ($kg/cm^2$) | Properties of biaxially oriented film: Elongation (%) | Properties of biaxially oriented film: Tensile modulus ($kg/cm^2$) | Properties of biaxially oriented film: $CO_2$ permeability coefficient (mL.mm/m$^2$.day.atm) |
|---|---|---|---|---|---|---|---|
| 530 | 68 | 18 | 11 | 1630 | 40 | 51000 | 8.1 |
| 490 | 59 | 13 | 11 | 1540 | 34 | 51000 | 5.4 |
| 465 | 53 | 9.5 | 11 | 1510 | 25 | 49000 | 2.1 |
| 540 | 50 | 19 | 11 | 1660 | 31 | 51000 | 8.2 |
| 480 | 53 | 18 | 11 | 1530 | 38 | 47000 | 8.0 |
| 465 | 67 | 18 | 11 | 1540 | 42 | 46000 | 8.3 |
| 460 | 64 | 18 | 11 | 1510 | 44 | 48000 | 8.0 |

## COMPARATIVE EXAMPLE 6

The polyethylene terephthalate of Example 44 was press molded to prepare a pressed sheet having a thickness of about 100µm. This pressed sheet had a tensile break strength of 480 kg/cm$^2$ and elongation of 82%, and also had the $CO_2$ permeability coefficient of 24 ml.mm/m$^2$.day.atm.

This pressed sheet was biaxially stretched in the same manner as in Example 44 to three times simulatneously in the longitudinal and traverse directions to prepare biaxially oriented film having a thickness of about 11µm. This biaxially oriented film had a tensile break strength of 1550 kg/cm$^2$, elongation of 55% and tensile modulus of 46000 kg/cm$^2$, and also had the $CO_2$ permeability coefficient of 15 ml.mm/m$^2$.day.atm.

## EXAMPLE 51

The mixture of the polyethylene terephthalate and polyhydroxypolyether used in Example 45 was extruded with an extruder equipped with a T-die at a barrel temperature of about 160°C to about 280°C to prepare an extruded sheet having a thickness of about 80µm. This extruded sheet of the composition had a tensile break strength of 477 kg/cm$^2$ (direction of flow) to 452 kg/cm$^2$ (perpendicular to the direction of flow), and elongation of 80% (direction of flow) to 66% (perpendicular to the direction of flow), and also had the $CO_2$ permeability coefficient of 17 ml.mm/m$^2$.day.atm. This extruded sheet of the composition was stretched with a biaxial stretching apparatus at a temperature of about 85°C to about 100°C to two times in the traverse direction (perpendicular to the flow) and then to three times in the longitudinal direction (direction of the flow) to prepare a biaxially oriented film. The biaxially oriented film of the composition had a tensile break strength of 1650 kg/cm$^2$ (direction of the flow) to 1540 kg/cm$^2$ (perpendicular to the flow), elongation of 45% (direction of the flow) to 35% (perpendicular to the flow) and tensile modulas of 52000 kg/cm$^2$ (direction of the flow) to 45000 kg/cm$^2$ (perpendicular to the flow). The $CO_2$ permeability coefficient of this biaxially oriented film was 8.0 ml.mm/m$^2$.day.atm.

## EXAMPLE 52

The mixture of polyethylene terephthalate and polyhydroxypolyether used in Example 45 was injection molded with an injection molding machine at a molding temperature of about 270°C to prepare a preform (cold parison) having a thickness of 3.2 mm. The preform was stretched biaxially to about 2.5 times in the longitudinal direction and to about 4 times in the traverse direction by a biaxial stretching blow-molding machine to prepare a stretched bottle having an inner capacity of about 1 liter. The stretched bottle had a $CO_2$ permeability of 2.0 ml/day.bottle.atm.

## COMPARATIVE EXAMPLE 7

The polyethylene terephthalate used in Example 43 was injection molded to prepare a preform composed only of the polyethylene terephthalate layer having the same thickness (about 3.2 mm) as that of the preform of Example 52. Ths preform was stretch blow-molded in the same manner as in Example 52 to prepare a stretched bottle having an inner capacity of about 1 liter. The stretched bottle had a $CO_2$ permeability of 4.0 ml/day.bottle.atm.

## EXAMPLE 53

The pressed sheet of the end terminated hydroquinone polyhydroxypolyether as obtained in Example 29 and a pressed sheet having a thickness of about 100 m prepared by compression molding a dried polyethylene terephthalate (MITSUI PET J 135, a product of Mitsui Pet Resin K.K.) were laid one on top of the other, and then press molded at a temperature of about 270°C and a pressure of 50 kg/cm$^2$ to prepare a multilayer pressed sheet having a thickness of about 150µm. The adhesion between the hydroquinone polyhydroxypolyether layer and the polyethylene terephthalate layer in this multilayer pressed sheet was good. The multilayer pressed sheet had a haze of 1.3%.

This multilayer pressed sheet was biaxially stretched at a temperature of 80-95°C simultaneously to three times in the longitudinal and traverse directions to prepare a biaxially oriented film having an average thickness of 17µm. In the biaxially oriented film, a thickness of the hydroquinone polyhydroxypolyether layer was about 8µm, and that of the polyethylene terephthalate layer was about 9µm. The adhesion between the polyhydroxypolyether layer and the polyethylene layer in this biaxially oriented film was good. This biaxially oriented film had a tensile break strength of 1050 kg/cm$^2$, elongation of 45% and tensile modulus of 28500 kg/cm$^2$, and also had a $CO_2$ permeability coefficient of 2.0 ml.mm/m$^2$.day.atm.

EXAMPLES 54-58

Multilayer pressed sheets each having a thickness of about 150µm were prepared by repeating the same procedure as in Example 53 except that in place of the hydroquinone polyhydroxypolyether and polyethylene terephthalate used in Example 53, there were used hydroquinone polyhydroxypolyether and polyethylene terephthalates as shown in Table 9 in the proportions as indicates in Table 9. In each of the multilayer pressed sheet, the adhesion between the hydroquinone polyhydroxypolyether layer and the polyethylene terephthalate layer was good.

These pressed sheets were individually stretched biaxially in the same manner as in Example 53 to prepare biaxially oriented films each having an average thickness of 17µm. In the biaxially oriented films, thicknesses of the hydroquinone polyhydroxypolyether and polyethylene terephthalate layer were about 8µm and about 9µm, respectively, and each film in a uniformly stretched state. The results of mechanical properties and $CO_2$ permeability coefficients of these biaxially oriented films were as shown in Table 9.

Table 9

| Example | Resin constituting pressed sheet | | Properties of biaxially oriented film | | | |
|---|---|---|---|---|---|---|
| | Polyethylene terephthalate *1 | Hydroquinone polyhydroxy-polyether | Tensile break strength ($kg/cm^2$) | Elongation (%) | Tensile modulus ($kg/cm^2$) | $CO_2$ permeability coefficient ($\frac{ml.mm}{m^2.day.atm}$) |
| 54 | Mitsui Pet J-135 | Example 30 | 1330 | 48 | 47000 | 2.0 |
| 55 | Mitsui Pet J-135 | Example 32 | 1490 | 57 | 50000 | 1.9 |
| 56 | Mitsui Pet J-125 | Example 34 | 1210 | 52 | 43000 | 2.1 |
| 57 | Mitsui Pet J-125 | Example 36 | 1250 | 47 | 43000 | 1.9 |
| 58 | Mitsui Pet J-125 | Example 38 | 1290 | 49 | 44000 | 2.0 |

*1 Product of Mitsui Pet K.K.

## COMPARATIVE EXAMPLE 8

The same dried polyethylene terephthalate as used in Example 53 was press molded to prepare a pressed sheet having a thickness of about 100µm. This pressed sheet had a tensile break strength of 480 kg/cm$^2$, elongation of 82%, and a $CO_2$ permeability coefficient of 24 ml.mm/m$^2$.day.atm and O permeability coefficient of 4.6 ml.mm/m$^2$.day.atm.

This pressed sheet was biaxially stretched in the same manner as in Example 53 to three times simultaneously in the longitudinal and traverse directions to prepare a biaxially oriented film having a thickness of about 11µm. This biaxially oriented film had a tensile break strength of 1550 kg/cm$^2$, elongation of 55% and tensile modulus of 46000 kg/cm$^2$, and also had a $CO_2$ permeability coefficient of 15 ml.mm/m$^2$.day.atm and O permeability coefficient of 2.6 ml.mm/m$^2$.day.atm.

## EXAMPLE 59

The same dried polyethylene terephthalate as used in Example 56 was press molded at a temperature of about 270°C and a pressure of about 50 kg/cm$^2$ to prepare a pressed sheet having a thickness of about 100µm.

Subsequently, the pressed sheet of polyhydroxypolyether prepared in Example 31 and two pressed sheets of polyethylene terephthalate prepared as above were laid one on top of the other so that the polyhydroxypolyether pressed sheet becomes an interlayer and the polyethylene terephthalate pressed sheets become two outer layers, and the pressed sheets thus combined were pressed molded at a temperature of about 270°C and a pressure of about 50 kg/cm$^2$ to prepare a multilayer pressed sheet having a thickness of about 200µm.

The adhesion between the polyethylene terephthalate layer and the polyhydroxypolyether layer in this multilayer pressed sheet was good. The multilayer pressed sheet had a haze of 1.8%.

Subsequently, this multilayer pressed sheet was biaxially stretched at a temperature of about 85°C to about 95°C to three times simultaneously in the longitudinal and traverse directions to prepare a biaxially oriented film having a thickness of about 22µm.

In the biaxially oriented film, the polyethylene terephthalate layers each had a thickness of about 7µm, and the polyhydroxypolyether layer had a thickness of about 10µm. The adhesion between the polyethylene terephthalate layer and the polyhydroxypolyether layer was good in this biaxially oriented film. The biaxially oriented film had a $CO_2$ barrier property of 1.9 ml.mm/m$^2$.day.atm and $O_2$ barrier property of 0.66 ml.mm/m$^2$.day.atm.

## EXAMPLE 60

The same dried polyethylene terephthalate as used in Example 53 was melted with one extruder, and the end terminated hydroquinone polyhydroxypolyether prepared in Example 31 by reaction with phenol was melted with another extruder. These melts were fed to a T-die and co-extruded to prepare a co-extruded sheet composed of polyethylene terephthalate/hydroquinone polyhydroxypolyether/polyethylene terephthalate (thickness about 40µm/20µm/40µm). This co-extruded sheet was transparent, in which the adhesion between the polyethylene terephthalate layer and the hydroquinone polyhydroxypolyether layer was good. The co-extruded sheet had a haze of 0.8%.

This multiple layer co-extruded sheet was stretched with a biaxial stretching apparatus at a temperature of about 80°C to about 100°C to two times in the traverse direction (perpendicular to the flow) and then to three times in the longitudinal direction (the flow) to prepare a biaxially oriented film composed of the two kinds and three layers and having an average thickness of about 17µm.

In this biaxially oriented film, the adhesion between the hydroquinone polyhydroxypolyether layer and the polyethylene layer was good.

The hydroquinone polyhydroxypolyether layer had a thickness of about 3µm, and the polyethylene

terephthalate layer had a thickness of about 7µm in this laminated biaxially oriented film. The laminated biaxially oriented film had a tensile break strength of 1400 kg/cm$^2$ (direction of flow) to 1100 kg/cm$^2$ (perpendicular to the flow), elongation of 68% (direction of flow) to 45% (perpendicular to the flow), and tensile modulus of 42000 kg/cm$^2$ (direction of flow) to 37000 kg/cm$^2$ (perpendicular to the flow). This biaxially oriented film had a $CO_2$ permeability coefficient of 3.7 ml.mm/m$^2$.day.atm.

EXAMPLE 61

The same dried polyethylene terephthalate as used in Example 53 was press molded at about 260°C to prepare a pressed sheet having a thickness of about 100µm. Separately, a mixture comprising 100 parts of the above-mentioned polyethylene terephthalate and 40 parts of the polyhydroxypolyether of Example 31 air-dried at 50°C for 12 hours was melt extruded with another extruded at about 260°C to prepare pellets of the composition which were then press molded at about 260°C to prepare a pressed sheet having a thickness of about 100µm. The abovementioned pressed sheet of the polyethylene terephthalate and the above-mentioned pressed sheet of the composition of the polyethylene terephthalate and polyhydroxypolyether were laid one on top of the other, and the pressed sheets thus combined were press molded at about 260°C to prepare a laminated sheet composed of the two kinds and two layers and having a thickness of about 150 m.

In the laminated sheet, the adhesion between the polyethylene terephthalate layer and the composition layer was good, and this laminated sheet had a tensile strength of 460 kg/cm$^2$ and elongation of 76%. The $CO_2$ permeability coefficient of this laminated pressed sheet was 19 ml.mm/m$^2$.day.atm.

This laminated sheet composed of the polyethylene terephthalate layer and the composition layer was then stretched to three times simultaneously in the longitudinal and traverse directions in the same manner as in Example 53 to prepare a biaxially oriented film. The biaxially oriented film obtained had a thickness of about 17 m, which was biaxially stretched in the uniform state.

In this biaxially oriented film, the adhesion between the polyethylene terephthalate layer and the composition layer was good. The biaxially oriented film had a tensile break strength of 1430 kg/cm$^2$, elongation of 54% and tensile modulus of 46000 kg/cm$^2$, and also had a $CO_2$ permeability coefficient of 5.7 ml.mm/m$^2$.day.atm.

EXAMPLES 62-65

The same procedure as in Example 61 was repeated except that in place of the polyethylene terephthalate or the composition used in Example 61, there were used polyethylene terephthalates or composition as shown in Table 10 to prepare laminated sheets composed of the two kinds and two layers and each having a thickness of about 150µm.

These laminated sheets were individually stretched simultaneously in the same manner as in Example 61 to prepare biaxially oriented films having a stretch ratio as shown in Table 10. The biaxially oriented films each had a thickness as shown in Table 10, which were stretched uniformly. The adhesion between the polyethylene layer and the composition layer in each of the biaxially oriented film was good. The mechanical properties and gas barrier properties of these biaxially oriented films were as shown in Table 10.

Table 10

| Example | Polyethylene *1 terephthalate | Constituent of composition | | |
|---|---|---|---|---|
| | | Polyethylene *1 terephthalate | Polyhydroxy-polyether | Amount of polyhydroxypolyether used per 100 parts (wt.) of polyethylene terephthalate |
| 62 | Mitsui Pet J-135 | Mitsui Pet J-135 | Ex.31 | 10 |
| 63 | Mitsui Pet J-135 | Mitsui Pet J-135 | Ex.31 | 80 |
| 64 | Mitsui Pet J-135 | Mitsui Pet J-135 | Ex.32 | 40 |
| 65 | Mitsui Pet J-125 | Mitsui Pet J-125 | Ex.38 | 40 |

*1 Product of Mitsui Pet Resin K.K.

| Properties of pressed sheet | | | Properties of biaxially criented film | | | | | |
|---|---|---|---|---|---|---|---|---|
| Tensile break strength (kg/cm²) | Elongation (%) | $CO_2$ permeability coefficient (ml·mm/m².day.atm) | Stretch ratio | Average thickness (μm) | Tensile break strength (kg/cm²) | Elongation (%) | Tensile modulus (kg/cm²) | $CO_2$ permeability coefficient (mL.mm/m².day.atm) |
| 495 | 74 | 21 | 3 x 3 | 17 | 1590 | 49 | 47000 | 12 |
| 510 | 77 | 15 | 3 x 3 | 17 | 1560 | 46 | 48000 | 4.3 |
| 575 | 73 | 18 | 3 x 3 | 17 | 1610 | 55 | 51000 | 6.0 |
| 485 | 80 | 19 | 3 x 3 | 17 | 1420 | 51 | 44000 | 5.6 |

EXAMPLE 66

The same polyethylene terephthalate as used in Example 53 was injection molded, and then the polyhydroxypolyether prepared in Example 31 was injection molded to prepare a preform composed of the polyethylene terephthalate layer and the polyhydroxypolyether layer, each layer having a thickness of about 1.6 mm. The preform was then heated to 85-95°C with a far infrared heating apparatus and stretched to about 2.5 times longitudinally and to about 4.3 times traversely by a stretch blow-molding machine to prepare a stretched bottle having an inner capacity of about 1 liter in which the smallest wall thickness portion, the polyethylene terephthalate layer had a thickness of about 150µm and the polyhydroxypolyether layer had a thickness of about 150µm. The stretched bottle was found to have a $CO_2$ permeability of 0.53 ml/day.bottle/atm, and an $O_2$ permeability of 0.17 ml/day.bottle.atm.

COMPARATIVE EXAMPLE 9

The same polyethylene terephthalate as used in Example 53 was injection molded to prepare a preform composed only of the polyethylene terephthalate layer having the same thickness (about 3.2 mm) as that of the preform of Example 13. The preform was then stretch blow-molded in the same manner as in Example 66 to prepare a stretched bottle having an inner capacity of about 1 liter in which the smallest wall thickness portion had a thickness of about 300 µm. The stretched bottle had a $CO_2$ permeability of 4.0 ml/day.bottle/atm. and an $O_2$ permeability of 1.1 ml/day.bottle.atm.

EXAMPLE 67

The polyethylene terephthalate in Example 53 was melted in one extruder. Separately the polyhydroxypolyether prepared in the same manner as in Example 32 was melted in another extruder. These melts were respectively fed to a pipe die of the two kind there-layer type to extrude a three-layer pipe composed of polyethylene terephthalate/polyhydroxypolyether/polyethylene terephthalate (thickness about 1.2 mm/1.2 mm/1.2 mm). The pipe was cooled with water to prepare a three-layer pipe having an outside diameter of 24.8 mmø and a thickness of 3.6 mm. The pipe was then cut and one end was heat-melted to form a bottom portion, and the other end was heat-melted likewise to form a spigot to prepare a preform having a total length of 16.5 cm and a weight of about 50 g.

The preform was then biaxially stretched to 2.5 times longitudinally and to 4 times traversely by a biaxial stretch blow-molding machine (Model LB01 made by Corpolast Co.) to obtain a 1.5-liter multilayer container (polyethylene terephthalate/polyhydroxypolyether/polyethylene terephthalate = about 120µm/about 120µm/about 120µm).

The multilayer container had a $CO_2$ permeability of 0.65 ml/day.bottle.atm, and an $O_2$ permeability of 0.20 ml/day.bottle/atm.

The container filled with water kept at 0°C was subjected to a falling test. When the container was dropped from a height of 1 meter, it did not break, nor was observed delamination of the layers.

EXAMPLE 68

The polyethylene terephthalate in Example 53 was melted at a molding temperature of about 270°C in one two-layer injection molding machine. Separately, the mixture of polyethylene terephthalate and polyhydroxypolyether in Example 61 was melted at a molding temperature of about 270°C in another two-layer injection molding machine. The melts were injection molded into a single preform die to prepare a two-layer preform composed of an inside layer of polyethylene terephthalate (thickness about 1.6 mm) and an outside layer of the composition of polyethylene terephthalate and polyhydroxypolyether (thickness

about 1.6 mm). With a biaxial stretch blow-molding machine (Model LB01 made by Corpolast Co.) the preform was biaxially stretched to about 2.5 times longitudinally and to about 4 times traversely to prepare a multilayer container having an inner capacity of about 1 liter.

The polyethylene terephthalate layer of the multilayer container had an average thickness of about 150µm and the composition layer of said container had an average thickness of about 150µm, and it was confirmed that said container was in the uniformly stretched state. The multilayer container had a $CO_2$ permeability of 1.3 ml/day.bottle.atm.

## EXAMPLE 70

The same reaction vessel as used in Example 29 was charged with 2202 parts of hydroquinone and 5550 parts of epichlorohydrin, and 663 parts of a 50% aqueous sodium hydroxide solution was added continuously over a period of about 90 minutes with stirring while maintaining the temperature of the system at about 65°C. After addition of the aqueous sodium hydroxide solution, the system was maintained at about 70°C and the pressure was reduced to about 200 mm Hg, and 2470 parts of a 50% aqueous sodium hydroxide solution was continuously fed to the system over a period of about 120 minutes. In this case, unaltered epichlorohydrin and water were distilled azeotropically, and water was distilled off, while returning the unaltered epichlorohydrin to the system.

Such operation as about was further continued for about 60 minutes after the feeding of the 50% aqueous sodium hydroxide solution. The temperature of the system was elevated to about 120°C and the reduced pressure of the system was increased to about 5 mm Hg to completely distil off unaltered epichlorohydrin out of the system. The system was returned to ordinary pressure and the temperature of the system was decreased to about 100°C. The system was then charged with 5420 parts of a mixed xylene and 7500 parts of water, stirred thoroughly and allowed to stand, whereby the system separated into two layers.

After removing the separated lower layer consisting of water, the system was charged with 422 parts of a 6% aqueous sodium hydroxide solution, followed by thorough stirring at about 70°C for about 120 minutes. Because of its being alkaline, the system was allowed to undergo neutralization reaction with the addition of 1536 parts of a 10% aqueous solution of sodium dihydrogenphosphate at about 90°C for about 30 minutes.

The temperature of the system was elevated up to about 140°C and the reduced pressure of the system is increased up to about 300 mm Hg to remove almost completely water present in the system by azeotropic distillation with toluene and to prepare a mixed xylene solution containing a reaction product amounting to about 70%. The mixed xylene solution was then filtered to remove by separation sodium chloride and a gel of small amounts of a reaction product formed as a by-product in the system.

The reaction product was then distilled for about 60 min again at a temperature of about 150°C and a reduced pressure of about 1 mm Hg to completely remove the mixed xylene.

After the completion of the reaction, the reaction product was cooled and pulverized to recover the reaction product in the form of powder.

The thus obtained reaction product amounted to 4026 parts and, on analysis, this reaction product was composed mainly of hydroquinone diglycidyl ether having an epoxy equivalent of 135.0 g/eq (epoxy group content 7.69 eq/kg) and an oligomer formed by the addition to the hydroquinone diglycidyl ether of a structural component unit derived from one hydroquinone and one epichlorohydrin.

A reaction vessel equipped with a stirring device and a refluxing device was charged with 270 parts of the hydroquinone diglycidyl ether and its oligomer prepared as above, 59.5 parts of hydroquinone, 74.5 parts of phenylhydroquinone 173 parts of cyclohexanone and 0.7m part of a 20% aqueous solution of tetraethylammonium hydroxide. The inside of the reaction vessel was thoroughly purged with nitrogen, and the reaction was carried out with stirring at about 150°C for 120 minutes in a nitrogen atmosphere. In this case, the evaporation products resulting from the reaction system were refluxed and returned to the system.

Furthermore, the reaction was carried out at a temperature elevated to about 170°C under reflux for about 120 minutes. From the reaction liquid thus obtained, a small amount of said liquid was collected by sampling. The collected reaction liquid was kept at about 120°C under reduced pressure, and the pressure was reduced ultimately to a vacuum of about 1 mm Hg to remove the evaporation products such as the solvent cyclohexanone and isolate the reaction product.

The isolated reaction product was analyzed and it was found that this reaction product is a polyhydroxypolyether composed mainly of 4-hydroxy-3-phenyl-phenyl group of 4-hydroxy-2-phenyl-phenyl group

having an intrinsic viscosity [η] of 0.58 dl/g, in which about 90% of the terminal group is a glycidyl group and the remainder, about 10%, of the terminal group is a p-hydroxyphenyl group.

The remaining reaction liquid after the sampling was charged with 36.7 parts of 4-ethylphenol and 0.2 part of a 20% aqueous solution of tetraethylammonium hydroxide, and the reaction was carried out under reflux at about 170°C for about 120 minutes. The refluxing of the system was stopped, and the apparatus was changed so that the distillate is distilled off out of the system. Thereafter, the temperature of the system was elevated from about 170°C up to about 250°C over a period of about 60 minutes and, at the point of time when the generation of the distillate terminated, the system was operated under reduced pressure and the pressure of the system was reduced up to about 2 mm Hg.

The system was then maintained for about 60 minutes at a temperature of about 250°C under a reduced pressure of about 20 mm Hg to complete distill off the solvent cyclohexanone and unaltered 4-ethylphenol out of the 4-ethylphenol used as the end terminating agent.

The system was then returned to ordinary pressure by the introduction of nitrogen, the reaction product was withdrawn in a strand form from the reaction vessel, cooled by immersion in water, and then cut to pellets. The pellets obtained were dried at about 50°C under reduced pressure.

On analysis, the thus obtained pellets proved to be a polyhydroxypolyether having an intrinsic viscosity [η] of 0.57 dl/g and a glass transition temperature of 57°C, in which about 80% of the terminal group is a 4-ethylphenyl group and the remainder (about 20%) of the terminal group is mainly a p-hydroxyphenyl, 4-hydroxy-2-phenyl-phenyl or 4-hydroxy-3-phenyl-phenyl group, and the glycidyl group completely disappeared, said polyhydroxypolyether being composed of hydroquinone and phenyl hydroquinone in the proportion of 82:18.

Upon determination of the hue of these pellets, it was found that L value (brightness) is 57.5 and b value is 13.9.

The polyhydroxypolyether was compression molded at about 200°C and a pressure of 50 kg/cm$^2$ with a press molding machine to prepare a pressed sheet having a thickness of about 200µm.

The pressed sheet had a haze of 2.0%, and was excellent in transparency. This sheet had a refractive index of 1.602. Upon measurement of mechanical properties, it was found that this sheet has a tensile great strength of 450 kg/cm$^2$, tensile elongation at break of 80% and tensile modulus of 26000 kg/cm$^2$, and thus it was excellent in strength.

Upon examination of gas barrier properties, it was found that this sheet has a $CO_2$ permeability coefficient of 0.84 ml.mm/m$^2$.day.atm, and an $O_2$ permeability coefficient of 0.26 ml.mm/m$^2$.day.atm.

This sheet was stretched at a temperature of about 70°C to about 85°C and a rate of 10 mm/sec to three times simultaneously in the longitudinal and traverse directions by using a biaxial stretching apparatus to prepare a biaxially oriented film having a thickness of about 22 m. On measurement of mechanical properties, it was found that this film has a tensile break strength of 480 kg/cm$^2$, elongation of 42% and tensile modulus of 32000 kg/cm$^2$.

This biaxially oriented film was found to have a $CO_2$ permeability coefficient of 0.81 ml.mm/m$^2$.day.atm and an $O_2$ permeability coefficient of 0.24 ml.mm/m$^2$.day.atm.

## EXAMPLES 71-74

The procedure of Example 70 was repeated with the exception that dinuclear aromatic diols shown in Table 11 were used in amounts indicated in Table 11 in place of the phenylhydroquinone, cyclohexanone was used in amounts indicated in Table 11, and monovalent aromatic alcohols shown in Table 11 were used as terminal stabilizers in amounts indicated in Table 11 to obtain copolyhydroxypolyethers of hydroquinone and aromatic diols shown in Table 11.

In the terminal groups of these copolyhydroxypolyethers, those other than the terminal groups shown in Table 11 are composed mainly of 4-hydroxyphenyl group derived from hydroquinone and of groups derived from the dinuclear aromatic diols, and no glycidyl group was contained in every one of the copolyhydroxypolyethers.

Physical properties of pressed sheets and biaxially oriented films formed from these copolyhydroxypolyethers in the same manner as in Example 70 were as shown in Table 11.

Table 11

| Ex. | Dinuclear aromatic diol: Kind | Dinuclear aromatic diol: Amount used (part) | Amount of cyclohexanone used (part) | Monovalent aromatic alcohol: Kind | Monovalent aromatic alcohol: Amount used (part) | Properties of polyhydroxypolyether: Intrinsic viscosity [η] (dl/g) | Glass transition temp. (°C) | Proportion of hydroquinone to aromatic diol (mol ratio) | Terminal group derived from monovalent aromatic alcohol: Kind | Terminal group: Proportion (%) | Hue: Brightness (L value) | Hue: Yellowness (b value) |
|---|---|---|---|---|---|---|---|---|---|---|---|---|
| 71 | 1,5-Dihydroxy-naphthalene | 64.1 | 169 | 4-Methyl-phenol | 32.4 | 0.55 | 73 | 82:18 | 4-Methyl-phenyl | about 80 | 60.4 | 11.7 |
| 72 | 2,6-Dihydroxy-naphthalene | 64.1 | 169 | Phenol | 28.2 | 0.58 | 71 | 82:18 | Phenyl | about 80 | 54.6 | 13.6 |
| 73 | 4,4'-Dihydroxy-diphenyl | 74.5 | 173 | p-Methoxy-phenol | 37.2 | 0.59 | 76 | 82:18 | p-Methoxy-phenyl | about 80 | 63.5 | 10.8 |
| 74 | 4,4'-Dihydroxy-diphenyl ketone | 85.7 | 178 | p-Acetyl-phenol | 40.8 | 0.56 | 77 | 82:18 | p-Acetyl-phenyl | about 80 | 61.0 | 11.4 |

Table 11 (continued)

| Ex. | Properties of pressed sheet | | | | | | Properties of biaxially oriented film | | | | |
|---|---|---|---|---|---|---|---|---|---|---|---|
| | Haze (%) | Refractive index $n_D^{25}$ | Tensile break strength ($kg/cm^2$) | Elongation (%) | Tensile modulus ($kg/cm^2$) | $CO_2$ permeability coefficient ($mL.mm/m^2.day.atm$) | Tensile break strength ($kg/cm^2$) | Elongation (%) | Tensile modulus ($kg/cm^2$) | $CO_2$ permeability coefficient ($mL.mm/m^2.day.atm$) | $O_2$ permeability coefficient ($mL.mm/m^2.day.atm$) |
| 71 | 2.7 | 1.615 | 510 | 78 | 32000 | 0.61 | 550 | 38 | 41000 | 0.56 | 0.20 |
| 72 | 3.5 | 1.610 | 550 | 83 | 31000 | 0.59 | 570 | 38 | 40000 | 0.53 | 0.18 |
| 73 | 2.9 | 1.610 | 530 | 83 | 33000 | 0.84 | 610 | 36 | 44000 | 0.80 | 0.23 |
| 74 | 3.1 | 1.611 | 550 | 79 | 34000 | 0.76 | 610 | 35 | 42000 | 0.70 | 0.19 |

EXAMPLES 75-77

The procedure of Example 72 was repeated with the exception that the amounts of hydroquinone based on the hydroquinone diglycidyl ether and its oligomer were changed as indicated in Table 12, the amounts of the solvent cyclohexanone used were changed as indicated in Table 12, and the amounts of phenol used were changed as indicated in Table 12 to obtain copolyhydroxypolethers of hydroquinone and 2, 6-naphthalene diol.

Properties of these copolyhydroxypolyethers were as shown in Table 12.

In these copolyhydroxypolyethers, the terminal groups are mainly composed of a phenyl group, and the terminal groups other than the phenyl group are mainly composed of 4-hydroxyphenyl group and 6-hydroxy-2-naphthly group, and no glycidyl group was contained therein.

Physical properties of pressed sheets and biaxially oriented films formed in the same manner as in Example 72 by the use of the copolyhydroxypolyethers were as shown in Table 12.

Table 12

| Ex. | Amount of hydroquinone used (part) | Amount of cyclohexanone used (part) | Amount of phenol used (part) | Intrinsic viscosity [η] (dl/g) | Properties of polyhydroxypolyether: Glass transition temp. (°C) | Proportion of hydroquinone to 2,6-naphthalene diol (mol ratio) | Proportion of terminal phenyl group (%) | Hue: Brightness (L value) | Hue: Yellowness (b value) |
|---|---|---|---|---|---|---|---|---|---|
| 75 | 61.7 | 170 | 28.2 | 0.97 | 73 | 82:18 | about 80 | 60.5 | 9.7 |
| 76 | 66.1 | 172 | 28.2 | 1.60 | 74 | 83:17 | about 60 | 62.2 | 11.3 |
| 77 | 72.7 | 174 | 18.8 | 0.72 | 73 | 83:17 | about 20 | 59.2 | 10.6 |

| Ex. | Properties of pressed sheet: Haze (%) | Refractive index $n_D^{25}$ | Tensile break strength (kg/cm$^2$) | Elongation (%) | Tensile modulus (kg/cm$^2$) | $CO_2$ permeability coefficient (mL.mm/m$^2$.day.atm) | Properties of biaxially oriented film: Tensile break strength (kg/cm$^2$) | Elongation (%) | Tensile modulus (kg/cm$^2$) | $CO_2$ permeability coefficient (mL.mm/m$^2$.day.atm) | $O_2$ permeability coefficient (mL.mm/m$^2$.day.atm) |
|---|---|---|---|---|---|---|---|---|---|---|---|
| 75 | 3.6 | 1.615 | 570 | 80 | 34000 | 0.58 | 620 | 33 | 46000 | 0.54 | 0.19 |
| 76 | 3.7 | 1.615 | 580 | 87 | 35000 | 0.60 | 690 | 29 | 47000 | 0.54 | 0.17 |
| 77 | 3.5 | 1.614 | 550 | 80 | 33000 | 0.59 | 640 | 31 | 47000 | 0.57 | 0.17 |

## EXAMPLES 78-81

The procedure of Example 73 was repeated with the exception that catalyst shown in Table 13 were used in amounts indicated in Table 13 in place of the 20% aqueous solution of tetraethylammonium hydroxide, and catalysts shown in Table 13, which are used together with the p-methoxyphenol, were used in amounts indicated in Table 13 to prepare copolyhydroxypolyethers of hydroquinone and 4,4′-dihydroxydiphenyl.

Properties of these copolyhydroxypolyethers were as shown in Table 13. The terminal groups of these copolyhydroxypolyethers are composed mainly of 4-methoxyphenyl group, and terminal groups other than the 4-methoxyphenyl group are 4-hydroxyphenyl group and 4-(4′-hydroxy)diphenyl group, thus no glycidyl group was contained therein.

Physical properties of pressed sheets and biaxially oriented films by the use of these copolyhydroxypolyethers in the manner as in Example 73 were as shown in Table 13.

Table 13

| Ex. | Catalyst: Kind | Catalyst: Amount used (part) | Catalyst used with P-methoxyphenol: Kind | Catalyst used with P-methoxyphenol: Amount used (part) | Properties of polyhydroxy polyether: Intrinsic viscosity [η] (dl/g) | Glass transition temp. (°C) | Proportion of hydroquinone to 4,4'-dihydroxyphenyl (mol ratio) | Proportion of terminal 4-methoxyphenyl group (%) | Hue: Brightness (L value) | Hue: Yellowness (b value) |
|---|---|---|---|---|---|---|---|---|---|---|
| 78 | Tri-n-butyl-amine | 0.2 | Tri-n-butyl-amine | 0.05 | 0.59 | 76 | 82:18 | about 80 | 63.0 | 10.5 |
| 79 | Diethylbengyl-amine | 0.2 | Diethylbengyl-amine | 0.05 | 0.56 | 75 | 82:18 | about 80 | 64.1 | 10.5 |
| 80 | 40% aq.solu.of tetraethyl ammonium hydroxide | 0.6 | 40% aq.solu.of tetraethyl ammonium hydroxide | 0.15 | 0.65 | 76 | 82:18 | about 80 | 62.5 | 11.2 |
| 81 | Triphenyl-phosphine | 0.3 | Triphenyl-phosphine | 0.07 | 0.53 | 75 | 82:18 | about 80 | 61.8 | 10.1 |

Table 13 (continued)

| | Properties of pressed sheet | | | | | | Properties of biaxially oriented film | | | | |
|---|---|---|---|---|---|---|---|---|---|---|---|
| Ex. | Haze (%) | Refractive index $n_D^{25}$ | Tensile break strength ($kg/cm^2$) | Elongation (%) | Tensile modulus ($kg/cm^2$) | $CO_2$ permeability coefficient ($ml.mm/m^2.day.atm$) | Tensile break strength ($kg/cm^2$) | Elongation (%) | Tensile modulus ($kg/cm^2$) | $CO_2$ permeability coefficient ($ml.mm/m^2.day.atm$) | $O_2$ permeability coefficient ($ml.mm/m^2.day.atm$) |
| 78 | 2.9 | 1.610 | 520 | 83 | 33000 | 0.79 | 600 | 39 | 43000 | 0.77 | 0.23 |
| 79 | 2.7 | 1.608 | 520 | 85 | 33000 | 0.84 | 570 | 34 | 43000 | 0.81 | 0.21 |
| 80 | 2.8 | 1.611 | 540 | 87 | 35000 | 0.78 | 610 | 36 | 44000 | 0.76 | 0.21 |
| 81 | 2.8 | 1.611 | 520 | 84 | 32000 | 0.83 | 590 | 37 | 42000 | 0.79 | 0.24 |

EXAMPLES 82-83

The procedure of Example 73 was repeated with the exception that the amounts of hydroquinone and 4,4′-dihydroxydiphenyl to be reacted with hydroquinone diglycidyl ether and its oligomer were changed as indicated in Table 14, and the amount of cyclohexane used was changed as indicated in Table 14 to prepare copolyhydroxypolyethers of hydroquinone and 4,4′-dihydroxydiphenyl.

Properties of these copolyhydroxypolyethers were as shown in Table 14. The terminal groups of these copolyhydroxypolyethers were composed mainly of 4-methoxyphenyl group, and the terminal groups other than the 4-methoxyphenyl group were mainly 4-hydroxyphenyl and 4-(4′-hydroxy)diphenyl groups, thus no glycidyl group was contained therein.

Physical properties of pressed sheets and biaxially oriented films prepared from these copolyhydroxypolyethers in the same manner as in Example 73 were as shown in Table 14.

Table 14

| Ex. | Amount of hydroquinone used (part) | Amount of 4,4'-hydroxydiphenyl used (part) | Amount of cyclohexanone used (part) | Intrinsic viscosity [η] (dl/g) | Properties of polyhydroxypolyether: Glass transition temp. (°C) | Proportion of hydroquinone to 4,4'-dihydroxyphenyl (mol ratio) | Proportion of terminal 4-methoxyphenyl group (%) | Hue: Brightness (L value) | Hue: Yellowness (b value) |
|---|---|---|---|---|---|---|---|---|---|
| 82 | 37.4 | 111.7 | 180 | 0.58 | 79 | 73:27 | about 80 | 62.1 | 12.9 |
| 83 | 0 | 175.0 | 191 | 0.62 | 85 | 58:42 | about 80 | 63.8 | 14.4 |

| Ex. | Properties of pressed sheet: Haze (%) | Refractive index $n_D^{25}$ | Tensile break strength ($kg/cm^2$) | Elongation (%) | Tensile modulus ($kg/cm^2$) | $CO_2$ permeability coefficient (mL.mm/m².day.atm) | Properties of biaxially oriented film: Tensile break strength ($kg/cm^2$) | Elongation (%) | Tensile modulus ($kg/cm^2$) | $CO_2$ permeability coefficient (mL.mm/m².day.atm) | $O_2$ permeability coefficient (mL.mm/m².day.atm) |
|---|---|---|---|---|---|---|---|---|---|---|---|
| 82 | 3.0 | 1.618 | 540 | 79 | 37000 | 0.80 | 650 | 35 | 49000 | 0.78 | 0.22 |
| 83 | 3.1 | 1.626 | 540 | 80 | 39000 | 0.81 | 640 | 35 | 49000 | 0.79 | 0.24 |

## COMPARATIVE EXAMPLE 10

The procedure of Example 70 was repeated with the exception that the phenyl hydroquinone to be reacted with the hydroquinone diglycidyl ether and its oligomer was not used, but only 103.5 parts of hydroquinone was used, and the amount of cyclohexanone used was changed to 160 parts to prepare a hydroquinone polyhydroxypolyether.

The hydroquinone polyhydroxypolyether had an intrinsic viscosity [$\eta$] of 0.55 dl/g, and a glass transition temperature of 62°C, about 80% of the terminal group of which was composed mainly of a phenyl group and the remainder (about 20%) of the terminal group was composed mainly of 4-hydroxyphenyl group, thus the glycidyl group completely disappeared therefrom.

Pellets of this hydroquinone polyhydroxypolyether were found to have a brightness (L value) of 62.3 and a yellowness (b value) of 13.5.

The pressed sheet of this hydroquinone polyhydroxypolyether obtained by press molding in the same manner as in Example 70 had a haze of 2.5% and a refractive index of 1.597.

Upon measurement of mechanical properties, this pressed sheet had a tensile break strength of 455 kg/cm$^2$, elongation of 78% and tensile modulus of 29000 kg/cm$^2$. The pressed sheet was found to have a $CO_2$ permeation coefficient of 0.76 ml.mm/m$^2$.day.atm.

A biaxially oriented film having a thickness of abount 22 $\mu$m prepared by stretching biaxially this pressed sheet in the same manner as in Example 70 had a tensile break strength of 465 kg/cm$^2$, elongation of 37% and tensile modulus of 34000 kg/cm$^2$.

This biaxially oriented film was found to have a $CO_2$ permeability coefficient of 0.75 ml.mm/m$^2$.day.atm, and an $O_2$ permeability coefficient of 0.21 ml.mm/m$^2$.day.atm.

## EXAMPLE 84

The procedure for preparing the hydroquinone diglycidyl ether and its oligomer of Example 70 was repeated with the exception that a mixture of 1541 parts of hydroquinone and 661 parts of resorcin was used in place of the hydroquinone to prepare diglycidyl ether of hydroquinone and resorcin, and oligomer thereof.

The yield of the thus obtained diglycidyl ether of hydroquinone and resorcin and oligomer thereof was 3988 parts, and their epoxy equivalent was 139 g/eq (epoxy group content: 7.19 eq/kg).

An autoclave equipped with a stirring device and a device capable of refluxing under pressure was charged with 278 parts of the above-mentioned diglycidyl ether of hydroquinone and resorcin and oligomer thereof, 59.5 parts of hydroquinone, 64.1 parts of 1,4-dihydroxynaphthalene, 214 parts of methyl isobutyl ketone and 0.7 part of a 20% aqueous solution of tetaethylammonium hydroxide. The inside of the autoclave was purged thoroughly with nitrogen, and the reaction was carried out at about 150°C for about 120 minutes with stirring in a nitrogen atmosphere.

At that time a pressure of the system was about 2.8 kg/cm$^2$, and the solvent methyl isobutyl ketone was refluxing slowly. This system was then heated up to about 170°C, and the reaction was carried out further for about 120 minutes. At this time, the pressure of the system was about 5.2 kg/cm$^2$, and the refluxing device was controlled so that the methyl isobutyl ketone will be refluxed slowly.

Into this system was injected 32.4 parts of p-cresol, and the reaction was carried out further at 170°C for about 120 minutes.

The system was then released gradually from the pressure and, at the same time, the evaporation products such as the evaporating solvent methyl isobutyl ketone was cooled and liquefied through the condenser and then distilled off out of the system.

The temperature of the reaction system was elevated from about 170°C up to about 250°C over a period of about 60 minutes and at the same time the pressure of the system was reduced gradually and ultimately to about 2 mm Hg. The system was maintained for about 60 minutes at about 250°C and a reduced pressure of about 2 mm Hg to completely distil off the evaporation products such as the solvent methyl isobutyl ketone and unaltered p-cresol out of the p-cresol used as the terminal stabilizer out of the system.

The system was then returned to ordinary pressure by introduction thereinto of nitrogen, the reaction product was extruded from the autoclave in a strand form, cooled by immersion in water and then cut to pellets.

Upon analysis, it was found that the pellets thus obtained were composed of a copolyhydroxypolyether having an intrinsic viscosity [η] of 0.56 dl/g and a glass transition temperature of 55°C, in which about 80% of the terminal group is a p-tolyl group and the remainder, about 10%, of the remainder of the terminal group is composed mainly of a p-hydroxyphenyl and m-hydroxyphenyl groups and no glycidyl group is contained therein, said copolyhydroxypolyether being composed of hydroquinone, resorcin and 1,3-dihydroxynaphthalene in the proportion of 64:18:18.

The pellets had a brightness (L value) of 56.9 and a yellowness (b value) of 13.7.

This copolyhydroxypolyether was press molded in the same manner as in Example 70 to prepare a pressed sheet having a thickness of about 200μm. The pressed sheet obtained had a haze of 1.9% and a refractive index of 1.601. This pressed sheet had a tensile break strength of 440 kg/cm$^2$, elongation of 80% and tensile modulus of 27000 kg/cm$^2$, and also had a $CO_2$ permeability coefficient of 0.75 ml.mm/m$^2$.day.atm.

The biaxially oriented film having a thickness of about 2μm prepared by stretching this pressed sheet biaxially in the same manner as in Example 70 had a tensile break strength of 490 kg/cm$^2$, elongation of 48% and tensile modulus of 33000 kg/cm$^2$.

This biaxially oriented film had a $CO_2$ permeability coefficient of 0.73 ml.mm/m$^2$.day.atm, and O permeability coefficient of 0.23 ml.mm/m$^2$.day.atm.

## EXAMPLE 85

The procedure for preparing the copolyhydroxypolyether of Example 84 was repeated with the exception that 80.9 parts was used in place of the starting 1,4-dihydroxynaphthalene, and 37.2 parts of p-methoxyphenol was used in place of the terminal stabilizer p-cresol to prepare pellets of a copolyhydroxypolyether.

Upon analysis, the pellets prepared were found to be a copolyhydroxypolyether having an intrinsic viscosity [η] of 0.60 dl/g and a glass transition temperature of 62°C, in which about 80% of the terminal group was blocked by a p-methoxyphenyl group, and no glycidyl group contained at all therein, said copolyhydroxypolyether being composed of hydroquinone, resorcin and 4,4′-dihydroxydiphenyl ether in the proportions of 65:18:18.

The pellets obtained had a brightness (L value) of 64.5 and a yellowness (b value) of 9.6.

The pressed sheet prepared by press molding this copolyhydroxypolyether in the same manner as in Example 70 had a haze of 2.4% and a refractive index of 1.603, and also had a tensile break strength of 460 kg/cm$^2$, elongation of 87% and tensile modulus of 29000 kg/cm$^2$, and also had a $CO_2$ permeability coefficient of 0.98 ml.mm/m$^2$.day.atm.

This pressed sheet was stretched biaxially in the same manner as in Example 70 to prepare a biaxially oriented film having a thickness of about 22μm, a tensile break strength of 490 kg/cm$^2$, elongation of 45% and tensile modulus of 34000 kg/cm$^2$. This biaxially oriented film had a $CO_2$ permeability coefficient of 0.95 ml.mm/m$^2$.day.atm and an $O_2$ permeability coefficient of 0.28 ml.mm/m.$^2$.day.atm.

## EXAMPLE 86

The same reaction vessel as used in Example 70 was charged with the charges used in Example 84, i.e. 278 part of diglycidyl ether and its oligomer of hydroquinone and resorcin, 59.5 parts of hydroquinone, 64.1 parts of 2,6-naphthalene diol, 172 parts of cyclohexanone and 0.7 part of a 20% aqueous solution of tetraethylammonium hydroxide, and the reaction was carried out in the same manner as in Example 70 followed by the end termination reaction by the use of 28.2 parts of phenol to prepare pellets of a copOolyhydroxypolyether composed of hydroquinone, resorcin and 2,6-naphthalene diol.

On analysis, the pellets were found to be a copolyhydroxypolyether having an intrinsic viscosity [η] of 0.57 dl/g and a glass transition temperature of 67°C, in which about 80% of the terminal group was blocked by a phenyl group and no glycidyl group was contained at all, said copolyhydroxypolyether being composed of hydroquinone, resorcin and 2,6-naphthalene diol in the proportions of 64:18:18. The pellets

had a brightness (L value) of 61.9 and a yellowness (b value) of 10.5.

This copolyhydroxypolyether was pressed molded in the same manner as in Example 70 to prepare a pressed sheet having a thickness of about 200 µm, a haze of 2.9 and a refrective index of 1.612. This pressed sheet had a tensile break strength of 490 kg/cm$^2$, elongation of 76% and tensile modulus of 30000 kg/cm$^2$. The pressed sheet had a $CO_2$ permeability coefficient of 0.57 ml.mm/m$^2$.day.atm.

The biaxially oriented film having a thickness of about 22µm prepared by stretching this pressed sheet biaxially in the same manner as in Example 70 had a tensile break strength of 510 kg/cm$^2$, elongation of 44% and tensile modulus of 36000 kg/cm$^2$.

This biaxially oriented film had a $CO_2$ permeability coefficient of 0.55 ml.mm/m$^2$.day.atm, and an $O_2$ permeability coefficient of 0.20 ml.mm/m$^2$.day.atm.

EXAMPLES 87-88

The procedure of Example 86 was repeated with the exception that dinuclear aromatic diols shown in Table 15 were used in the amounts as indicated in Table 15 in place of the 2,6-naphthalene diol, the amount of the solvent cyclohexanone used was changed as indicated in Table 15, and monovalent aromatic alcohols as shown in Table 15 were used in the amounts as indicated in Table 15 in place of the phenol to prepare a copolyhydroxypolyethers.

Properties of these copolyhydroxypolyethers were as shown in Table 15. In the terminal groups of these copolyhydroxypolyethers, no diglycidyl ether was contained.

Physical properties of pressed sheets and biaxially oriented films prepared by using these copolyhydroxypolyethers in the same manner as in Example 70 were as shown in Table 15.

Table 15

| Ex. | Dinuclear aromatic diol | | Amount of cyclohexanone used | Monovalent aromatic alcohol | | Properties of polyhydroxypolyether | | | | | |
|---|---|---|---|---|---|---|---|---|---|---|---|
| | Kind | Amount used (part) | (part) | Kind | Amount used (part) | Intrinsic viscosity [η] (dl/g) | Glass transition temp. (°C) | Proportion of hydroquinone to dinuclear aromatic diol (mol%) | Proportion of terminal group blocked by monovalent aromatic alcohol (%) | Hue: Brightness (L value) | Hue: Yellowness (b value) |
| 87 | 2,6-Naphthalene diol | 64.1 | 172 | Phenol | 28.2 | 0.55 | 66 | 64:18:18 | about 80 | 61.9 | 12.3 |
| 88 | 4,4'-Dihydroxyphenyl sulfone | 100.1 | 188 | p-Methoxyphenol | 37.2 | 0.59 | 72 | 64:18:18 | about 80 | 63.8 | 13.5 |

Table 15 (continued)

| Ex. | Properties of pressed sheet | | | | | | Properties of biaxially oriented film | | | | |
|---|---|---|---|---|---|---|---|---|---|---|---|
| | Haze (%) | Refractive index $n_D^{25}$ | Tensile break strength (kg/cm$^2$) | Elon-gation (%) | Tensile modulus (kg/cm$^2$) | $CO_2$ permeability coefficient (ml.mm/m$^2$.day.atm) | Tensile break strength (kg/cm$^2$) | Elon-gation (%) | Tensile modulus (kg/cm$^2$) | $CO_2$ permeability coefficient (ml.mm/m$^2$.day.atm) | $O_2$ permeability coefficient (ml.mm/m$^2$.day.atm) |
| 87 | 2.4 | 1.612 | 480 | 77 | 30000 | 0.58 | 500 | 47 | 35000 | 0.58 | 0.20 |
| 88 | 2.4 | 1.607 | 540 | 70 | 38000 | 0.87 | 590 | 40 | 41000 | 0.84 | 0.26 |

## EXAMPLE 89

The procedure for preparing the hydroquinone diglycidyl ether and its oligomer of Example 70 was repeated by carrying out the reaction with the exception that a mixture of 881 parts of hydroquinone and 1321 parts of resorcin was used in the place of hydroquinone to prepare diglycidyl ether of hydroquinone and resorcin and oligomer thereof.

The yield of the diglycidyl ether of hydroquinone and resorcin and the oligomer thereof was 3970 parts, and their epoxy equivalent was 144 g/eq (epoxy content 6.94 eq/kg).

The same reaction vessel used for preparing the polyhydroxypolyether as in Example 70 was charged with 288 parts of the above-mentioned diglycidyl ether of hydroquinone and resorcin and the oligomer thereof, 59.5 parts of hydroquinone, 64.1 parts of 2,6-naphthalene diol, 176 parts of cyclohexanone and 0.7 part of a 20% aqueous solution of tetraethylammonium hydroxide, and the reaction was carried out in the same manner as in Example 70 followed by the end termination reaction by using 28.2 parts of phenol to prepare pellets of a copolyhydroxypolyether of hydroquinone, resorcin and 2,6-naphthalene diol.

Upon analysis, it was found that the pellets obtained are composed of the copolyhydroxypolyether having an intrinsic viscosity [$\eta$] of 0.63 dl/g and a glass transition temperature of 64°C, in which about 80% of the terminal group has been blocked by a phenyl group and no glycidyl group is contained at all, said copolyhydroxypolyether being composed of hydroquinone, resorcin and 2,6-naphthalene diol.

The pellets obtained had a brightness (L value) of 60.6 and a yellowness (b value) of 10.4.

The copolyhydroxypolyether was press molded in the same manner as in Example 70 to prepare a pressed sheet having a thickness of about 200 m. The pressed sheet obtained had a haze of 2.2% and a refractive index of 1.611, and also had a tensile break strength of 470 kg/cm$^2$, elongation of 79% and tensile modulus of 29000 kg/cm$^2$. This pressed sheet had a $CO_2$ permeability coefficient of 0.56 ml.mm/m$^2$.day.atm.

This pressed sheet was stretched biaxially in the same manner as in Example 70 to prepare a biaxially oriented film having a thickness of about 22 m. This biaxially oriented film had a tensile break strength of 490 kg/cm$^2$, elongation of 48% and tensile modulus of 35000 kg/cm$^2$, and also had a $CO_2$ permeability coefficient of 0.54 ml.mm/m$^2$.day.atm, and an $O_2$ permeability coefficient of 0.20 ml.mm/m$^2$.day.atm.

## EXAMPLES 90-93

The procedure of Example 89 was repeated using 288 parts of hydroquinone diglycidyl ether and its oligomer with the exception that the amount of the hydroquinone used was changed as indicated in Table 16, a part of the hydroquinone was replaced with resorcin used in the amount indicated in Table 16, dinuclear aromatio diols shown in Table 16 were used in the amounts indicated in Table 16 in place of the 2,6-naphthalene diol, and the amount of the solvent cyclohexanone used was changed as indicated in Table 16, and the reaction was carried out in the same manner as in Example 89 followed by the end termination by using monovalent aromatic alcohols in the amounts indicated in Table 16 to prepare pellets of copolyhydroxypolyethers.

On analysis of the pellets, it was confirmed that properties of the copolyhydroxypolyethers were as shown in Table 16, and no glycidyl group was contained therein at all.

The pressed sheets having a thickness of about 200$\mu$m prepared by press molding the pellets in the same manner as in Example 70 had physical properties as shown in Table 16. Physical properties of the biaxially oriented films prepared by stretching these pressed sheets biaxially in the same manner as in Example 70 were as shown in Table 16.

Table 16

| Ex. | Amount of hydroquinone used (part) | Amount of resorcin used (part) | Dinuclear aromatic diol: Kind | Dinuclear aromatic diol: Amount used (part) | Amount of cyclohexanone used (part) | Monovalent aromatic alcohol: Kind | Monovalent aromatic alcohol: Amount used (part) | Properties of polyhydroxypolyether: Intrinsic viscosity [η] (dl/g) | Glass transition temp. (°C) | Proportion of hydroquinone: resorcin: dinuclear aromatic diol (mol ratio) | Proportion of terminal group bloded by monovalent aromatic diol (%) | Hue: Brightness (L value) | Hue: Yellowness (b value) |
|---|---|---|---|---|---|---|---|---|---|---|---|---|---|
| 90 | 59.5 | 0 | 4,4-Dihydroxydiphenyl | 74.5 | 181 | 4-Methoxy phenol | 37.2 | 0.57 | 70 | 47:36:17 | about 80 | 63.3 | 9.8 |
| 91 | 59.5 | 0 | 4,4-Dihydroxydiphenylketone | 85.7 | 186 | 4'-hydroxyacetophenon | 40.8 | 0.57 | 70 | 47:36:17 | about 80 | 64.0 | 13.5 |
| 92 | 37.4 | 0 | 2,6-Naphthalenediol | 96.1 | 179 | Phenol | 28.2 | 0.58 | 66 | 38:36:26 | about 80 | 62.4 | 11.8 |
| 93 | 48.5 | 11.0 | 4,4-Dihydroxydiphenyl | 74.5 | 181 | 4-Methoxyphenol | 37.2 | 0.60 | 68 | 43:40:17 | about 80 | 64.0 | 9.9 |

Table 16 (continued)

| Ex. | Properties of pressed sheet: Haze (%) | Refractive index $n_D^{25}$ | Tensile break strength ($kg/cm^2$) | Elon-gation (%) | Tensile modulus ($kg/cm^2$) | $CO_2$ permeability coefficient ($ml.mm/m^2.day.atm$) | Properties of biaxially oriented film: Tensile break strength ($kg/cm^2$) | Elon-gation (%) | Tensile modulus ($kg/cm^2$) | $CO_2$ permeability coefficient ($ml.mm/m^2.day.atm$) | $O_2$ permeability coefficient ($ml.mm/m^2.day.atm$) |
|---|---|---|---|---|---|---|---|---|---|---|---|
| 90 | 2.1 | 1.610 | 480 | 77 | 29000 | 0.81 | 550 | 40 | 40000 | 0.80 | 0.26 |
| 91 | 2.4 | 1.612 | 480 | 73 | 30000 | 0.73 | 560 | 35 | 41000 | 0.73 | 0.25 |
| 92 | 2.7 | 1.614 | 470 | 82 | 29000 | 0.53 | 550 | 45 | 39000 | 0.52 | 0.18 |
| 93 | 2.5 | 1.610 | 450 | 87 | 27000 | 0.79 | 520 | 42 | 37000 | 0.79 | 0.25 |

## REFERENTIAL EXAMPLE 1

The procedure for preparing the copolyhydroxypolyether of Example 84 was repeated with the exception that no 1,4-naphthalene diol was used, the amount of the hydroquinone used was changed to 103.5 parts, and the amount of the solvent cyclohexanone used was changed to 164 parts followed by the end termination by using 28.2 parts of phenol to prepare pellets of a copolyhydroxypolyether of hydroquinone and resorcin.

On analysis, it was found that the pellets are composed of the copolyhydroxypolyether having an intrinsic viscosity [$\eta$] of 0.57 dl/g and a glass transition temperature of 60°C, in which about 80% of the terminal group has been blocked by a phenyl group and no glycidyl group is contained at all, said copolyhydroxypolyether being composed of hydroquinone and resorcin in the proportion of 82:18.

The pellets obtained had a brightness (L value) of 64.0 and a yellowness (b value) of 9.6.

This copolyhydroxypolyether was press molded in the same manner as in Example 70 to prepare a pressed sheet having a thickness of about 200µm, a haze of 2.4% and a refractive index of 1.596. The pressed sheet had a tensile break strength of 430 kg/cm$^2$, elongation of 81% and tensile modulus of 27000 kg/cm$^2$, and also had a CO2 permeability of 0.74 ml.mm/m$^2$.day.atm.

The pressed sheet was stretched biaxially in the same manner as in Example 70 to prepare a biaxially oriented film having a thickness of about 22 m. This biaxially oriented film had a tensile break strength of 450 kg/cm$^2$, elongation of 47% and tensile modulus of 33000 kg/cm$^2$. The biaxially oriented film had a $CO_2$ permeability coefficient of 0.74 ml.mm/m$^2$.day.atm, and an $O_2$ permeability of 0.21 ml.mm/m$^2$.day.atm.

## REFERENTIAL EXAMPLE 2

The procedure for preparing the copolyhydroxypolyether of Example 89 was repeated with the exception that no 1,4-naphthalene diol was used, the amount of hydroquinone used was changed to 103.5 parts, and the amount of the solvent cyclohexanone used was changed to 168 parts, to carry out the reaction followed by the end termination by using 28.2 parts of phenol to prepare pellets of a copolyhydroxypolyether of hydroquinone and resorcin.

On analysis, it was found that the pellets are composed of the copolyhydroxypolyether having an intrinsic viscosity [$\eta$] of 0.58 dl/g and a glass transition temperature of 58°C, in which about 80% of the terminal group has been blocked by a phenyl group and no glycidyl group is contained at all, said copolyhydroxypolyether being composed of hydroquinone and resorcin in the proportion of 64:36. The pellets had a brightness (L value) of 63.1 and a yellowness (b value) of 10.4.

This copolyhydroxypolyether was press molded in the same manner as in Example 70 to prepare a pressed sheet having a thickness of about 299µm. The pressed sheet had a haze of 2.2% and a refractive index of 1.596. The pressed sheet had a tensile break strength of 410 kg/cm$^2$, elongation of 85% and tensile modulus of 26000 kg/cm$^2$, and also had a $CO_2$ permeability coefficient of 0.74 ml.mm/m$^2$.day.atm.

The pressed sheet was stretched biaxially in the same manner as in Example 70 to prepare a biaxially oriented film having a thickness of about 22µm. This biaxially oriented film had a tensile break strength of 420 kg/cm$^2$, elongation of 47% and tensile modulus of 32000 kg/cm$^2$, and also had a $CO_2$ permeability coefficient of 0.75 ml.mm/m$^2$.day.atm and an $O_2$ permeability coefficient of 0.22 ml.mm/m$^2$.day.atm.

## COMPARATIVE EXAMPLE 11

The procedure for preparing the copolyhydroxypolyether of Example 89 was repeated with the exception that 37.4 parts of resorcin was used in place of the hydroquinone, the amount of 2,6-naphthalene diol used was changed to 96.1 parts and the amount of the solvent cyclohexanone used was changed to 181 parts to carry out the reaction followed by the end termination by using 28.2 parts of phenol to prepared pellets of a copolyhydroxypolyether of hydroquinone, resorcin and 2,6-naphthalene diol.

On analysis, it was found that the pellets are composed of the copolyhydroxypolyether having an

intrinsic viscosity [η] of 0.53 dl/g and a glass transition temperature of 46°C, in which about 80% of the terminal group has been blocked by a phenyl group and no glycidyl group is contained at all, said copolyhydroxypolyether being composed of hydroquinone, resorcin and 2,6-naphthalene diol in the proportions of 24:51:25.

The pellets obtained had a brightness (L value) of 58.7 and a yellowness (b value) of 14.6.

The copolyhydroxypolyether was press molded in the same manner as in Example 70 to prepare a pressed sheet having a thickness of about 200µm. The pressed sheet had a haze of 2.7% and a refractive index of 1.613. However, this pressed sheet had a tensile break strength of 260 $kg/cm^2$, elongation of 93% and tensile modulus of 19000 $kg/cm^2$, thus this copolyhydroxypolyether was inferior in strength of the pressed sheet to the copolyhydroxypolyether of the invention.

This pressed sheet was intended to prepare a biaxially oriented film under the same conditions as in Example 70, but no uniform stretching of said pressed sheet was effected.

## COMPARATIVE EXAMPLE 12

The procedure for preparing the copolyhydroxypolyether of Example 89 was repeated with the exception that 59.5 parts of resorcin was used in place of the hydroquinone, 74.5 parts of 4,4′-dihydroxydiphenyl was used in place of the 2,6-naphthalene diol, and the amount of the solvent cyclohexanone was changed to 181 parts to carry out the reaction followed by the end termination by using 37.2 parts of p-methoxyphenol in place of the phenol to prepare pellets of a copolyhydroxypolyether of hydroquinone, resorcin and 4,4′-dihydroxyphenyl.

On analysis, it was found that the pellets are composed of the copolyhydroxypolyether having an intrinsic viscosity [η] of 0.52 dl/g and a glass transition temperature of 33°C, in which about 80% of the terminal group has been blocked by a p-methoxyphenyl group and no glycidyl group is contained at all, said copolyhy6droxypolyether being composed of hydroquinone, resorcin and 4,4′-dihydroxydiphenyl in the proportions of 24:59:17. The pellets had a brightness (L value) of 59.0 and a yellowness (b value) of 15.5.

This copolyhydroxypolyether was press molded in the same manner as in Example 70 to prepare a pressed sheet. As the result, the pressed sheet was soft at ordinary temperature, deformed with ease and became viscous by heating slightly, thus this pressed sheet was different in properties from the pressed sheet of the invention.

## EXAMPLE 94

The procedure for preparing the hydroquinone diglycidyl ether and its oligomer of Example 70 was repeated with the exception that 3724 parts of phenyl hydroquinone was used in place of the hydroquinone to carry out the reaction in the same manner as in Example 70 to prepare diglycidyl ether of phenyl hydroquinone and its oligomer.

The yield of the diglycidyl ether of phenyl hydroquinone and its oligomer was 5436 parts, and the epoxy equivalent thereof was 173 g/eq (epoxy content: 5.78 eq/kg).

The same reaction vessel used for preparing copolyhydroxypolyether as in Example 70 was charged with 222 parts of the hydroquinone diglycidyl ether and its oligomer in Example 70, 138.4 parts of the above-mentioned diglycidyl ether of phenyl hydroquinone and its oligomer, 103.5 parts of hydroquinone, 202 parts of a solvent cyclohexanone and 0.7 part of a 20% aqueous solution of tetraethylammonium hydroxide, the reaction was carried out in the same manner as in Example 70 followed by the end termination reaction by using 28.2 parts of phenol to prepare pellets of a copolyhydroxypolyether of hydroquinone and phenyl hydroquinone.

On analysis of the pellets, it was found that the copolyhydroxypolyether has a intrinsic viscosity [η] of 0.63 dl/g and a glass transition temperature of 55°C, in which about 80% of the terminal group has been blocked by a phenyl group and no glycidyl group is contained at all, said copolyhydroxypolyether being composed of hydroquinone and phenyl hydroquinone in the proportion of 77:23. The pellets had a brightness (L value) of 58.1 and a yellowness of 12.1.

The copolyhydroxypolyether was press molded in the same manner as in Example 70 to prepare a pressed sheet having a thickness of about 200 µm, a haze of 1.8 % and a refractive index of 1.603. This pressed sheet had a tensile break strength of 370 $kg/cm^2$, elongation of 93% and tensile modulus of 24000

kg/cm$^2$, and also had a $CO_2$ permeability of 0.86 ml.mm/m$^2$.day.atm.

The pressed sheet was stretched biaxially in the same manner as in Example 70 to prepare a biaxially oriented film having a thickness of about 22 µm. The biaxially oriented film obtained had a tensile break strength of 420 kg/cm2, elongation of 65% and tensile modulus of 29000 kg/cm$^2$, and also had a $CO_2$ permeability coefficient of 0.86 ml.mm/m$^2$.day.atm, and an $O_2$ permeability coefficient of 0.27 ml.mm/m$^2$.

EXAMPLE 95

The procedure for preparing the hydroquinone diglycidyl ether and its oligomer of Example 70 was repeated with the exception that 3204 parts of 2,6-naphthalene diol was used in place of the hydroquinone to carry out the reaction in the same manner as in Example 70 to prepare diglycidyl ether of 2,6-naphthalene diol and its oligomer.

The yield of the thus obtained diglycidyl ether and its oligomer was 5540 parts, and the epoxy equivalent thereof was 182 g/eq (epoxy content: 5.49 eq/kg).

The same reaction vessel for preparing the copolyhydroxypolyether as used in Example 70 was charged with 222 parts of the hydroquinone diglycidyl ether and its oligomer, 145.2 parts of the above-mentioned diglycidyl ether of 2,6-naphthalene diol and its oligomer, 103.5 parts of hydroquinone, 205 parts of a solvent cyclohexanone and 0.7 part of a 20% aqueous solution of tetraethylammonium hydroxide, and the reaction was carried out in the same manner as in Example 70 followed by the end termination reaction by using 28.2 parts of phenol to prepare pellets of a copolyhydroxypolyether of hydroquinone and 2,6-naphthalene diol.

On analysis of the pellets, it was found that the polyhydroxypolyether has an intrinsic viscosity [$\eta$] of 0.66 dl/g and a glass transition temperature of 74°C, in which about 80% of the terminal group has been blocked by a phenyl group and no glycidyl group is contained at all, said copolyhydroxypolyether being composed of hydroquinone and 2,6-naphthalene diol in the proportion of 74:26.

The pellets had a brightness (L value) of 60.9 and a yellowness (b value) of 13.0.

The copolyhydroxypolyether was press molded in the same manner as in Example 70 to prepare a pressed sheet having a thickness of about 200 µm. The pressed sheet had a haze of 3.7% and a refractive index of 1.616. This pressed sheet had a tensile break strength of 580 kg/cm$^2$, elongation of 64% and tensile modulus of 35000 kg/cm$^2$, and also had a $CO_2$ permeability of 0.50 ml.mm/m$^2$.day.atm.

The pressed sheet was stretched biaxially in the same manner as in Example 70 to prepare a biaxially oriented film having a thickness of about 22 µm. The biaxially oriented film had a tensile break strength of 670 kg/cm2, elongation of 32% and tensile break strength of 44000 kg/cm2, and also had a $CO_2$ permeability coefficient of 0.50 ml.mm/m$^2$.day.atm, and an $O_2$ permeability of 0.18 ml/mm/m$^2$.day.atm.

EXAMPLE 96

The procedure for preparing the hydroquinone diglycidyl ether and its oligomer of Example 70 was repeated with the exception that 3724 parts of 4,4′-dihydroxy diphenyl was used in place of the hydroquinone to carry out the reaction in the same manner as in Example 70 to prepare diglycidyl ether of 4,4′-dihydroxy diphenyl and oligomer thereof.

The yield of the diglycidyl ether of 4,4′-dihydroxy diphenyl and its oligomer was 5540 parts, and the epoxy equivalent thereof was 162 g/eq (epoxy content:6.17 eq/kg).

The same reaction vessel for preparing the copolyhydroxypolyether as used in Example 70 was charged with 226.8 parts of the diglycidyl ether of hydroquinone and resorcin and oligomer thereof used in Example 84, 130.0 parts of the above-mentioned diglycidyl ether of 4,4′-dihydroxy diphenyl and its oligomer, 103.5 parts of hydroquinone, 200 parts of a solvent cyclohexanone and 0.7 part of a 20% aqueous solution of tetraethylammonium hydroxide, the reaction was carried out in the same manner as in Example 70 and the end termination reaction with 37.2 parts of p-methoxyphenol was carried out to obtain pellets of a copolyhydroxypolyether of hydroquinone and 4,4′-dihydroxy diphenyl.

On analysis of the pellets obtained, it was found that the copolyhydroxypolyether has an intrinsic viscosity [$\eta$] of 0.68 dl/g and a glass transition temperature of 75°C, in which about 80% of the terminal group has been blocked by a p-methoxyphenyl group and no glycidyl group is contained at all, said copolyhydroxypolyether being composed of hydroquinone, resorcin and 4,4′-dihydroxy diphenyl in the

proportions of 69:11:20.

The pellets had a brightness (L value) of 60.3 and a yellowness (b value) of 12.1.

The copolyhydroxypolyether was press molded in the same manner as in Example 70 to prepare a pressed sheet having a thickness of about 200 µm. The pressed sheet obtained had a haze of 3.3% and a refractive index of 1.613. This pressed sheet had a tensile break strength of 530 kg/cm$^2$, elongation of 70% and tensile modulus of 31000 kg/cm$^2$, and also had a $CO_2$ permeability coefficient of 0.77 ml.mm/m$^2$.day.atm.

This pressed sheet was stretched biaxially in the same manner as in Example 70 to prepare a biaxially oriented film having a thickness of about 22µm. The biaxially oriented film obtained had a tensile break strength of 600 kg/cm$^2$, elongation of 37% and tensile modulus of 39000 kg/cm$^2$, and also had a $CO_2$ permeability coefficient of 0.74 ml.mm/m$^2$.day.atm, and an $O_2$ permeability coefficient of 0.20 ml.mm/m$^2$.day.atm.

## EXAMPLE 97

A reaction vessel equipped with stirrer, a distillation means having a separating means adapted to separate fractions of the distillate and return only the upper layer of the separated fractions to the reaction vessel and a continuous liquid feeding means was charged with 2202 parts of hydroquinone, 2406 parts of epichlorohydrin and 3680 parts of cyclohexanone, and 120 parts of a 50% aqueous sodium hydroxide solution was added with stirring, while maintaining the temperature of the system at about 70°C, and then the system was elevated in temperature with stirring up to about 100°C over a period of about 60 minutes. To this system was fed 2168 parts of a 50% aqueous sodium hydroxide solution over a period of about 90 minutes. At this time, water and cyclohexanone distilled off were separated, and only the cyclohexanone as separated was returned to the reaction vessel. Such operation as above was carried out for about 60 minutes after the feeding of the 50% aqueous sodium hydroxide solution.

Subsequently, this system was charged with 5000 parts of water and allowed to stand to separate into two layers, the water layer as separated was removed and the reaction liquid left was washed. Such washing operation using 5000 parts of water was repeated twice additionally.

This reaction liquid was incorporated with 406 parts of a 10% aqueous solution of sodium dihydrogenphosphate, stirred at about 60°C for about 15 minutes, and then this system was incorporated with 5000 parts of water and allowed to stand, followed by separating and washing. Such separating and washing operation was effected once more additionally.

This system was then distilled at about 90°C under reduced pressure to distil off water azeotropically with the solvent cyclohexanone. This distillation operation was continued until water present in the system was distilled off and no separation of the distillate into two layers took place.

A portion of the cyclohexanone solution, i.e. the reaction liquid obtained as above, was collected, and the solvent cyclohexanone was distilled off therefrom at about 110°C under high vacuum and, as the result, it was found that the concentration of the reaction product in this reaction liquid is 66.5%.

On analysis of the reaction product freed from the cyclohexanone, it was found that said reaction product is an oligomer of hydroquinone diglycidyl ether having the epoxy equivalent of 310 g/eq (epoxy content: 3.23 eq/kg).

Subsequently, the same reaction vessel used for preparing the copolyhydroxypolyether of hydroquinone and phenyl hydroquinone as in Example 70 was charged with 466 parts of the oligomer of hydroquinone diglycidyl ether obtained as above, 87.5 parts 4, 4′-dihydroxy diphenyl, 14 parts of cyclohexanone and 0.4 part of a 20% aqueous solution of tetraethylammonium hydroxide, the reaction was carried out in the same manner as in Example 70 followed by the end termination with 24.8 parts of p-methoxyphenol to prepare pellets of a copolyhydroxypolyether of hydroquinone and 4,4′-dihydroxy diphenyl.

On analysis of the pellets obtained, it was found that the copolyhydroxypolyether has an intrinsic viscosity [$\eta$] of 0.68 dl/g and a glass transition temperature of 77°C, in which about 80% of the terminal group has been blocked by a phenyl group and no glycidyl group is not contained at all, said coplyhydroxypolyether being composed of hy6droquinone and 4,4′-dihydroxy diphenyl in the proportion of 78:22.

The pellets had a brightness (L value) of 59.7 and a yellowness (b value) of 12.4.

The copolyhydroxypolyether was press molded in the same manner as in Example 70 to prepare a pressed sheet having a thickness of about 200 µm. The pressed sheet obtained had a haze of 3.1% and a refractive index of 1.615. This pressed sheet had a tensile break strength of 520 kg/cm$^2$, elongation of 60%

and tensile modulus of 36000 kg/cm², and also had a $CO_2$ permeability coefficient of 0.78 ml.mm/m².day.atm.

This pressed sheet was stretched biaxially in the same manner as in Example 70 to prepare a biaxially oriented film having a thickness of about 22 µm. The biaxially oriented film obtained had a tensile break strength of 610 kg/cm², elongation of 35% and tensile modulus of 41000 kg/cm², and also had a $CO_2$ permeability coefficient of 0.76 ml.mm/m².day.atm and an $O_2$ permeability coefficient of 0.20 ml.mm/m².day.atm.

## EXAMPLE 98

The procedure for preparing the copolyhydroxypolyether of hydroquinone and 4,4′-dihydroxy diphenyl of Example 97 was repeated with the exception that 75.3 parts of 2,6-naphthalene diol was used in place of the 4,4′-dihydroxy diphenyl, and the amount of cyclohexane used was changed to 9 parts, and the reaction was carried out in the same manner as in Example 97 and the end termination reaction with 18.8 parts of phenol was effected to prepare pellets of a copolyhydroxypolyether of hydroquinone and 2,6-naphthalene diol.

On analysis of the thus obtained pellets, it was found that the copolyhydroxypolyether has an intrinsic viscosity [$\eta$] of 0.71 dl/g and a glass transition temperature of 73°C, in which about 80% of the terminal group has been blocked by a phenyl group and no glycidyl group is contained at all, said copolyhydroxypolyether being composed of hydroquinone and 2,6-naphthalene diol in the proportion of 78:22. The pellets had a brightness (L value) of 63.1 and a yellowness (b value) of 12.5.

The copolyhydroxypolyether was press molded in the same manner as in Example 70 to prepare a pressed sheet having a thickness of about 200 µm, a haze of 3.4% and a refractive index of 1.613. The pressed sheet had a tensile break strength of 560 kg/cm², elongation of 80% and tensile modulus of 32000 kg/cm², and also had a $CO_2$ permeability coefficient of 0.58 ml.mm/m².day.atm.

The pressed sheet was stretched biaxially in the same manner as in Example 70 to prepare a biaxially oriented film having a thickness of about 22 µm. The biaxially oriented film obtained had a tensile break strength of 580 kg/cm², elongation of 37% and tensile modulus of 43000 kg/ccm², and also had a $CO_2$ permeability coefficient of 0.57 ml.mm/m².day.atm and an $O_2$ permeability coefficient of 0.18 ml.mm/m²,day.atm.

## EXAMPLE 99

The procedure for preparing the oligomer of hydroquinone diglycidyl ether of Example 97 was repeated with the exception that the amount of the epichlorohydrin used was changed to 2221 parts to prepare a cyclohexanone solution of an oligomer of hydroquinone diglycidyl ether.

In the same manner as in Example 96, a portion of the cyclohexanone solution was collected and the solvent cyclohexanone was distilled off. As the result, it was found that a concentration of the reaction product in the solution is 63.3% and said reaction product is the oligomer of hydroquinone diglycidyl ether having an epoxyequivalent of 496 g/eq (epoxy content: 2.02 eq/kg).

Subsequently, pellets of a copolyhydroxypolyether of hydroquinone and 2,6-naphthalene diol were prepared by repeating the reaction and end termination treatment in the same manner as in Example 96 by using 784 parts of the cyclohexanone solution of the oligomer of hydroquinone diglycidyl ether obtained as above with the exception that no cyclohexanone was added.

On analysis of the pellets obtained, it was found that the copolyhydroxypolyether has an intrinsic viscosity [$\eta$] of 0.73 dl/g and a glass transition temperature of 70°C, in which about 80% of the terminal group has been blocked by a phenyl group and no glycidyl group is contained at all, said copolyhydroxypolyether being composed of hydroquinone and 2,6-naphthalene diol in the proportion of 86:14. The pellets had a brightness (L value) of 62.2 and a yellowness (b value) of 9.9.

The copolyhydroxypolyether was press molded in the same manner as in Example 70 to prepare a pressed sheet having a thickness of about 220 µm. The pressed sheet obtained had a haze of 3.2% and a refractive index of 1.607.

The pressed sheet had a tensile break strength of 530 kg/cm², elongation of 73% and tensile modulus of 30000 kg/cm², and also had a $CO_2$ permeability coefficient of 0.64 ml.mm/m².day.atm.

The pressed sheet was stretched biaxially in the same manner as in Example 70 to prepare a biaxially oriented film having a thickness of about 22 μm.

The biaxially oriented film obtained had a tensile break strength of 580 kg/cm², elongation of 34% and tensile modulus of 39000 kg/cm², and also had a $CO_2$ permeability coefficient of 0.65 ml.mm/m².day.atm and an $O_2$ permeability coefficient of 0.21 ml.mm/m².day.atm.

EXAMPLE 100

The procedure for preparing the oligomer of hydroquinone diglycidyl ether of Example 97 was repeated with the exception that a mixture of 1542 parts of hydroquinone and 1286 parts of 4,4′-dihydroxy diphenyl ketone was used in place of the hydroquinone, the amount of epichlorohydrin used was changed to 2128 parts and the amount of cyclohexanone used was changed to 4400 parts to prepare a cyclohexanone solution of an oligomer of hydroquinone and 4,4′-dihydroxy diphenyl ketone.

In the same manner as in Example 96, a portion of the cyclohexanone solution prepared as above was treated, as the result, it was found that a concentration of the reaction product in said solution is 60.6%, and that the reaction product is an oligomer of diglycidyl ether of hydroquinone and 4,4′-dihydroxy diphenyl ketone having an epoxyequivalent of 798 g/eq (epoxy content: 1.25 eq/kg).

Subsequently, pellets of a copolyhydroxypolyether of hydroquinone and 4,4′-dihydroxy diphenyl ketone were prepared by carrying out the reaction in the same manner as in the preparation of the copolyhydroxypolyether of Example 96 with the exception that 790 parts of the cyclohexanone solution of the oligomer of hydroquinone and 4,4′-dihydroxy diphenyl ketone obtained as above was used, 31.0 parts of hydroquinone was used in place of the 4,4′-dihydroxy diphenyl, and no cyclohexanone was added, and by effecting the end termination treatment in the same manner as in Example 96 with the exception that 27.2 parts of 4′-hydroxyacetophenone was used in place of the p-methoxyphenol.

On analysis of the pellets obtained, it was found that the copolyhydroxypolyether has an intrinsic viscosity [$\eta$] of 0.85 dl/g and a glass transition temperature of 79°C, in which about 80% of the terminal group has been blocked by a phenyl group and no glycidyl group is contained at all, said copolyhydroxypolyether being composed of hydroquinone and 4,4′-dihydroxy diphenyl ketone in the proportion of 74:26. The pellets had a brightness (L value) of 60.6 and a yellowness (b value) of 13.8.

The copolyhydroxypolyether was press molded in the same manner as in Example 70 to prepare a pressed sheet having a thickness of about 200 μm. The pressed sheet obtained had a haze of 3.6% and a refractive index of 1.616. This pressed sheet had a tensile break strength of 590 kg/cm², elongation of 72% and tensile modulus of 36000 kg/cm², and also had a $CO_2$ permeation coefficient of 0.74 ml.mm/m².day.atm.

The pressed sheet was stretched biaxially in the same manner as in Example 70 to prepare a biaxially oriented film having a thickness of about 22 μm. The biaxially oriented film had a tensile break strength of 690 kg/cm² elongation of 29% and tensile modulus of 48000 kg/cm².

The biaxially oriented film had a $CO_2$ permeability coefficient of 0.72 ml.mm/mn².day.atm and $O_2$ permeability coefficient of 0.19 ml.mm/m².day.atm.

EXAMPLE 101

A copolyhydroxypolyether of hydroquinone and 2,6-naphthalene diol prepared in the same manner as in Example 72, said copolyhydroxypolyether being composed of hydroquinone and 2,6-naphthalene diol in the proportion of 82:18, end terminated by phenol, and having an intrinsic viscosity [$\eta$] of 0.58 dl/g, was extrusion molded at a barrel temperature of about 180°C to about 250°C with an extruder equipped with a T-die to prepare an extruded sheet having a thickness of about 80 μm. The extruded sheet had a haze of 1.2%, and a tensile break strength of 570 kg/cm² (direction of flow) to 560 kg/cm² (perpendicular to the flow), elongation of 85% (direction of flow) to 80% (perpendicular to the flow) and tensile modulus of 34000 kg/cm² (direction of flow) to 31000 kg/cm² (perpendicular to the flow). This extruded sheet had a $CO_2$ permeation coefficient of 0.56 ml.mm/m².day.atm.

With a biaxial stretching apparatus, this extruded sheet was stretched at a temperature of about 70°C to about 90°C to two times in the traverse direction (perpendicular to the flow) and to three times in the longitudinal direction (the flow) to prepare a biaxially oriented film having a thickness of about 13 μm. The

biaxially oriented film had a tensile break strength of 620 kg/$cm^2$ (direction of flow) to 570 kg/$cm^2$ (perpendicular to the flow), elongation of 41% (direction of flow) to 37% (perpendicular to the flow), and tensile modulus of 42000 kg/$cm^2$ (direction of flow) to 37000 kg/$cm^2$ (perpendicular to the flow), and also had a $CO_2$ permeability coefficient of 0.54 ml.mm/$m^2$.day.atm.

## EXAMPLE 102

A copolyhydroxypolyether of hydroquinone and 4,4′-dihydroxydiphenyl prepared in the same manner as in Example 73, said copolyhydroxypolyether being composed of hydroquinone and 4,4′-dihydroxypolyether in the proportion of 82:14, end terminated by p-methoxyphenol, and having an intrinsic viscosity [$\eta$] of 0.59 dl/g, was extrusion molded in the same manner as in Example 100 to prepare an extruded sheet having a thickness of about 80 $\mu$m.

This extruded sheet had a haze of 1.4%. The extruded sheet had a tensile break strength of 560 kg/$cm^2$ (direction of flow) to 490 kg/$cm^2$ (perpendicular to the flow), elongation of 84% (direction of flow) to 73% (perpendicular to the flow) and tensile modulus of 35000 kg/$cm^2$ (direction of flow) to 32000 kg/$cm^2$ (perpendicular to the flow), and also had a $CO_2$ permeability coefficient of 0.80 ml.mm/$m^2$.day.atm.

This extruded sheet was stretched with a biaxial stretching apparatus in the same manner as in Example 100 to two times in the traverse direction (perpendicular to the flow) and to three times in the longitudinal direction (the flow) to prepare a biaxially oriented film having an average thickness of about 13 $\mu$m.

The biaxially oriented film obtained had a tensile break strength of 640 kg/$cm^2$ (direction of flow) to 570 kg/$cm^2$ (perpendicular to the flow), elongation of 40% (direction of flow) to 36% (perpendicular to the flow) and tensile modulus of 46000 kg/$cm^2$ (direction of flow) to 41000 kg/$cm^2$ (perpendicular to the flow), and also had a $CO_2$ permeability coefficient of 0.79 ml.mm/$m^2$.day.atm.

## EXAMPLE 103

A dried polyethylene terephthalate (Mitsui Pet J 135, a product of Mitsui Pet Resin K.K.) was melted by using one extruder, and separately the copolyhydroxypolyether of hydroquinone and 2,6-naphthalane diol of Example 100 was melted by using another extruder. These melts were fed to a T-die of the two-kind three-layer type to co-extrude a co-extruded sheet composed of polyethylene terephthalate/copolyhydroxypolyether/polyethylene terephthalate (thickness about 40 $\mu$m/20 $\mu$m/40 $\mu$m).

This co-extruded sheet was transparent, in which the adhesion between the polyethylene terephthalate layer and the copolyhydroxypolyether layer was good. The co-extruded sheet had a haze of 0.9%.

This co-extruded sheet was stretched with a biaxial stretching apparatus in the same manner as in Example 100 at a temperature of about 80°C to about 100°C to two times in the traverse direction (perpendicular to the flow) and to three times in the longitudinal direction (the flow) to prepare a biaxially oriented film of the two-kind three-layer type having an average thickness of about 17 $\mu$m.

In the biaxially oriented film the adhesion between the copolyhydroxypolyether layer and the polyethylene terephthalate layer was good. The copolyhydroxypolyether layer had a thickness of about 3 $\mu$m and the polyethylene terephthalate layer and a thickness of about 7 $\mu$m.

The laminated biaxially oriented film had a tensile break strength of 1400 kg/$cm^2$ (direction of flow) to 1200 kg/$cm^2$ (perpendicular to the flow), elongation of 63% (direction of flow) to 48% (perpendicular to the flow) and tensile modulus of 43000 kg/$cm^2$ (direction of flow, 38000 kg/$cm^2$ (perpendicular to the flow), and also had a $CO_2$ permeability coefficient of 3.2 ml.mm/$m^2$.day.atm.

## EXAMPLE 104

The pressed sheet of copolyhydroxypolyether of Example 72 and a pressed sheet having a thickness of about 100 $\mu$m prepared by compression molding a dried polyethylene terephthalate (the same as that of Example 102) were laid one on top of the other, and further press molded at about 270°C and 50 kg/$cm^2$ to prepare a multilayer pressed sheet having a thickness of about 150 $\mu$m.

This multilayer pressed sheet had a haze of 1.4%, in which the adhesion between the copolyhydroxypolyether layer and the polyethylene terephthalate layer was good.

The multilayer pressed sheet was biaxially stretched in both directions simultaneously at a temperature of 80°C to 95°C in the same manner as in Example 70 to prepare a biaxially oriented film having an average thickness of 17 µm. In the biaxially oriented film, the copolyhydroxypolyether layer had a thickness of about 8 µm and the polyethylene terephthalate layer had a thickness of about 9 µm, in which the adhesion between the polyhydroxypolyether layer and the polyethylene terephthalate layer was good. This biaxially oriented film had a tensile break strength of 1100 kg/cm$^2$, elongation of about 42% and tensile modulus of 29000 kg/cm$^2$, and also had a $CO_2$ permeability coefficient of 1.8 ml.mm/m$^2$.day.atm.

## COMPARATIVE EXAMPLE 13

A dried polyethylene terephthalate (the same as that of Example 100) was press molded to prepare a pressed sheet having an thickness of about 100 m. This pressed sheet had a tensile break strength of 480 kg/cm$^2$ and elongation of 82%, and also had a $CO_2$ permeability coefficient of 24 ml.mm/m$^2$.day.atm and an $O_2$ permeability coefficient of 4.6 ml.mm/m$^2$.day.atm.

The pressed sheet was biaxially stretched to three times in the longitudinal and traverse directions simultaneously in the same manner as in Example 83 to prepare a biaxially oriented film having a thickness of about 11 m. The biaxially oriented film had a tensile break strength of 1550 kg/cm$^2$, elongation of 55% and tensile modulus of 46000 kg/cm$^2$, and also had a $CO_2$ permeability coefficient of 15 ml.mm/m$^2$.day.atm and an $O_2$ permeability of 2.6 ml.mm/m$^2$.day.atm.

## EXAMPLE 105

A mixture of 100 parts by weight of polyethylene terephthalate used in Example 103 and 10 parts by weight of copolyhydroxypolyether of hydroquinone and 2,6-naphthalene diol used in Example 100 was melt extruded with an extruder at a molding temperature of about 250°C to about 290°C, cooled and cut to pellets of a composition of polyethylene terephthalate and copolyhydroxypolyether.

The pellets thus prepared were press molded to prepare a pressed sheet having a thickness of about 100 µm. The pressed sheet obtained had a tensile break strength of 460 kg/cm$^2$ and elongation of 86%, and also had a $CO_2$ permeability coefficient of 17 ml.mm/m$^2$.day.atm and an $O_2$ permeability coefficient of 3.6 ml.mm/m$^2$.day.atm.

The pressed sheet of the composition was stretched with a biaxial stretching apparatus to three times in the longitudinal and traverse directions simultaneously to prepare a biaxially oriented film.

The biaxially oriented film obtained had a thickness of about 11 µm, and was uniformly stretched with less irregularities in thickness. The biaxially oriented film of the composition had a haze of 0.7%, and was excellent in transparency.

This biaxially oriented film had a tensile break strength of 1550 kg/cm$^2$, elongation of 44% and tensile modulus of 39000 kg/cm$^2$, and also had a $CO_2$ permeability coefficient of 7.1 ml.mm/m$^2$.day.atm and an $O_2$ permeability coefficient of 1.8 ml.mm/m$^2$.day.atm.

## EXAMPLE 106

The procedure of Example 105 was repeated with the exception that the copolyhydroxypolyether of hydroquinone and 4,4′-dihydroxydiphenyl of Example 33 was used in the same proportion in place of the copolyhydroxypolyether of hydroquinone and 2,6-naphthalene diol to prepare pellets of a composition of polyethylene terephthalate and copolyhydroxypolyether.

With the pellets thus prepared, a pressed sheet having a thickness of about 100 µm was obtained in the same manner as in Example 104. The pressed sheet obtained had a tensile break strength of 465 kg/cm$^2$ and elongation of 82%, and also had a CO permeability coefficient of 18 ml.mm/m$^2$.day.atm.

This pressed sheet was stretched biaxially in the same manner as in Example 104 to prepare a biaxially oriented film having a thickness of about 11µm. This biaxially oriented film was less in thickness irregularity

and uniformly stretched. The biaxially oriented film had a haze of 0.6% and was excellent in transparency. This biaxially oriented film had a tensile break strength of 1500 kg/cm$^2$, elongation of 47% and tensile modulus of 39000 kg/cm$^2$, and also had a $CO_2$ permeability coefficient of 7.7 ml.mm/m$^2$.day.atm and an $O_2$ permeability coefficient of 1.9 ml.mm/m$^2$.day.atm.

EXAMPLE 107

100 parts by weight of polyethylene terephthalate (MITSUI PET J135, available from Mitsui Pet Resin K.K.) dried at 150°C for 10 hours was mixed with 10 parts by weight of polyhydroxypolyether obtained in Example 72 which was dried at 50°C for 12 hours. The resulting mixture was subjected to melt-extrusion at about 250-290°C using an extruder. Thus extruded mixture was cooled and then cut to prepare pellets of a composition of polyethylene terephthalate and polyhydroxypolyether.

Then, the pellets of the composition was subjected to press molding to prepare a pressed sheet having a thickness of about 100 µm. The obtained pressed sheet was transparent.

When this pressed sheet of the composition was measured on the mechanical properties, the tensile break strength was 460 kg/cm$^2$ and the tensile elongation at break was 86%. Further, the pressed sheet was measured on the gas barrier properties, and as a result, the coefficient of $CO_2$ permeability thereof was 17 ml.mm/m$^2$.day.atm and the coefficient of $O_2$ permeability thereof was 3.6 ml.mm/m$^2$.day.atm.

Subsequently, the pressed sheet of the composition was stretched simultaneously in the longitudinally direction and the lateral direction to three times, respectively, using a biaxial stretching apparatus to prepare a biaxially stretched film.

The obtained biaxially stretched film had a thickness of about 11 m, and it was confirmed that the film was in the uniformly stretched state without any unevenness of thickness.

The biaxially stretched film had a haze of 0.7%. When the mechanical properties of the film was measured, the tensile break strength thereof was 1550 kg/cm$^2$, the tensile elongation at break thereof was 44%, and the tensile modulus thereof was 39000 kg/cm$^2$. Further, the biaxially stretched film had a coefficient of $CO_2$ permeability of 7.1 ml.mm/m$^2$.day.atm and a coefficient of $O_2$ permeability of 1.8 ml.mm/m$^2$.day.atm.

EXAMPLES 108-114

The procedures of Example 107 were repeated except for using compositions prepared by using polyethylene terephthalates and polyhydroxypolyethers set forth in Table 17 in the proportions also set forth in Table 17 instead of the polyethylene terephthalate and the polyhydroxypolyether of Example 107, to prepare pressed sheets each having a thickness of about 100 µm. The results of the measurements on the mechanical properties and the coefficient of $CO_2$ permeability of the obtained sheets are set forth in Table 17.

Subsequently, each of the pressed sheets of the composition was biaxially stretched in the longitudinal direction and lateral direction simultaneously with each other to three times, respectively, in the same way as that in Example 107, to prepare various stretched films. Each of the obtained films had an average thickness set forth in Table 17, and it was confirmed that each film was in the uniformly stretched state. The results of the measurements on the mechanical properties and the coefficients of $CO_2$ permeability of the films are set forth in Table 17.

Table 17

| Example | Constituent of composition | | |
|---|---|---|---|
| | Starting material | | Amount of polyhydroxypolyether per 100 parts of polyethylene terephthalate (wt. parts) |
| | Polyethylene *1 terephthalate | Polyhydroxy-polyether | |
| 108 | Mitsui Pet J-135 | Ex.72 | 40 |
| 109 | Mitsui Pet J-135 | Ex.72 | 80 |
| 110 | Mitsui Pet J-135 | Ex.73 | 10 |
| 111 | Mitsui Pet J-135 | Ex.74 | 10 |
| 112 | Mitsui Pet J-135 | Ex.75 | 10 |
| 113 | Mitsui Pet J-125 | Ex.86 | 10 |
| 114 | Mitsui Pet J-125 | Ex.92 | 10 |

*1 Product of Mitsui Pet Resin K.K.

| Properties of pressed sheet | | | Properties of biaxially oriented film | | | | | |
|---|---|---|---|---|---|---|---|---|
| Tensile break strength ($kg/cm^2$) | Elongation (%) | $CO_2$ permeability coefficient (mL.mm/m$^2$.day, atm) | Average thickness ( m) | HAZE (%) | Tensile break strength ($kg/cm^2$) | Elongation (%) | Tensile modulus ($kg/cm^2$) | $CO_2$ permeability coefficient (mL.mm/m$^2$.day.atm) |
| 500 | 74 | 17 | 11 | 0.8 | 1570 | 37 | 38000 | 5.0 |
| 460 | 71 | 16 | 11 | 0.9 | 1480 | 29 | 36000 | 1.9 |
| 465 | 82 | 18 | 11 | 0.6 | 1500 | 48 | 39000 | 7.7 |
| 540 | 81 | 17 | 11 | 0.5 | 1460 | 49 | 42000 | 7.6 |
| 590 | 76 | 17 | 11 | 0.6 | 1640 | 39 | 57000 | 7.1 |
| 470 | 72 | 17 | 11 | 0.6 | 1400 | 47 | 35000 | 7.2 |
| 460 | 77 | 18 | 11 | 0.7 | 1420 | 45 | 37000 | 7.9 |

## COMPARATIVE EXAMPLE 13

A dried polyethylene terephthalate (same polyethylene terephthalate as used in Example 107) was subjected to press molding to prepare a pressed sheet having a thickness of about 100 µm. With respect to the mechanical properties, the obtained pressed sheet had a tensile break strength of 480 kg/cm$^2$ and a tensile elongation at break of 82%. With respect to the gas barrier properties, the sheet had a coefficient of $CO_2$ permeability of 24 ml.mm/m$^2$.day.atm and a coefficient of $O_2$ permeability of 4.6 ml.mm/m$^2$.day.atm.

Further, the pressed sheet was stretched in the longitudinal direction and lateral direction simultaneously with each other to three times, respectively, in the same manner as that in Example 107, to prepare a biaxially stretched film having a thickness of about 11µm. With respect to the mechanical properties, the obtained film had a tensile break strength of 1550 kg/cm$^2$, a tensile elongation at break of 55% and a tensile modulus of 46000 kg/cm$^2$. With respect to the gas barrier properties, the obtained film had a coefficient of $CO_2$ permeability of 15 ml.mm/m$^2$.day.atm and a coefficient $O_2$ permeability of 2.6 ml.mm/m$^2$.day.atm.

## EXAMPLE 115

The mixture of polyethylene terephthalate and polyhydroxypolyether in Example 107 was subjected to press molding at a barrel temperature of 160-280°C using an extruder equipped with a T-die, to prepare as extruded sheet.

With respect to the mechanical properties, the obtained extruded sheet of the composition had a tensile break strength of 505 kg/cm$^2$ (direction of flow) to 465 kg/cm$^2$ (perpendicular to the direction of flow) and a tensile elongation at break of 75% (direction of flow) to 60% (perpendicular to the direction of flow).

The coefficient of $CO_2$ permeability of the extruded sheet was 17 ml.mm/m$^2$.day.atm. Further, the extruded sheet of the composition was stretched using a biaxial stretching apparatus at about 85-100°C to two times in the lateral direction (perpendicular to the flow) and then to three times in the longitudinal direction (direction of the flow), to prepare a biaxially stretched film having an average thickness of about 13 µm.

The biaxially stretched film of the composition had a haze of 0.4%. With respect to the mechanical properties, the biaxially stretched film had a tensile break strength of 660 kg/cm$^2$ (direction of flow) to 1550 kg/cm$^2$ (perpendicular to the flow), a tensile elongation at break of 48% (direction of the flow) to 35% (perpendicular to the flow) and a tensile modulus of 50000 kg/cm$^2$ (direction of the flow) to 43000 kg/cm$^2$ (perpendicular to the flow). The coefficient of $CO_2$ permeability of the biaxially stretched film was 6.9 ml.mm/m$^2$.day.atm.

## EXAMPLE 116

The mixture of polyethylene terephthalate and polyhydroxypolyether in Example 107 was subjected to injection molding at a molding temperature of about 270°C using an injection molding machine to prepare a perform (cold parison) having a thickness of 3.2 mm. The preform was biaxially stretched to about 2.5 times in the longitudinal direction and to about 4 times in the lateral direction using a biaxial stretching blow-molding machine, to prepare a stretched bottle having a capacity of about 1 liter.

The stretched bottle had a coefficient of $CO_2$ permeability of 1.9 ml/day.bottle.atm.

## COMPARATIVE EXAMPLE 14

The polyethylene terephthalate used in Example 107 was subjected to injection molding to prepare a perform which was composed of only a polyethylene terephthalate layer and had the same thickness (about 3.2 mm) as that of the preform of Example 116. Then, the obtained preform was stretch blow-molded in the

same manner as described in Example 116 to prepare a stretched bottle having a capacity of 1 liter.

The stretched bottle had a coefficient of $CO_2$ permeability of 4.0 ml/day.bottle.atm.

## EXAMPLE 117

The pressed sheet of copolyhydroxypolyether used in Example 72 and a pressed sheet having a thickness of about 100 μm prepared by compression molding of a dried polyethylene terephthalate (MITSUI PET J135, available from Mitsui Pet Resin K.K.) under the conditions of a temperature of about 270°C and a pressure of 50 kg/cm$^2$ were laid one upon the other, and then they were subjected to press molding under the conditions of a temperature of about 270°C and a pressure of 50 kg/cm$^2$ to prepare a multilayer pressed sheet having a thickness of about 150 μm.

The adhesion between the copolyhydroxypolyether layer and the polyethylene terephthalate layer in this multilayer pressed sheet was good. The multilayer pressed sheet had a haze of 1.4%.

The multilayer pressed sheet was then biaxially stretched at a temperature of 80-90°C simultaneously to three times in the longitudinal direction and lateral direction, respectively, to prepare a biaxially stretched film having an average thickness of 17 μm. In the biaxially stretched film, the thickness of the copolyhydroxypolyether layer was about 8 μm, and the thickness of the polyethylene terephthalate layer was about 9 μm. The adhesion between the copolyhydroxypolyether layer and the polyethylene terephthalate layer was good. As a result of measurement of the mechanical properties of the biaxially stretched film, the tensile break strength was 1100 kg/cm$^2$, the tensile elongation at break was 42%, and the tensile modulus was 29000 kg/cm$^2$. The biaxially stretched film has a coefficient of $CO_2$ permeability of 1.8 ml.mm/m$^2$.day.atm.

## EXAMPLES 118-123

The procedures of Example 117 were repeated except for using copolyhydroxypolyethers and polyethylene terephthalates set forth in Table 18 instead of the copolyhydroxypolyether and polyethylene terephthalate of Example 117, to prepare various multilayer pressed sheets each having a thickness of about 150 μm.

Each of the obtained multilayer pressed sheets had a good adhesion between the copolyhydroxypolyether layer and the polyethylene terephthalate layer.

These pressed sheets were then biaxially stretched in the same manner as that in Example 117 to prepare biaxially stretched films each having an average thickness of 17 μm. In each of the biaxially stretched films, the thickness of the copolyhydroxypolyether layer and the polyethylene terephthalate layer were about 8 μm and about 9 μm, respectively, and each film was in the uniformly stretched state. The results of measurements on the mechanical properties and the coefficient of $CO_2$ permeability of the biaxially stretched films are set forth in Table 18.

Table 18

| Example | Constituent of composition | | Properties of biaxially oriented film | | | |
|---|---|---|---|---|---|---|
| | Polyethylene *1 terephthalate | Copolyhydroxy-polyether | Tensile break strength ($kg/cm^2$) | Elongation (%) | Tensile modulus ($kg/cm^2$) | $CO_2$ permeability coefficient ($\frac{ml.mm}{m^2.day.atm}$) |
| 118 | Mitsui Pet J-135 | Reference Example 73 | 1310 | 44 | 41000 | 2.0 |
| 119 | Mitsui Pet J-135 | Reference Example 74 | 1470 | 46 | 38000 | 1.8 |
| 120 | Mitsui Pet J-135 | Reference Example 75 | 1440 | 41 | 39000 | 1.7 |
| 121 | Mitsui Pet J-135 | Reference Example 77 | 1340 | 43 | 33000 | 1.8 |
| 122 | Mitsui Pet J-125 | Reference Example 86 | 1150 | 43 | 29000 | 1.8 |
| 123 | Mitsui Pet J-125 | Reference Example 92 | 1210 | 40 | 32000 | 1.7 |

*1 Product of Mitsui Pet K.K.

COMPARATIVE EXAMPLE 15

A dried polyethylene terephthalate (same as that used in Example 117) was subjected to press molding to prepare a pressed sheet.

As for the mechanical properties of the obtained pressed sheet, the tensile break strength of 480 kg/cm$^2$ and a tensile elongation at break was 82%. As for the gas barrier properties thereof, the coefficient of $CO_2$ permeability was 24 ml.mm/m$^2$.day.atm and the coefficient of $O_2$ permeability was 4.6 ml.mm/m$^2$.day.atm.

This pressed sheet was then biaxially stretched simultaneously in the longitudinal and the lateral direction to three times, respectively, in the same manner as that in Example 117, to prepare a biaxially stretched film having a thickness of about 11 µm.

As for the mechanical properties of the obtained biaxially stretched film, the tensile break strength was 1550 kg/cm$^2$, the tensile elongation at break was 55%, and the tensile modulus of 46000 kg/cm$^2$. As for the gas barrier properties thereof, the coefficient of $CO_2$ permeability was 15 ml.mm/m$^2$.day.atm and the coefficient of $O_2$ was 2.6 ml.mm/m$^2$.day.atm.

EXAMPLE 124

A dried polyethylene terephthalate (same as that used in Example 117) was melted using a extruder, and separately a copolyhydroxypolyether prepared from hydroquinone and 2,6-naphthalene diol in the same manner as that in Example 72 was melted using the other extruder. Then, the melts were independently fed to a T-die for three layers of two kinds, and they were extruded through the die to prepare a co-extruded sheet composed of a polyethylene terephthalate layer/ a copolyhydroxypolyether layer / a polyethylene terephthalate layer (thickness: about 40 µm/20 µm/40 µm).

The obtained co-extruded sheet was transparent, and the adhesion between the polyethylene terephthalate layer and the copolyhydroxypolyether layer was good. The haze of the co-extruded sheet was 0.9%.

Further, the multilayer co-extruded sheet was stretched to two times in the lateral direction (perpendicular to the flow) at a temperature of about 80-100°C and then stretched to three times in the longitudinal direction (direction of the flow) in a similar manner to that in Example 117 using a biaxial stretching apparatus, to prepare a biaxially stretched film having a thickness of about 17 µm and composed of three layers of two kinds.

The biaxially stretched laminated film had a good adhesion between the copolyhydroxypolyether layer and the polyethylene terephthalate layer. In the biaxially stretched laminated film, the thickness of the copolyhydroxypolyether layer was about 3 µm and the thickness of the polyethylene terephthalate layer was about 7 µm.

As for the mechanical properties of the biaxially stretched laminated film, the tensile break strength was 1400 kg/cm$^2$ (direction of the flow) to 1200 kg/cm$^2$ (perpendicular direction to the flow), the tensile elongation at break was 63% (direction of the flow) to 48% (perpendicular direction to the flow), and the tensile modulus was 43000 kg/cm$^2$ (direction of the flow) to 38000 kg/cm$^2$ (perpendicular direction to the flow). The coefficient of $CO_2$ permeability of this film was 3.2 ml.mm/m$^2$.day.atm.

EXAMPLE 125

A dried polyethylene terephthalate (same as that used in Example 117) was subjected to press molding at about 260°C to prepare a pressed sheet having a thickness of about 100 µm. Separately, a mixture of 100 parts by weight of the above polyethylene terephthalate and 40 parts by weight of the polyhydroxypolyether of Example 72 dried under vacuum at 50°C for 12 hours was subjected to melt extrusion using an extruder at about 260°C to prepare pellets of a composition. The pellets of the composition was subjected to press molding at about 260°C to prepare a pressed sheet having a thickness of about 100 µm.

Further, the pressed sheet of the polyethylene terephthalate was laminated on the pressed sheet of the

composition polyethylene terephthalate and polyhydroxypolyether, and they were subjected to press molding at about 260°C to prepare a laminated sheet composed of two layers of two kinds. This laminated sheet had a thickness of about 150 µm.

The obtained laminated sheet showed a good adhesion between the polyethylene terephthalate layer and the composition layer and had a tensile break strength of 460 kg/cm$^2$ and a tensile elongation at break of 80%. As a result of measurement on the gas barrier properties of the laminated sheet, the coefficient of $CO_2$ permeability was 17 ml.mm/m$^2$.day.atm.

The laminated sheet composed of the polyethylene terephthalate layer and the composition layer was stretched simultaneously in the longitudinal direction and the lateral direction to three times, respectively, in the same manner as described in Example 117, to prepare a biaxially stretched film.

The obtained biaxially stretched film had a thickness of about 17 µm, and was in the uniformly and biaxially stretched state. Further, this stretched film showed a good adhesion between the polyethylene terephthalate layer and the composition layer. The haze of the biaxially stretched film was 0.4%. As a result of measurement of the mechanical properties of this stretched film, the tensile break strength was 1580 kg/cm$^2$, the tensile elongation at break was 57%, and the tensile modulus was 46000 kg/cm$^2$. Further, the coefficient of $CO_2$ permeability of the biaxially stretched film was 5.1 ml.mm/m$^2$.day.atm.

## EXAMPLES 126-132

Laminated sheets each having a thickness of about 150 µm and composed of two layers of two kinds were prepared in the same manner as that in Example 125 except for using polyethylene terephthalate and polyhydroxypolyethers set forth in Table 19 instead of the polyethylene terephthalate and the composition of Example 125.

Each of the obtained laminated sheets showed a good adhesion between the polyethylene terephthalate layer and the composition layer. The results of measurement on the mechanical properties and the coefficient of $CO_2$ permeability of each laminated sheet are set forth in Table 19.

The laminated sheets were then biaxially stretched simultaneously in the longitudi9nal direction and the lateral direction to three times, respectively, in the same manner as described in Example 125, to prepare biaxially stretched films. Each of the obtained stretched films had an average thickness of about 17 µm, and they are in the uniformly stretched state. Further, each of the biaxially stretched films showed a good adhesion between the polyethylene terephthalate layer and the composition layer. The results of measurement on the haze, the mechanical properties and the gas barrier properties of the biaxially stretched films are set forth in Table 19

Table 19

| Example | Polyethylene *1 terephthalate | Constituent of composition: Polyethylene *1 terephthalate | Polyhydroxy-polyether | Amount of polyhydroxypolyether per 100 parts of polyethylene terephthalate (wt. parts) |
|---|---|---|---|---|
| 126 | Mitsui Pet J-135 | Mitsui Pet J-135 | Ex.72 | 10 |
| 127 | Mitsui Pet J-135 | Mitsui Pet J-135 | Ex.72 | 80 |
| 128 | Mitsui Pet J-135 | Mitsui Pet J-135 | Ex.73 | 40 |
| 129 | Mitsui Pet J-135 | Mitsui Pet J-135 | Ex.74 | 40 |
| 130 | Mitsui Pet J-135 | Mitsui Pet J-135 | Ex.75 | 40 |
| 131 | Mitsui Pet J-125 | Mitsui Pet J-125 | Ex.86 | 40 |
| 132 | Mitsui Pet J-125 | Mitsui Pet J-125 | Ex.92 | 40 |

*1 Product of Mitsui Pet Resin K.K.

| Example | Properties of pressed sheet: Tensile break strength ($kg/cm^2$) | Elongation (%) | $CO_2$ permeability coefficient (ml.mm/$m^2$.day.atm) | Properties of biaxially oriented film: HAZE (%) | Tensile break strength ($kg/cm^2$) | Elongation (%) | Tensile modulus ($kg/cm^2$) | $CO_2$ permeability coefficient (ml.mm/$m^2$.day.atm) |
|---|---|---|---|---|---|---|---|---|
| 126 | 510 | 77 | 20 | 0.3 | 1530 | 53 | 46000 | 11 |
| 127 | 430 | 73 | 15 | 0.6 | 1440 | 49 | 43000 | 3.9 |
| 128 | 480 | 81 | 19 | 0.4 | 1470 | 52 | 47000 | 6.1 |
| 129 | 500 | 74 | 18 | 0.5 | 1490 | 51 | 49000 | 5.2 |
| 130 | 540 | 78 | 17 | 0.4 | 1580 | 57 | 52000 | 5.3 |
| 131 | 440 | 78 | 17 | 0.3 | 1440 | 48 | 46000 | 5.0 |
| 132 | 460 | 75 | 18 | 0.4 | 1450 | 50 | 45000 | 5.1 |

EXAMPLE 133

A polyethylene terephthalate was subjected to injection molding in the same manner as described in Example 117 to prepare a molded form, and then a polyhydroxypolyether prepared in the same manner as described in Example 72 was further subjected to injection molding on the inner side of the above-prepared molded from to prepare a perform composed of a polyethylene terephthalate layer and a polyhydroxypolyether layer each layer having a thickness of about 1.6 mm. Then, the obtained performed was heated to 85-95°C using a heating apparatus of far inflared rays, and thus heated preform was stretched to about 2.5 times in the longitudinal direction and to about 4.3 times in the lateral direction using a stretching blow-molding machine to prepare a stretched bottle having a capacity of 1 liter which was composed of a polyethylene terephthalate layer having a thickness of about 150 µm.

The obtained stretched bottle had a coefficient of $CO_2$ permeability of 0.45 ml/day.bottle.atm and a coefficient of $O_2$ permeability of 0.14 ml/day.bottle.atm.

COMPARATIVE EXAMPLE 16

The same polyethylene terephthalate as used in Example 116 was subjected to injection molding to prepare a perform which was composed of only a polyethylene terephthalate layer and had the same thickness about 3.2 mm as that of the perform of Example 133. Then, the preform was stretch blow-molded in the same manner as described in Example 130 to prepare a stretched bottle having a thickness of about 300 m at the smallest thickness part and a capacity of about 1 liter. The obtained stretched bottle had a coefficient of $CO_2$ permeability of 4.0 ml/day.bottle.atm and a coefficient of $O_2$ permeability of 1.1 ml/day.bottle.atm.

EXAMPLE 134

A polyethylene terephthalate was melted in the same manner as described in Example 116 using one extruder, and separately a polyhydropolyoxypolyether prepared in the same manner as that used in Example 72 was melting using the other extruder. Then, the melts were independently fed to a pipe die for three layers of two kinds. A three-layered pipe composed of a polyethylene terephthalate layer / a polyhydroxypolyether layer/ a polyethylene terephthalate layer (thickness: about 1.2 mm/1.2 mm/1.2 mm) was extruded through the die and cooled with water to prepare a three layered pipe having an outer diameter of 24.8 mm and a thickness of 3.6 mm.

Then, the pipe was cut and heat melted at one end to work a bottom and also heat melted at the other end to work a top,so as to prepare a preform having a full length of 16.5 cm and a weight of about 50 g.

Subsequently, the perform was biaxially stretched to 2.5 times in the longitudinal direction and to 4 times in the lateral direction using a biaxial-stretching blow-molding machine (LB01, produced by Corpoplast Co., Ltd.) to obtain a multilayer container having a capacity of 1.5 liters and composed of a polyethylene terephthalate layer (thickness: about 120 µm) and a polyethylene terephthalate layer (thickness: about 120 µm) in this order.

When the multilayer container was measured on coefficient of $CO_2$ permeability and $O_2$ permeability, the coefficient of $CO_2$ permeability was 0.6 ml/day.bottle.atm and the coefficient of $O_2$ permeability was 0.18 ml/day.bottle.atm.

Thus, the multilayer container was filled with water to 0°C and then subjected to a drop test. As a result, the container was not broken even when the container was dropped from the height of one meter. Further, any delamination was not observed in the container.

EXAMPLE 135

Into a cooled single preform mold, the polyethylene terephthalate used in Example 117 was melt-molded using one injection molding machine at a molding temperature of about 270°C, and separately the composition of polyethylene terephthalate and polyhydropolyether was melt molded using the other injection molding machine at a molding temperature of 270°C, to prepare a two-layered preform composed of a polyethylene terephthalate layer (inner layer, thickness: about 1.6 mm) and a composition layer of polyethylene terephthalate and polyhydroxypolyether (outer layer, thickness: about 1.6 mm).

The obtained perform was biaxially stretched to about 2.5 times in the longitudinal direction and to about 4 times in the lateral direction using a biaxial-stretching blow-molding machine (LB01, produced by Corpoplast Co., Ltd) to prepare a multilayer container having a capacity of 1 liter. In the multilayer container, the average thickness of the polyethylene terephthalate layer was about 150µm and the average thickness of the composition layer was about 150µm. It was confirmed that the multilayer container was in the uniformly stretched state. The coefficient of $CO_2$ permeability of the container was 1.1 ml/day.bottle.atm.

## Claims

1. A polyhydroxypolyether which is substantially linear and has the formula [I]:

$$\left( OCH_2 \underset{OH}{\underset{|}{CH}} CH_2O\text{-}R^1 \right)_n \quad [I]$$

in which $R^1$ is a divalent aromatic hydrocarbon group consisting essentially of a p-phenylene group, and n is a positive integer;

said polyhydroxypolyether having an intrinsic viscosity of from 0.10 dl/g to less than 0.3 dl/g as measured in o-chlorophenol at 25°C and containing a nonionic organic halogen in an amount of not more than 0.2% by weight.

2. The polyhydroxypolyether as claimed in claim 1, wherein said polyhydroxypolyether has a glass transition temperature ranging from 30 to 150 °C.

3. A gas barrier property-imparting agent comprising a polyhydroxypolyether which is substantially linear and has the formula [I]:

$$\left( OCH_2 \underset{OH}{\underset{|}{CH}} CH_2O\text{-}R^1 \right)_n \quad [I]$$

in which $R^1$ is a divalent aromatic hydrocarbon group consisting essentially of a p-phenylene group, and n is a positive integer;,

said polyhydroxypolyether having an intrinsic viscosity of from 0.10 dl/g to less than 0.3 dl/g as measured in o-chlorophenol at 25°C and containing a nonionic organic halogen in an amount of not more than 0.2% by weight.

4. The gas barrier property-imparting agent as claimed in claim 3, wherein said polyhydroxypolyether has a glass transition temperature ranging from 30 to 150 °C.

5. The gas barrier property-imparting agent as claimed in claim 3, wherein said polyhydroxypolyether is used in an amount of 1 to 100 parts by weight based on 100 parts by weight of a resin to be imparted gas barrier properties.

6. A polyester resin composition comprising a polyhydroxypolyether (a) and a polyalkylene terephthalate (b) composed of ethylene terephthalate units as main structural units, wherein said polyhydroxypolyether (a) is substantially linear and has the formula [I]:

$$\left( OCH_2 \underset{OH}{\underset{|}{CH}} CH_2O\text{-}R^1 \right)_n \quad [I]$$

in which $R^1$ is a divalent aromatic hydrocarbon group consisting essentially of a p-phenylene group, and n is a positive integer;

said polyhydroxypolyether (a) having an intrinsic viscosity of from 0.10 dl/g to less than 0.3 dl/g as measured in o-chlorophenol at 25°C and containing a nonionic organic halogen in an amount of not more than 0.2% by weight.

7. The polyester resin composition as claimed in claim 6, wherein said polyhydroxypolyether has a glass transition temperature ranging from 30 to 150 °C.

8. The polyester resin composition as claimed in claim 6, wherein said polyhydroxypolyether is contained in the polyester resin composition in an amount of 1 to 100 parts by weight based on 100 parts by weight of the polyalkylene terephthalate.

9. A stretched molded article of polyester resin composition comprising a polyhydroxypolyether (a) and a polyalkylene terephthalate (b) composed of ethylene terephthalate units as main structural units, wherein said polyhydroxypolyether (a) is substantially linear and has the formula [I]:

$$-(OCH_2\underset{OH}{\underset{|}{CH}}CH_2O-R^1)_n- \quad [I]$$

in which $R^1$ is a divalent aromatic hydrocarbon group consisting essentially of a p-phenylene group, and n is a positive integer;
said polyhydroxypolyether (a) having an intrinsic viscosity of from 0.10 dl/g to less than 0.3 dl/g as measured in o-chlorophenol at 25°C and containing a nonionic organic halogen in an amount of not more than 0.2% by weight.

10. The stretched molded article as claimed in claim 9, wherein said polyhydroxypolyether has a glass transition temperature ranging from 30 to 150 °C.

11. The stretched molded article as claimed in claim 9, wherein said polyhydroxypolyether is contained in the polyester resin composition in an amount of 1 to 100 parts by weight based on 100 parts by weight of the polyalkylene terephthalate.

12. The stretched molded article as claimed in claim 9, wherein said stretched molded article is either a uniaxially stretched molded article having a stretch ratio of 1.1 to 10 or a biaxially stretched molded article having a stretch ratio of 1.1 to 8 in the longitudinal direction and a stretch ratio of 1.1 to 8 in the lateral direction.

13. A preform for the preparation of a stretched blow molded article formed from a polyester resin composition comprising a polyhydroxypolyether (a) and a polyalkylene terephthalate (b) composed of ethylene terephthalate units as main structural units, wherein said polyhydroxypolyether (a) is substantially linear and has the formula [I]:

$$-(OCH_2\underset{OH}{\underset{|}{CH}}CH_2O-R^1)_n- \quad [I]$$

in which $R^1$ is a divalent aromatic hydrocarbon group consisting essentially of a p-phenylene group, and n is a positive integer;
said polyhydroxypolyether (a) having an intrinsic viscosity of from 0.10 dl/g to less than 0.3 dl/g as measured in o-chlorophenol at 25°C and containing a nonionic organic halogen in an amount of not more than 0.2% by weight.

14. The perform as claimed in claim 13, wherein said polyhydroxypolyether has a glass transition temperature ranging from 30 to 150 °C.

15. The perform as claimed in claim 13, wherein said polyhydroxypolyether is contained in the polyester resin composition in an amount of 1 to 100 parts by weight based on 100 parts by weight of the polyalkylene terephthalate.

16. A stretched blow molded article formed from a polyester resin composition comprising a polyhydroxypolyether (a) and a polyalkylene terephthalate (b) composed of ethylene terephthalate units as main structural units, wherein said polyhydroxypolyether (a) is substantially linear and has the formula [I]:

$$-(OCH_2\underset{OH}{\underset{|}{CH}}CH_2O-R^1)_n- \quad [I]$$

in which $R^1$ is a divalent aromatic hydrocarbon group consisting essentially of a p-phenylene group, and n is a positive integer;
said polyhydroxypolyether (a) having an intrinsic viscosity of from 0.10 dl/g to less than 0.3 dl/g as measured in o-chlorophenol at 25°C and containing a nonionic organic halogen in an amount of not more than 0.2% by weight.

17. The stretched blow molded article as claimed in claim 16, wherein said polyhydroxypolyether has a glass transition temperature ranging from 30 to 150 °C.

18. The stretched blow molded article as claimed in claim 16, wherein said polyhydroxypolyether is contained in the polyester resin composition in an amount of 1 to 100 parts by weight based on 100 parts by weight of the polyalkylene terephthalate.

19. A polyester resin laminated molded article comprising (A) a polyester resin composition layer comprising a polyhydroxypolyether (a) and a polyalkylene terephthalate (b) composed of ethylene terephthalate units as main structural units and (B) a polyalkylene terephthalate layer composed of ethylene terephthalate units as main structural units, wherein said polyhydroxypolyether (a) is substantially linear and has the formula [I]:

$$-(OCH_2\underset{OH}{\underset{|}{CH}}CH_2O-R^1)_n- \quad [I]$$

in which $R^1$ is a divalent aromatic hydrocarbon group consisting essentially of a p-phenylene group, and n is a positive integer;
said polyhydroxypolyether (a) having an intrinsic viscosity of from 0.10 dl/g to less than 0.3 dl/g as measured in o-chlorophenol at 25°C and containing a nonionic organic halogen in an amount of not more

than 0.2% by weight.

20. The polyester resin laminated molded article as claimed in claim 19, wherein said polyhydroxypolyether has a glass transition temperature ranging from 30 to 150 °C.

21. The polyester resin laminated molded article as claimed in claim 19, wherein said polyester resin composition layer (A) comprising a polyhydroxypolyether (a) and a polyalkylene terephthalate (b) composed of ethylene terephthalate units as main structural units has a thickness of 4 to 350 µm, and said polyalkylene terephthalate layer (B) composed of ethylene terephthalate units as main structural units has a thickness of 8 to 600 µm.

22. A polyester resin stretched laminated molded article comprising (A) a polyester resin composition layer a polyhydroxypolyether (a) and a polyalkylene terephthalate (b) composed of ethylene terephthalate units as main structural unit and (B) a polyalkylene terephthalate layer composed of ethylene terephthalate units as main structural units, wherein said polyhydroxypolyether (a) is substantially linear and has the formula [I]:

$$-\!\!(OCH_2\underset{\displaystyle OH}{\underset{|}{C}H}CH_2O\text{-}R^1)_{\overline{n}}\qquad [I]$$

in which $R^1$ is a divalent aromatic hydrocarbon group consisting essentially of a p-phenylene group, and n is a positive integer;
said polyhydroxypolyether (a) having an intrinsic viscosity of from 0.10 dl/g to less than 0.3 dl/g as measured in o-chlorophenol at 25°C and containing a nonionic organic halogen in an amount of not more than 0.2% by weight.

23. The polyester resin laminated molded article as claimed in claim 22, wherein said polyhydroxypolyether has a glass transition temperature ranging from 30 to 150 °C.

24. The polyester resin stretched laminated molded article as claimed in claim 22, wherein said polyhydroxypolyether is contained in the polyester resin composition in an amount of 1 to 100 parts by weight based on 100 parts by weight of the polyalkylene terephthalate.

25. The polyester resin stretched laminated molded article as claimed in claim 22, wherein said polyester resin stretched laminated molded article is either a uniaxially stretched laminated molded article having a stretch ratio of 1.1 to 10 or a biaxially stretched laminated molded article having a stretch ratio of 1.1 to 8 in the longitudinal direction and a stretch ratio of 1.1 to 8 in the lateral direction.

26. A preform for the preparation of a polyester resin multilayer blow molded article comprising (A) a polyester resin composition layer comprising a polyhydroxypolyether (a) and a polyalkylene terephthalate (b) composed of ethylene terephthalate units as main structural unit and (B) a polyalkylene terephthalate layer composed of ethylene terephthalate units as main structural units, wherein said polyhydroxypolyether (a) is substantially linear and has the formula [I]:

$$-\!\!(OCH_2\underset{\displaystyle OH}{\underset{|}{C}H}CH_2O\text{-}R^1)_{\overline{n}}\qquad [I]$$

in which $R^1$ is a divalent aromatic hydrocarbon group consisting essentially of a p-phenylene group, and n is a positive integer;
said polyhydroxypolyether having an intrinsic viscosity of from 0.10 dl/g to less than 0.3 dl/g as measured in o-chlorophenol at 25°C and containing a nonionic organic halogen in an amount of not more than 0.2% by weight.

27. The preform as claimed in claim 26, wherein said polyhydroxypolyether has a glass transition temperature ranging from 30 to 150 °C.

28. The preform as claimed in claim 26, wherein said polyhydroxypolyether is contained in the polyester resin composition in an amount of 1 to 100 parts by weight based on 100 parts by weight of the polyalkylene terephthalate.

29. A polyester resin multilayer blow molded article comprising (A) a polyester resin composition layer comprising a polyhydroxypolyether (a) and a polyalkylene terephthalate (b) composed of ethylene terephthalate units as main structural unit and (B) a polyalkylene terephthalate layer composed of ethylene terephthalate units as main structural units, wherein said polyhydroxypolyether (a) is substantially linear and has the formula [I]:

$$-\!\!(OCH_2\underset{\displaystyle OH}{\underset{|}{C}H}CH_2O\text{-}R^1)_{\overline{n}}\qquad [I]$$

in which $R^1$ is a divalent aromatic hydrocarbon group consisting essentially of a p-phenylene group, and n is a positive integer;
said polyhydroxypolyether (a) having an intrinsic viscosity of from 0.10 dl/g to less than 0.3 dl/g as measured in o-chlorophenol at 25°C and containing a nonionic organic halogen in an amount of not more than 0.2% by weight.

30. The polyester resin multilayer blow molded article as claimed in claim 29, wherein said polyhydroxypolyether has a glass transition temperature ranging from 30 to 150 °C.

31. A polyhydroxypolyether which is substantially linear and has the formula (a):

$$Ar^1 \left( O-CH_2-\underset{OH}{CH}-CH_2-O-Ar \right)_n O-CH_2-\underset{OH}{CH}-CH_2-O-Ar^2 \quad (a)$$

in which $Ar^1$ and $Ar^2$ independently represent HO-Ar or a monovalent aromatic hydrocarbon group having 6-15 carbon atoms other than HO-Ar, Ar represents a p-phenylene group, and n is a positive integer;
said polyhydroxypolyether having an intrinsic viscosity [$\eta$] of 0.3 to 2 dl/g as measured in o-chlorophenol at 25 °C.

32. The polyhydroxypolyether as claimed in claim 31, wherein said polyhydroxypolyether has a glass transition temperature ranging from 40 to 80 °C.

33. A process for the preparation of a polyhydroxypolyether comprising reacting a substantially linear hydroxyether compound having the formula ($a^1$):

$$Aro^1 \left( O-CH_2-\underset{OH}{CH}-CH_2-O-Ar \right)_m O-CH_2-\underset{OH}{CH}-CH_2-O-Aro^2 \quad (a^1)$$

in which $Aro^1$ and $Aro^2$ independently represent HO-Ar or a glycidyl group, Ar represents a p-phenylene group, and m is a positive integer; with an aromatic monoalcohol having 6-15 carbon atoms in the presence of at least one compound selected from the group consisting of tertiary amine compounds, quaternary ammonium compounds, tertiary phosphine compounds and quaternary phosphonium compounds.

34. The process as claimed in claim 33, wherein said aromatic monoalcohol having 6-15 carbon atoms is an aromatic monoalcohol having a boiling point of not higher than 250 °C.

35. A gas barrier property-imparting agent comprising a polyhydroxypolyether which is substantially linear and has the formula (a):

$$Ar^1 \left( O-CH_2-\underset{OH}{CH}-CH_2-O-Ar \right)_n O-CH_2-\underset{OH}{CH}-CH_2-O-Ar^2 \quad (a)$$

in which $Ar^1$ and $Ar^2$ independently represent HO-Ar or a monovalent aromatic hydrocarbon group having 6-15 carbon atoms other than HO-Ar, Ar represents a p-phenylene group, and n is a positive integer;
said polyhydroxypolyether having an intrinsic viscosity [$\eta$] of 0.3 to 2 dl/g as measured in o-chlorophenol at 25 °C.

36. The gas barrier property-imparting agent as claimed in claim 35, wherein said polyhydroxypolyether has a glass transition temperature ranging from 40 to 80 °C.

37. The gas barrier property-imparting agent as claimed in claim 35, wherein said polyhydroxypolyether is used in an amount of 1 to 100 parts by weight based on 100 parts by weight of a resin to be imparted gas barrier properties.

38. A polyester resin composition containing a polyalkylene terephthalate composed of ethylene terephthalate units as main structural units and a polyhydroxypolyether, wherein said polyhydroxypolyether is substantially linear and has the formula [a]:

$$Ar^1 \left( O-CH_2-\underset{OH}{CH}-CH_2-O-Ar \right)_n O-CH_2-\underset{OH}{CH}-CH_2-O-Ar^2 \quad (a)$$

in which $Ar^1$ and $Ar^2$ independently represent HO-Ar or a monovalent aromatic hydrocarbon group having 6-15 carbon atoms other than HO-Ar, Ar represents a p-phenylene group, and n is a positive integer;
said polyhydroxypolyether having an intrinsic viscosity [$\eta$] of 0.3 to 2 dl/g as measured in o-chlorophenol at 25 °C.

39. The polyester resin composition as claimed in claim 38, wherein said polyhydroxypolyether has a glass transition temperature ranging from 40 to 80 °C.

40. The polyester resin composition as claimed in claim 38, wherein said polyhydroxypolyether is contained in the polyester resin composition in an amount of 1 to 500 parts by weight based on 100 parts by weight of the polyalkylene terephthalate.

41. A stretched molded article of a polyester resin composition containing a polyalkylene terephthalate composed of ethylene terephthalate units as main structural units and a polyhydroxypolyether, wherein said polyhydroxypolyether is substantially linear and has the formula (a):

$$Ar^1 \left( O-CH_2-\underset{OH}{CH}-CH_2-O-Ar \right)_n O-CH_2-\underset{OH}{CH}-CH_2-O-Ar^2 \quad (a)$$

in which $Ar^1$ and $Ar^2$ independently represent HO-Ar or a monovalent aromatic hydrocarbon group having 6-15 carbon atoms other than HO-Ar, Ar represents a p-phenylene group, and n is a positive integer;
said polyhydroxypolyether having an intrinsic viscosity [$\eta$] of 0.3 to 2 dl/g as measured in o-chlorophenol at 25 °C.

42. The stretched molded article as claimed in claim 41, wherein said polyhydroxypolyether has a glass

transition temperature ranging from 40 to 80 °C.

43. The stretched molded article as claimed in claim 41, wherein said polyhydroxypolyether is contained in the polyester resin composition in an amount of 1 to 500 parts by weight based on 100 parts by weight of the polyalkylene terephthalate.

44. The stretched molded article as claimed in claim 41, wherein said stretched molded article is either a uniaxially stretched molded article having a stretch ratio of 1.1 to 10 or a biaxially stretched molded article having a stretch ratio of 1.1 to 8 in the longitudinal direction and a stretch ratio of 1.1 to 8 in the lateral direction.

45. A preform for the preparation of a stretched blow molded article of a polyester resin composition containing a polyalkylene terephthalate composed of ethylene terephthalate units as main structural units and a polyhydroxypolyether, wherein said polyhydroxypolyether is substantially linear and has the formula (a):

$$Ar^1\text{-}(O\text{-}CH_2\text{-}\underset{OH}{CH}\text{-}CH_2\text{-}O\text{-}Ar)_n\text{-}O\text{-}CH_2\text{-}\underset{OH}{CH}\text{-}CH_2\text{-}O\text{-}Ar^2 \quad (a)$$

in which $Ar^1$ and $Ar^2$ independently represent HO-Ar or a monovalent aromatic hydrocarbon group having 6-15 carbon atoms other than HO-Ar, Ar represents a p-phenylene group, and n is a positive integer;
said polyhydroxypolyether having an intrinsic viscosity [$\eta$] of 0.3 to 2 dl/g as measured in o-chlorophenol at 25 °C.

46. The preform as claimed in claim 45, wherein said polyhydroxypolyether has a glass transition temperature ranging from 40 to 80 °C.

47. The preform as claimed in claim 41, wherein said polyhydroxypolyether is contained in the polyester resin composition in an amount of 1 to 500 parts by weight based on 100 parts by weight of the polyalkylene terephthalate.

48. A stretched blow molded article of a polyester resin composition containing a polyalkylene terephthalate composed of ethylene terephthalate units as main structural units and a polyhydroxypolyether, wherein said polyhydroxypolyether is substantially linear and has the formula (a);

$$Ar^1\text{-}(O\text{-}CH_2\text{-}\underset{OH}{CH}\text{-}CH_2\text{-}O\text{-}Ar)_n\text{-}O\text{-}CH_2\text{-}\underset{OH}{CH}\text{-}CH_2\text{-}O\text{-}Ar^2 \quad (a)$$

in which $Ar^1$ and $Ar^2$ independently represent HO-Ar or a monovalent aromatic hydrocarbon group having 6-15 carbon atoms other than HO-Ar, Ar represents a p-phenylene group, and n is a positive integer;
said polyhydroxypolyether having an intrinsic viscosity [$\eta$] of 0.3 to 2 dl/g as measured in o-chlorophenol at 25 °C.

49. The stretched blow molded article as claimed in claim 48, wherein said polyhydroxypolyether has a glass transition temperature ranging from 40 to 80 °C.

50. The stretched blow molded article as claimed in claim 48, wherein said polyhydroxypolyether is contained in the polyester resin composition in an amount of 1 to 500 parts by weight based on 100 parts by weight of the polyalkylene terephthalate.

51. A polyester resin laminated molded article composed of a polyhydroxypolyether layer or a layer of a polyester resin composition containing a polyalkylene terephthalate composed of ethylene terephthalate units as main structural units and a polyhydroxypolyether, and a polyalkylene terephthalate layer composed of ethylene terephthalate units as main structure units, wherein said polyhydroxypolyether is substantially linear and has the formula (a):

$$Ar^1\text{-}(O\text{-}CH_2\text{-}\underset{OH}{CH}\text{-}CH_2\text{-}O\text{-}Ar)_n\text{-}O\text{-}CH_2\text{-}\underset{OH}{CH}\text{-}CH_2\text{-}O\text{-}Ar^2 \quad (a)$$

in which $Ar^1$ and $Ar^2$ independently represent HO-Ar or a monovalent aromatic hydrocarbon group having 6-15 carbon atoms other than HO-Ar, Ar represents a p-phenylene group, and n is a positive integer;
said polyhydroxypolyether having an intrinsic viscosity [$\eta$] of 0.3 to 2 dl/g as measured in o-chlorophenol at 25 °C.

52. The polyester resin laminated molded article as claimed in claim 51, wherein said polyhydroxypolyether has a glass transition temperature ranging from 40 to 80 °C.

53. The polyester resin laminated molded article as claimed in claim 51, wherein said polyhydroxypolyether layer or said layer of a polyester resin composition containing a polyalkylene terephthalate composed of ethylene terephthalate units as main structural units and a polyhydroxypolyether has a thickness of 4 to 350$\mu$m, and said polyalkylene terephthalate layer composed of ethylene terephthalate units as main structural units has a thickness of 8 to 600 $\mu$m.

54. A polyester resin stretched laminated molded article composed of a polyhydroxypolyether layer or a layer of a polyester resin composition containing a polyalkylene terephthalate composed of ethylene terephthalate units as main structural units and a polyhydroxypolyether, and a polyalkylene terephthalate

layer composed of ethylene terephthalate units as main structural units, wherein said polyhydroxypolyether is substantially linear and has the formula (a):

$$Ar^1\{O-CH_2-\underset{OH}{CH}-CH_2-O-Ar\}_n-O-CH_2-\underset{OH}{CH}-CH_2-O-Ar^2 \quad (a)$$

in which $Ar^1$ and $Ar^2$ independently represent HO-Ar or a monovalent aromatic hydrocarbon group having 6-15 carbon atoms other than HO-Ar, Ar represents a p-phenylene group, and n is a positive integer;
said polyhydroxypolyether having an intrinsic viscosity [$\eta$] of 0.3 to 2 dl/g as measured in o-chlorophenol at 25 °C.

55. The polyester resin stretched laminated molded article as claimed in claim 54, wherein said polyhydroxypolyether has a glass transition temperature ranging from 40 to 80 °C.

56. The polyester resin stretched laminated molded article as claimed in claim 54, wherein said polyester resin stretched laminated molded article is either a uniaxially stretched laminated molded article having a stretch ratio of 1.1 to 10 or a biaxially stretched laminated molded article having a stretch ratio of 1.1 to 8 in the longitudinal direction and a stretch ratio of 1.1 to 8 in the lateral direction.

57. A perform for the preparation of a polyester resin multilayer blow molded article composed of a polyhydroxypolyether layer or a layer of a polyester resin composition containing a polyalkylene terephthalate composed of ethylene terephthalate units as main structural units and a polyhydroxypolyether, and a polyalkylene terephthalate layer composed of ethylene terephthalate units as main structural units, wherein said polyhydroxypolyether is substantially linear and has the formula (a):

$$Ar^1\{O-CH_2-\underset{OH}{CH}-CH_2-O-Ar\}_n-O-CH_2-\underset{OH}{CH}-CH_2-O-Ar^2 \quad (a)$$

in which $Ar^1$ and $Ar^2$ independently represent HO-Ar or a monovalent aromatic hydrocarbon group having 6-15 carbon atoms other than HO-Ar, Ar represents a p-phenylene group, and n is a positive integer;
said polyhydroxypolyether having an intrinsic viscosity [$\eta$] of 0.3 to 2 dl/g as measured in o-chlorophenol at 25 °C.

58. The preform as claimed in claim 57, wherein said polyhydroxypolyether has a glass transition temperature ranging from 40 to 80 °C.

59. A polyester resin multilayer blow molded article composed of a polyhydroxypolyether layer or a layer of a polyester resin composition containing a polyalkylene terephthalate composed of ethylene terephthalate units as main structural units and a polyhydroxypolyether, and a polyalkylene terephthalate layer composed of ethylene terephthalate units as main structural units, wherein said polyhydroxypolyether is substantially linear and has the formula (a);

$$Ar^1\{O-CH_2-\underset{OH}{CH}-CH_2-O-Ar\}_n-O-CH_2-\underset{OH}{CH}-CH_2-O-Ar^2 \quad (a)$$

in which $Ar^1$ and $Ar^2$ independently represent HO-Ar or a monovalent aromatic hydrocarbon group having 6-15 carbon atoms other than HO-Ar, Ar represents a p-phenylene group, and n is a positive integer;
said polyhydroxypolyether having an intrinsic viscosity [$\eta$] of 0.3 to 2 dl/g as measured in o-chlorophenol at 25 °C.

60. The polyester resin multilayer blow molded article as claimed in claim 59, wherein said polyhydroxypolyether has a glass transition temperature ranging from 40 to 80 °C.

61. A polyhydroxypolyether which is substantially linear and contains a structural unit having the formula (a-1):

$-O-CH_2-CH(OH)-CH_2-O-Ar^a-$ (a-1)

in which $Ar^a$ represents a p-phenylene group and an m-phenylene group, provided that the content of the structural unit having a p-phenylene group is higher than that of the structural unit having a m-phenylene group, and a structural unit having the formula (b-1):

$-O-CH_2-CH(OH)-CH_2-O-Ar^b-$ (b-1)

in which $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene;
the molar ratio between said structural unit (a-1) and said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, HO-$Ar^a$ and HO-$Ar^b$ wherein $Ar^a$ represents a p-phenylene group and/or a m-phenylene group, and $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene; and
said polyhydroxypolyether having an intrinsic viscosity [$\eta$] of 0.3 to 2 dl/g as measured in o-chlorophenol at

25°C.

62. The polyhydroxypolyether as claimed in claim 61, wherein said polyhydroxypolyether has a glass transition temperature ranging from 40 to 80 °C.

63. A process for the preparation of a polyhydroxypolyether comprising reacting, in the presence of at least one compound selected from the group consisting of tertiary amine compounds, quaternary ammonium compounds, tertiary phosphine compounds and quaternary phosphonium compounds, an aromatic monoalcohol having 6-15 carbon atoms with a substantially linear hydroxyether compound containing a structural unit having the formula (a-1):

$-O-CH_2-CH(OH)-CH_2-O-Ar^a-$ (a-1)

in which $Ar^a$ represents a p-phenylene group and an m-phenylene group, provided that the content of the structural unit having a p-phenylene group is higher than that of the structural unit having a m-phenylene group, and a structural unit having the formula (b-1):

$-O-CH_2-CH(OH)-CH_2-O-Ar^b-$ (b-1)

in which $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4 ,4′-ketodiphenylene and 4,4′-sulfodiphenylene;

the molar ratio between said structural unit (a-1) and said structural unit (b-1) being in the range of 50:50 to 95:5, both terminals $Aro^1$ and $Aro^2$ of a polymer composed of said structural units (a-1) and (b-1) being independently a group selected from the group consisting of a glycidyl group, $HO-Ar^a$ and $HO-Ar^b$ wherein $Ar^a$ represents a p-phenylene group and/or a m-phenylene group, and $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene.

64. The process as claimed in claim 63, wherein said aromatic monoalcohol having 6-15 carbon atoms is an aromatic monoalcohol having a boiling point of not higher than 250 °C.

65. A gas barrier property-imparting agent comprising a polyhydroxypolyether which is substantially linear and contains a structural unit having the formula (a-1):

$-O-CH_2-CH(OH)-CH_2-O-Ar^a-$ (a-1)

in which $Ar^a$ represents a p-phenylene group and an m-phenylene group, provided that the content of the structural unit having a p-phenylene group is higher than that of the structural unit having a m-phenylene group, and a structural unit having the formula (b-1):

$-O-CH_2-CH(OH)-CH_2-O-Ar^b-$ (b-1)

in which $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4 ,4′-ketodiphenylene and 4,4′-sulfodiphenylene;

the molar ratio between said structural unit (a-1) and said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, $HO-Ar^a$ and $HO-Ar^b$ wherein $Ar^a$ represents a p-phenylene group and/or a m-phenylene group, and $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene; and

said polyhydroxypolyether having an intrinsic viscosity [$\eta$] of 0.3 to 2 dl/g as measured in o-chlorophenol at 25°C.

66. The gas barrier property-imparting agent as claimed in claim 65, wherein said polyhydroxypolyether has a glass transition temperature ranging from 40 to 80 °C.

67. The gas barrier property-imparting agent as claimed in claim 65, wherein said polyhydroxypolyether is used in an amount of 1 to 500 parts by weight based on 100 parts by weight of a resin to be imparted gas barrier properties.

68. A polyester resin composition containing a polyalkylene terephthalate composed of ethylene terephthalate units as main structural units and a polyhydroxypolyether, wherein said polyhydroxypolyether is substantially linear and contains a structural unit having the formula (a-1):

$-O-CH_2-CH(OH)-CH_2-O-Ar^a-$ (a-1)

in which $Ar^a$ represents a p-phenylene group and an m-phenylene group, provided that the content of the structural unit having a p-phenylene group is higher than that of the structural unit having a m-phenylene group, and a structural unit having the formula (b-1):

$-O-CH_2-CH(OH)-CH_2-O-Ar^b-$ (b-1)

in which $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4

,4′-ketodiphenylene and 4,4′-sulfodiphenylene;
the molar ratio between said structural unit (a-1) and said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, HO-$Ar^a$ and HO-$Ar^b$ wherein $Ar^a$ represents a p-phenylene group and/or a m-phenylene group, and $Ar^b$ is at least one group selected from the group consisting of 2-phenyl-1,4-phenylene, 1,4-naphthylene, 1,5-naphthylene, 2,6- naphthylene, 2,7-naphthylene, 4,4′-diphenylene, 4,4′-oxydiphenylene, 4,4′-ketodiphenylene and 4,4′-sulfodiphenylene; and
said polyhydroxypolyether having an intrinsic viscosity [η] of 0.3 to 2 dl/g as measured in o-chlorophenol at 25°C.

69. The polyester resin composition as claimed in claim 68, wherein said polyhydroxypolyether has a glass transition temperature ranging from 40 to 80 °C.

70. The polyester resin composition as claimed in claim 68, wherein said polyhydroxypolyether is contained in the polyester resin composition in an amount of 1 to 500 parts by weight based on 100 parts by weight of the polyalkylene terephthalate.

71. A stretched molded article of a polyester resin composition containing a polyalkylene terephthalate composed of ethylene terephthalate units as main structural units and a polyhydroxypolyether, wherein said polyhydroxypolyether is substantially linear and contains a structural unit having the formula (a-1);
$-O-CH_2-CH(OH)-CH_2-O-Ar^a-$ (a-1)
in which $Ar^a$ represents a p-phenylene group and a m-phenylene group, provided that the content of the structural unit having a p-phenylene group is higher than that of the structural unit having a m-phenylene group, and a structural unit having the formula (b-1):
$-O-CH_2-CH(OH)-CH_2-O-Ar^b-$ (b-1)
in which $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4 ,4′-ketodiphenylene and 4,4′-sulfodiphenylene;
the molar ratio between said structural unit (a-1) and said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, HO-$Ar^a$ and HO-$Ar^b$ wherein $Ar^a$ represents a p-phenylene group and/or a m-phenylene group, and $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene; and
said polyhydroxypolyether having an intrinsic viscosity [η] of 0.3 to 2 dl/g as measured in o-chlorophenol at 25°C.

72. The stretched molded article as claimed in claim 71, wherein said polyhydroxypolyether has a glass transition temperature ranging from 40 to 80 °C.

73. The stretched molded article as claimed in claim 71, wherein said polyhydroxypolyether is contained in the polyester resin composition in an amount of 1 to 500 parts by weight based on 100 parts by weight of the polyalkylene terephthalate.

74. The stretched molded article as claimed in claim 71, wherein said stretched molded article is either a uniaxially stretched molded article having a stretch ratio of 1.1 to 10 or a biaxially stretched molded article having a stretch ratio of 1.1 to 8 in the longitudinal direction and a stretch ratio of 1.1 to 8 in the lateral direction.

75. A preform for the preparation of a stretched blow molded article of a polyester resin composition containing a polyalkylene terephthalate composed of ethylene terephthalate units as main structural units and a polyhydroxypolyether, wherein said polyhydroxypolyether is substantially linear and contains a structural unit having the formula (a-1):
$-O-CH_2-CH(OH)-CH_2-O-Ar^a-$ (a-1)
in which $Ar^a$ represents a p-phenylene group and an m-phenylene group, provided that the content of the structural unit having a p-phenylene group is higher than that of the structural unit having a m-phenylene group, and a structural unit having the formula (b-1):
$-O-CH_2-CH(OH)-CH_2-O-Ar^b-$ (b-1)
in which $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4 ,4′-ketodiphenylene and 4,4′-sulfodiphenylene;
the molar ratio between said structural unit (a-1) and said structural unit (b-1) being in the range of 50:50 to 95:5, both terminals $Ar^1$ and $Ar^2$ of a polymer composed of said structural units (a-1) and (b-1) being

independently a group selected from the group consisting of monovalent aromatic hydrocarbon groups having 6-15 carbon atoms, HO-$Ar^a$ and HO-$Ar^b$ wherein $Ar^a$ represents a p-phenylene group and/or a m-phenylene group, and $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene; and
said polyhydroxypolyether having an intrinsic viscosity [η] of 0.3 to 2dl/g as measured in o-chlorophenol at 25°C.

76. The preform as claimed in claim 75, wherein said polyhydroxypolyether has a glass transition temperature ranging from 40 to 80 °C.

77. The preform as claimed in claim 75, wherein said polyhydroxypolyether is contained in the polyester resin composition in an amount of 1 to 500 parts by weight based on 100 parts by weight of the polyalkylene terephthalate.

78. A stretched blow molded article of a polyester resin composition containing a polyalkylene terephthalate composed of ethylene terephthalate units as main structural units and a polyhydroxypolyether, wherein said polyhydroxypolyether is substantially linear and contains a structural unit having the formula (a-1):
$-O-CH_2-CH(OH)-CH_2-O-Ar^a-$ (a-1)
in which $Ar^a$ represents a p-phenylene group and a m-phenylene group, provided that the content of the structural unit having a p-phenylene group is higher than that of the structural unit having a m-phenylene group, and a structural unit having the formula (b-1):
$-O-CH_2-CH(OH)-CH_2-O-Ar^b-$ (b-1)
in which $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene;
the molar ratio between said structural unit (a-1) and said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, HO-$Ar^a$ and HO-$Ar^b$ wherein $Ar^a$ represents a p-phenylene group and/or a m-phenylene group, and $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene; and
said polyhydroxypolyether having an intrinsic viscosity [η] of 0.3 to 2 dl/g as measured in o- chlorophenol at 25°C.

79. The stretched blow molded article as claimed in claim 78, wherein said polyhydroxypolyether has a glass transition temperature ranging from 40 to 80 °C.

80. The stretched blow molded article as claimed in claim 78, wherein said polyhydroxypolyether is contained in the polyester resin composition in an amount of 1 to 500 parts by weight based on 100 parts by weight of the polyalkylene terephthalate.

81. A polyester resin laminated molded article consisting of polyhydroxypolyether layer or a layer of a polyester resin composition containing a polyalkylene terephthalate composed of ethylene terephthalate units as main structural units and a polyhydroxypolyether, and a layer of a polyalkylene terephthalate composed of ethylene terephthalate units as main structural units, wherein said polyhydroxypolyether is substantially linear and contains a structural unit having the formula (a-1)
$-O-CH_2-CH(OH)-CH_2-O-Ar^a-$ (a-1)
in which $Ar^a$ represents a p-phenylene group and a m-phenylene group, provided that the content of the structural unit having a p-phenylene group is higher than that of the structural unit having a m-phenylene group, and a structural unit having the formula (b-1):
$-O-CH_2-CH(OH)-CH_2-O-Ar^b-$ (b-1)
in which $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene;
the molar ratio between said structural unit (a-1) and said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, HO-$Ar^a$ and HO-$Ar^b$ wherein $Ar^a$ represents a p-phenylene group and/or a m-phenylene group, and $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene; and

said polyhydroxypolyether having an intrinsic viscosity [η] of 0.3 to 2 dl/g as measured in o-chlorophenol at 25°C.

82. The polyester resin laminated molded article as claimed in claim 81, wherein said polyhydroxypolyether has a glass transition temperature ranging from 40 to 80 °C.

83. The polyester resin laminated molded article as claimed in claim 81, wherein said polyhydroxypolyether layer or said layer of a polyester resin composition containing a polyalkylene terephthalate composed of ethylene terephthalate units as main structural units and a polyhydroxypolyether has a thickness of 4 to 350µm, and said layer of a polyalkylene terephthalate composed of ethylene terephthalate units as main structural units has a thickness of 8 to 600 µm.

84. A polyester resin stretched laminated molded article consisting of polyhydroxypolyether layer or a layer of a polyester resin composition containing a polyalkylene terephthalate composed of ethylene terephthalate units as main structural units and a polyhydroxypolyether, and a layer of a polyalkylene terephthalate composed of ethylene terephthalate units as main structural units, wherein said polyhydroxypolyether is substantially linear and contains a structural unit having the formula (a-1):

$-O-CH_2-CH(OH)-CH_2-O-Ar^a-$ (a-1)

in which Ara represents a p-phenylene group and a m-phenylene group, provided that the content of the structural unit having a p-phenylene group is higher than that of the structural unit having a m-phenylene group, and a structural unit having the formula (b-1):

$-O-CH_2-CH(OH)-CH_2-O-Ar^b-$ (b-1)

in which $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene;

the molar ratio between said structural unit (a-1) and said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, $HO-Ar^a$ and $HO-Ar^b$ wherein $Ar^a$ represents a p-phenylene group and/or a m-phenylene group, and $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′- sulfodiphenylene; and

said polyhydroxypolyether having an intrinsic viscosity [η] of 0.3 to 2 dl/g as measured in o-chlorophenol at 25°C.

85. The polyester resin stretched laminated molded article as claimed in claim 84, wherein said polyhydroxypolyether has a glass transition temperature ranging from 40 to 80 °C.

86. The polyester resin stretched laminated molded article as claimed in claim 84, wherein said polyester resin stretched laminated molded article is either a uniaxially stretched laminated molded article having a stretch ratio of 1.1 to 10 or a biaxially stretched laminated molded article having a stretch ratio of 1.1 to 8 in the longitudinal direction and a stretch ratio of 1.1 to 8 in the lateral direction.

87. A preform for the preparation of a polyester resin multilayer blow molded article composed of a polyhydroxypolyether layer or a layer of a polyester resin composition containing a polyalkylene terephthalate composed of ethylene terephthalate units as main structural units and a polyhydroxypolyether, and a layer of a polyalkylene terephthalate composed of ethylene terephthalate units as main structural units, wherein said polyhydroxypolyether is substantially linear and contains a structural unit having the formula (a-1):

$-O-CH_2-CH(OH)-CH_2-O-Ar^a-$ (a-1)

in which $Ar^a$ represents a p-phenylene group and an m-phenylene group, provided that the content of the structural unit having a p-phenylene group is higher than that of the structural unit having a m-phenylene group, and a structural unit having the formula (b-1):

$-O-CH_2-CH(OH)-CH_2-O-Ar^b-$ (b-1)

in which $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene;

the molar ratio between said structural unit (a-1) and said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, $HO-Ar^a$ and $HO-Ar^b$ wherein $Ar^a$ represents a p-phenylene group and/or a m-phenylene group, and $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene; and

said polyhydroxypolyether having an intrinsic viscosity [η] of 0.3 to 2 dl/g as measured in o-chlorophenol at 25°C.

88. The preform as claimed in claim 87, wherein said polyhydroxypolyether has a glass transition temperature ranging from 40 to 80 °C.

89. A polyester resin multilayer blow molded article composed of a polyhydroxypolyether layer or a layer of a polyester resin composition containing a polyalkylene terephthalate composed of ethylene terephthalate units as main structural units and a polyhydroxypolyether, and a layer of a polyalkylene terephthalate composed of ethylene terephthalate units as main structural units, wherein said polyhydroxypolyether is substantially linear and contains a structural unit having the formula (a-1):

$-O-CH_2-CH(OH)-CH_2-O-Ar^a-$ (a-1)

in which $Ar^a$ represents a p-phenylene group and a m-phenylene group, provided that the content of the structural unit having a p-phenylene group is higher than that of the structural unit having a m-phenylene group, and a structural unit having the formula (b-1):

$-O-CH_2-CH(OH)-CH_2-O-Ar^b-$ (b-1)

in which $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene;

the molar ratio between said structural unit (a-1) and said structural unit (b-1) being in the range of 50:50 to 95:5, both terminals $Ar^1$ and $Ar^2$ of a polymer composed of said structural units (a-1) and (b-1) being independently a group selected from the group consisting of monovalent aromatic hydrocarbon groups having 6-15 carbon atoms, $HO-Ar^a$ and $HO-Ar^b$ wherein $Ar^a$ represents a p-phenylene group and/or a m-phenylene group, and $Ar^b$ is at least one group selected from the group consisting of 2-phenyl-1,4-phenylene, 1,4-naphthylene, 1,5-naphthylene, 2,6-naphthylene, 2,7-naphthylene, 4,4′-diphenylene, 4,4′-oxydiphenylene, 4,4′-ketodiphenylene and 4,4′-sulfodiphenylene; and

said polyhydroxypolyether having an intrinsic viscosity [η] of 0.3 to 2 dl/g as measured in o-chlorophenol at 25°C.

90. The polyester resin multilayer blow molded article as claimed in claim 89, wherein said polyhydroxypolyether has a glass transition temperature ranging from 40 to 80 °C.

# INTERNATIONAL SEARCH REPORT

International Application No PCT/JP88/01019

**I. CLASSIFICATION OF SUBJECT MATTER** (if several classification symbols apply, indicate all) [6]

According to International Patent Classification (IPC) or to both National Classification and IPC

Int. $Cl^4$ C08G65/28, 65/38, C08L71/00, B29C55/00, B32B27/00

**II. FIELDS SEARCHED**

Minimum Documentation Searched [7]

| Classification System | Classification Symbols |
|---|---|
| IPC | C08G65/28, 65/38, C08L71/00, B29C55/00, B32B27/00 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | US, A, 3,560,605 (Glanzstoff AG) 2 February 1971 (02. 02. 71) & JP, B1, 46-10671 | 1-2, 6-30, 61-64, 68-90 |
| A | US, A, 3,560,605 (Glanzstoff AG) 2 February 1971 (02. 02. 71) & JP, B1, 46-10671 | 3-5, 31-60, 65-67 |
| A | US, A, 4,087,479 (Nippon Ester Co.) 2 May 1978 (02. 05. 78) & JP, A, 52-27436 | 1-90 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| December 16, 1988 (16. 12. 88) | January 9, 1989 (09. 01. 89) |
| **International Searching Authority** | **Signature of Authorized Officer** |
| Japanese Patent Office | |